# EUROPEAN PATENT SPECIFICATION

(11) **EP 3 823 127 B1**
(45) Date of publication and mention of the grant of the patent: **29.05.2024**
(21) Application number: 20206916.7
(22) Date of filing: 11.11.2020
(51) Int. Cl.: H02J 3/38, H02S 40/30

(54) **SYSTEMS AND METHODS TO INCREASE THE RELIABILITY AND THE SERVICE LIFE TIME OF PHOTOVOLTAIC (PV) MODULES**
SYSTEME UND VERFAHREN ZUR ERHÖHUNG DER ZUVERLÄSSIGKEIT UND LEBENSDAUER VON FOTOVOLTAIKMODULEN
SYSTÈMES ET PROCÉDÉS POUR AUGMENTER LA FIABILITÉ ET LA DURÉE DE VIE DE MODULES PHOTOVOLTAÏQUE (PV)

(30) Priority: 13.11.2019 US 201916681884
(43) Date of publication of application: 19.05.2021
(73) Proprietor: Solaredge Technologies Ltd., 4673335 Herzeliya (IL)
(72) Inventor: YOSCOVICH, Ilan, 4673335 Herzeliya (IL); HAR-SHAI, Liron, 4673335 Herzeliya (IL); GROSSBERG, Amir, 4673335 Herzeliya (IL); ATIAS, Matan, 4673335 Herzeliya (IL); ZMOOD, Daniel, 4673335 Herzeliya (IL); AVRAHAM, David, 4673335 Herzeliya (IL)
(74) Representative: V.O.

(56) References cited:
- CN-A- 104 242 811
- CN-A- 104 467 018
- CN-U- 204 131 141

## Description

### BACKGROUND

A possible way of reducing the costs of photovoltaic systems is to increase the reliability and the service lifetime of photovoltaic (PV) modules. A PV module failure may be caused by an effect that degenerates the module power that may or may not be reversed by normal operation and/or creates a safety issue. The underperformance of silicon wafer-based PV systems may be due to an effect termed "polarization" where n-type cells over time developed voltage induced power degeneration at a positive polarity from cells to ground. Conversely, several different module types with p-type cells may degenerate in negative polarity from cells to ground. Power losses in PV modules may be more pronounced the higher the voltage is. In crystalline silicon wafer-based PV modules, a reversible polarization effect may be applied for p-type and n-type cells, at negative and positive voltages, respectively.

Documents CN 104 467 018 A, CN 104 242 811 A and CN 204 131 141 U disclose relevant prior art.

### SUMMARY

The following summary is a short summary of some of the inventive concepts for illustrative purposes only and is not intended to limit or constrain the features and examples in the detailed description. One skilled in the art will recognize other novel combinations and features from the detailed description.

A requirement of a power system may be to ensure an efficient delivery of power to a load. To enable the efficient delivery, monitoring of the power in terms of sensed voltages, currents and impedance by sensors of interconnected components of the power system may be conveyed to a controller for an analysis. The result of the analysis may be to send control signals responsive to the analysis to the interconnected components of the power system. The interconnected components may include sources of direct current (DC) power such as photovoltaic (PV) generators, wind power turbines, DC generators and/or batteries. DC to DC converters may be connected to the DC sources and the outputs of the DC to DC converters may be connected together to provide multiple strings which may be connected across a load. The load may be a DC to alternating current (AC) inverter which has an output which may be connected to a utility grid or a localized grid which may be separate to the utility grid.

The control signals as a result of the analysis may ensure that the interconnected components of the power system perform in concert to ensure efficient delivery of power to a load for example. The conveying and monitoring of the applied control signals may provide a dynamic way of providing efficient delivery of power to a load by use of control methods (e.g., adaptive and/or robust control methods). The use of control methods (e.g., adaptive and/or robust control methods) may be included in a power system which may include a source of direct current (DC) voltage supplied across a first output terminal and a second output terminal. A DC to AC inverter may include a first input terminal and a second input terminal. The first input terminal and the second input terminal may be connectable to the first output terminal and the second output terminal respectively. The DC to AC inverter may further include a third input terminal. The system may include a converter adaptable to convert a source of power on a third input terminal and a fourth input terminal to a DC output voltage on a third output terminal. The third input terminal and/or the fourth input terminal may be connectable to a ground. The third output terminal may be connectable to the first input terminal and/or the second input terminal. The voltage of the first input terminal and/or the second input terminal may be configurable and/or controllable to be substantially above or below the potential of the ground. The third output terminal may be connectable to the third input terminal. The source of power may be from at least one of a DC voltage and an AC voltage. The source of DC voltage may include a DC to DC converter with an output connected to the first output terminal and the second output terminal and a photovoltaic panel may connect to the input of the DC to DC converter.

A method according to the invention is set out in independent claim 1.

A device according to the invention is set out in independent claim 9.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures. In the drawings, like numerals reference similar elements.
**Fig. 1A** illustrates a block diagram of a power system, according to illustrative aspects of the disclosure.
**Fig. 1B** illustrates a block diagram of a power system, according to illustrative aspects of the disclosure.
**Fig. 1C** illustrates a block diagram of a power system, according to illustrative aspects of the disclosure.
**Fig. 1D** illustrates a block diagram of a power system, according to illustrative aspects of the disclosure.
**Fig. 1E** illustrates circuitry which may be found in a power device such as power devices shown in **Fig. 1A**, according to illustrative aspects of the disclosure.
**Fig. 1F** illustrates a block diagram of a power system, according to illustrative aspects of the disclosure.
**Fig. 2A** shows a block diagram of further details of a controller, according to illustrative aspects of the disclosure.
**Fig. 2B** shows a flowchart of a method, according to illustrative aspects of the disclosure.
**Fig. 3A** shows a power system, according to illustrative aspects of the disclosure.
**Fig. 3B** shows a power system, according to illustrative aspects of the disclosure.
**Fig. 4A** shows a power system, according to illustrative aspects of the disclosure.
**Fig. 4B** shows a power system, according to illustrative aspects of the disclosure.
**Fig. 5** shows a power system, according to illustrative aspects of the disclosure.
**Fig. 6A** shows a flowchart of a method, according to illustrative aspects of the disclosure.
**Fig. 6B** shows a flowchart of a method, according to illustrative aspects of the disclosure.
**Fig. 7** shows a voltage-current graph, according to illustrative aspects of the disclosure.
**Fig. 8** shows a power system, according to illustrative aspects of the disclosure.
**Fig. 9A** shows a power system, according to illustrative aspects of the disclosure.
**Fig. 9B** shows a power system, according to illustrative aspects of the disclosure.
**Fig. 9C** shows a power system, according to illustrative aspects of the disclosure.
**Fig. 10A** shows a power system, according to illustrative aspects of the disclosure.
**Fig. 10B** shows a power system, according to illustrative aspects of the disclosure.
**Fig. 10C** shows a power system, according to illustrative aspects of the disclosure.
**Fig. 11** shows a power system, according to illustrative aspects of the disclosure.
**Fig. 12** shows a flowchart of a method, according to illustrative aspects of the disclosure.
**Fig. 13A** shows a power system, according to illustrative aspects of the disclosure.
**Fig. 13B** shows a power system, according to illustrative aspects of the disclosure.
**Fig. 14** shows a power system, according to illustrative aspects of the disclosure.
**Fig. 15** shows a flowchart of a method, according to illustrative aspects of the disclosure.
**Fig. 16** shows a control loop structure, according to illustrative aspects of the disclosure.

### DETAILED DESCRIPTION

In the following description of various illustrative features, reference is made to the accompanying drawings, which form a part hereof, and in which is shown, by way of illustration, various features in which aspects of the disclosure may be practiced. It is to be understood that other features may be utilized and structural and functional modifications may be made, without departing from the scope of the present disclosure.

By way of introduction, features may be directed to system and methods in an interconnected power system to enable the voltage applied to terminals of an inverter are no longer floating voltages but may instead be established and maintained to be above the potential of a ground and/or earth potential.

The term "multiple" as used here in the detailed description indicates the property of having or involving several parts, elements, or members. The claim term "a plurality of" as used herein in the claims section finds support in the description with use of the term "multiple" and/or other plural forms. Other plural forms may include for example regular nouns that form their plurals by adding either the letter 's' or 'es' so that the plural of converter is converters or the plural of switch is switches for example.

The terms, "substantially", and, "about", used herein include variations that are equivalent for an intended purpose or function (e.g., within a permissible variation range). Certain ranges are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

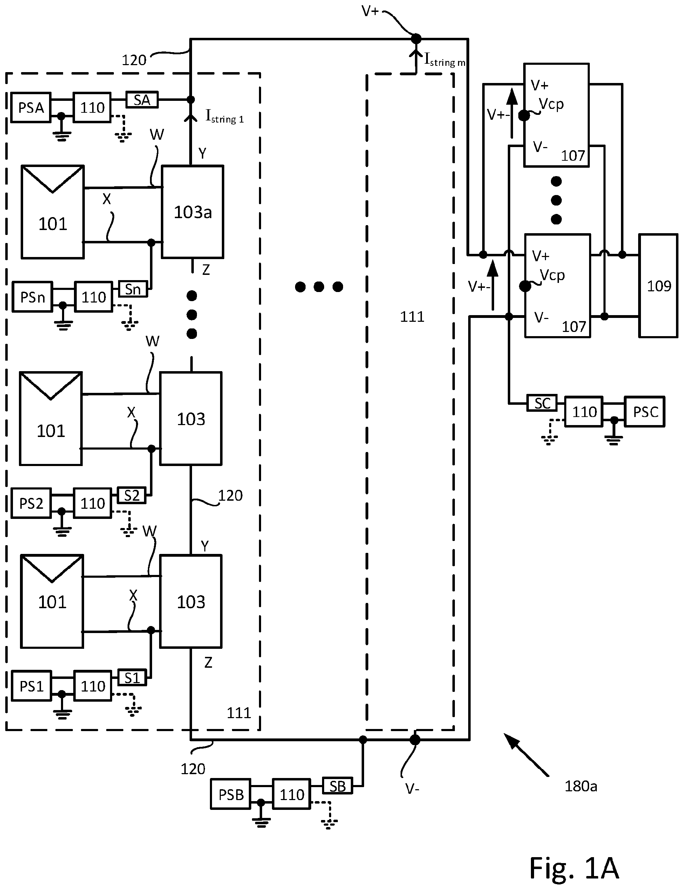

Reference is now made to **Fig. 1A**, which illustrates a power system **180a** and details of wiring configurations **111** and their connections to system power device **107**, according to illustrative aspects of the disclosure. System power device **107** may be a direct current (DC) to alternating current (AC) inverter and load **109** may be a utility grid, a home electrical system or other load such as a single phase and/or three phase AC motor for example. System power devices **107** and system power devices described later may be, for example, a single phase and/or three phase DC to AC converter (also known as an inverter), a DC combiner box, and/or a monitoring, communication and/or control device. Multiple system power devices **107** may be connected in parallel to each other such that the inputs to system power devices **107** are connected in parallel and the outputs of system power devices **107** are also connected in parallel. According to some features, the inputs to system power devices **107** may be connected in parallel, but the outputs of system power devices **107** may be connected to individual, unconnected loads. According to some features, the outputs of system power devices **107** may be connected in parallel, but the inputs of power devices **107** may be connected to individual, unconnected power sources.

System power devices **107** may have an input at terminals designated as terminals **V+** and **V-** and terminal **V_{CP}**. System power device **107** may include connection terminal **V_{CP}** which may optionally connect to another connection terminal **V_{CP}** of another system power device **107.** According to some features, terminal **V_{CP}** may be a terminal internal to system power device **107** and not accessible for direct electrical connection to an external device (e.g., a different system power device **107**).

Converter **110** may be connected to power supply **PSC** and may provide a voltage to a terminal of system power device **107.** In **Fig. 1A**, an output of converter **110** is shown connected to DC terminal **V-** of system power device **107.** According to some features, the output may optionally connect to DC terminal **V+** of system power device **107** and/or connection terminal **V_{CP}**. An input to converter **110** may be from power supply **PSC,** where one of the input connections to converter **110** is connected to ground and/or earth. Power supply **PSC** may provide a source of DC power to be converted by converter **110.** The source of DC power may be provided from a power source **101** (e.g., a PV generator) connected to power device **103/103a**, from a power device **103/103a**, from the string of series connected power devices **103/103a** and/or from an auxiliary source of DC power which may be separate from the DC power of power system **180a** (e.g. from a storage device such as a battery). The source of DC power may be provided from a conversion of AC power provided from the output of system power device **107**, an AC grid supply which may or may not be connected to system power device **107**, and/or from an auxiliary source of AC power which may be separate from the AC power of power system **180a.** According to some features, **PSC** may be an AC power source (e.g., a flywheel storage device or a wind turbine) and converter **110** may be an AC-to-DC converter.

Using power supply **PSA** as an example which may also apply to the other power supplies **PS1-PSn**, **PSB**, **PSC** and their respective converters **110**, converter **110** may have a switch **SA.** Switch **SA** may be configurable to connect or disconnect the output of converter **110** from terminals **Y**, **V+.** Similarly, switches **S1-Sn** may be configurable to connect or disconnect the output of respective converters **110** from terminals **X**, and switches **SB/SC** may be configurable to connect or disconnect the output of respective converters **110** from terminals **Z**, **V-.** In the drawings, a ground is shown (as a solid line) with a connection to the point where one of the terminals of power supplies **PS1-PSn**, **PSA**, **PSB**, **PSC** connects to an input terminal of respective converter **110.** Alternatively, a ground (in dotted line) may connect to one of the output terminals of respective converter **110**, and power supplies **PS1-PSn**, **PSA**, **PSB**, **PSC** connected to the input of converters **110** may be left without a direct connection to ground. In general, switches **S1-Sn**, **SA**, **SB** and **SC** may be connected separately to their respective converters **110** or may be an integrated/internal part of respective converters **110.** For descriptions and drawings that follow, switches on the outputs of converters **110** are not explicitly shown, but may or may not be included on the output of converters **110.** Similarly, in the descriptions that follow, ground connections on the outputs of converters **110** (not shown in the descriptions and diagrams that follow) may be used instead of connections to the point where one of the terminals of power supplies **PS1-PSn**, **PSA**, **PSB**, **PSC** connects to an input terminal of a respective converter **110.**

Multiple wiring configurations **111** are shown connected in parallel at terminals **V+** and **V-** which connect to the input of system power device **107** to provide voltage input **V+-**to the input of system power device **107.** The output of system power device **107** may connect to load **109.** Each wiring configuration **111** may include one or more power sources **101** which may be connected to a respective power device **103** and/or power device **103a** at terminals **W**, **X.** The outputs of power devices **103/103a** at terminals **Y**, **Z** may be connected together to form a serial string which connects between terminals **V+** and **V-.** As such, for '**m**' strings, the '**m**' strings may provide respective currents **I_{string 1} - I _{string m}** into power device **107** and voltage **V+-** across input terminals of power device **107.** Connections between power devices **103/103a** and strings of power device **103/103a** devices connected to system power devices **107** may be by use of power lines **120.**

Converters **110** are shown connected to system power device **107** and may also be connected to power devices **103/103a.** Converter **110** may be an integrated part of system power devices **107**/power devices **103/103a** and/or retrofitted to system power devices **107**/power devices **103/103a.** Multiple converters **110** within wiring configuration **111** are shown where for each converter **110**, a number of **'n'** power supplies **PS1-PSn** are connected to the input of each respective converter **110**, where one of the inputs to each converter **110** may be connected ground and/or earth. The output of each converter **110** with respective power supplies **PS1-PSn** may be connected to terminal **X** of power devices **103a/ 103.** Alternatively, the output of each converter **110** with respective power supplies **PS1-PSn** may be connected to terminal **W** of power devices **103a/ 103.** Power supply **PSA** connected to converter **110** has the output of converter **110** connected to terminal **Y** of power device **103a** but may also connect to terminal **Z** of power device **103a.** In a similar manner, a number of power supplies, similar to power supply **PSA**, with respective connections to converters **110**, may have respective outputs of converters **110** which connect to terminal **Y** and/or **Z** of remaining power devices **103** in wiring configurations **111.** According to some features described below, converter **110** may be a DC to DC converter such as a Buck, Boost, Buck/Boost, Buck+Boost, Cuk, Flyback, single-ended primary-inductor converter (SEPIC) and/or forward converter, switched auto-transformer or a charge pump. In other descriptions below converters **110** may be AC to DC converters such as uncontrolled diode rectifier circuits, phase-controlled rectifiers and/or switched mode power supply (SMPS).

Power supplies **PS1-PSn, PSA** may provide a source of DC power to be converted by converters **110.** The source of DC power may be provided from a power source **101** connected to power device **103/103a**, from a power device **103/103a**, from the string of series connected power devices **103/103a** and/or from an auxiliary source of DC power which may be separate from the DC power of power system **180a.** The source of DC power may be provided from a conversion of AC power provided from the output of system power device **107**, an AC grid supply which may or may not be connected to system power device **107**, and/or from an auxiliary source of AC power which may be separate from the AC power of power system **180a.** Features and operation of converters **110** are described in greater detail below in the descriptions which follow.

According to some features, one or more wiring configurations **111** might not include power devices **103a** or **103.** For example, a wiring configuration **111** may include multiple power sources **101** directly connected in series or in parallel. For example, a wiring configuration **111** may have ten, twenty or thirty serially-connected photovoltaic panels. According to some features, a wiring configuration **111** may include a first group of one or more directly connected power sources **101**, with a second group of one or more power sources **101** connected via power devices **103a** or **103** connected to the first group. This arrangement may be useful in power installations where some power sources **101** may be susceptible to factors which reduce power generation (e.g. PV generators which are occasionally shaded by shade, wind turbines which occasionally suffer from a reduction in wind) and where other power sources **101** are less susceptible to power-reducing factors.

Whereas power supplies **PS1-PSn**, **PSA** and respective converters **110** may be included in a wiring configuration **111,** it may also be possible to connect a power supply and a corresponding converter to an overall parallel connection of wiring configurations **111.** An example of the connection to the overall parallel connection may be power supply **PSB** and its respective converter **110** output is shown connected to terminal **Z/V-** via switch **SB.** In a similar way, the connection to the overall parallel connection may be power supply **PSA** and a corresponding converter **110** may be connected to terminal **Y/V+** via switch **SA.** A power supply and corresponding converter may be electrically terminated in a junction box and located in proximity to power sources **101**/ power modules **103/103a**, at some point in the wiring of power cables **120** between wiring configurations **111** and system power devices **107**, and/or at power devices **107** for example.

As shown in **Fig. 1A**, the power supplies **PS1-PSn**, **PSA**, and **PSC** connected via a converter **110** to a terminal (e.g. any of terminals **X**, terminal **V-**, or terminal **V+**) in wiring configuration **111** may ensure that the voltage at each terminal is maintained at a desirable voltage point with respect to the ground potential, or ensure voltages **V+** and **V-** applied to system power device **107** to be symmetrical at terminals **V+** and **V-**of system power device **107** with respect to terminal **Vcp** which may also be connected to earth potential for example. With respect to **Fig. 1A** and other figures which follow, multiple power supplies **PS1-PSn, PSA, PSB, PSC** and respective converters **110**/ switches **S1-Sn**, **SA**, **SB**, **SC** are shown to illustrate where use of one or more power supplies and converters **110** may be connected to establish that the voltage at each terminal **V+**, **V-** is maintained at a desirable voltage point with respect to the ground potential, or to ensure that voltages applied to terminals **V+** and **V-** of system power device **107** are symmetrical at terminals **V+** and **V-.**

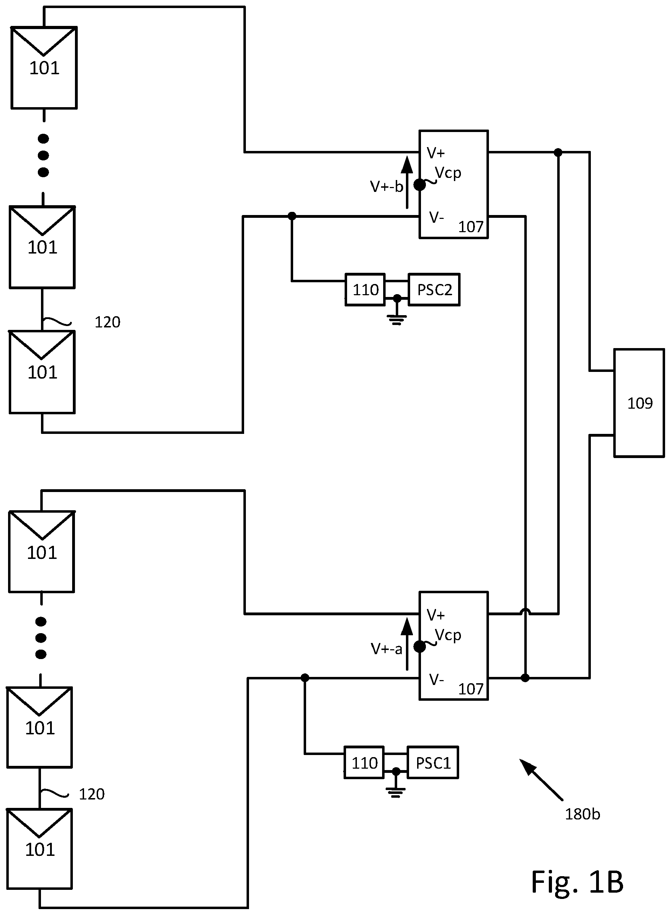

Reference is now made to **Fig. 1B**, which illustrates a power system **180b,** according to illustrative aspects of the disclosure. Two or more strings of serially connected power sources **101** may be connected across the respective inputs of system power devices **107** as DC voltages **V+-a** and **V+-b.** Power lines **120** connect power sources **101** together in series and the string formed thereby to the input of a system power device **107.** The outputs of system power devices **107** may be connected in parallel and to load **109.** Power supplies **PSC1/PSC2** may provide a respective DC input to respective converters **110.** Features included and described in further detail in the descriptions of converters **110** herein may allow both power supplies **PSC1/PSC2** via respective converters **110** to be connected to respective system power devices **107** or just one of power supplies **PSC1/PSC2** to be connected to a system power device **107.** Connection of an output of converter **110** may be to either terminal (**V+**, **V-**) of system power device **107.** One of the terminals of power supplies **PSC1/PSC2** may be referenced to a desirable voltage point with respect to ground and/or a ground potential as shown.

For example, as shown in **Fig. 1B**, a first string of serially-connected power sources **101** may be connected to the input of a first system power device **107**, and a second string of serially-connected power sources **101** may be connected to the input of a second system power device **107.** The first and second system power devices might not be connected at input terminals and may be (as shown in **Fig. 1B**) connected in parallel at the output side of the system power devices **107.** According to some features, power sources **PSC1** and **PSC2** and corresponding converters **110** may both be featured, for example, where power sources **PSC1** and **PSC2** and corresponding converters **110** are integrated in system power devices **107.** According to some features (e.g., where a power source **PSC1/PSC2** and a corresponding converter **110** are retrofit to a power system), a single power source and converter may be connected to the first system power device **107**, and compensation voltage output by converter **110** may propagate to the second system power device **107** due to the parallel-output-connection of the first and second system power devices **107.**

A control feature of power system **180b** may be to establish and maintain the voltage applied to a terminal **V-** to be above the potential of the ground connection provided by a converter **110** or **to** establish and maintain the voltage applied to terminal **V-** to be below the potential of the ground connection provided by converter **110** if the polarity of the input to converter **110** from the power supply is reversed for example. Yet further, the control feature may include the feature to ensure voltage **V+-** applied to system power device **107** to be symmetrical at terminals **V+** and **V-** of system power device **107.** In other words, an equal amount of positive DC voltage and negative DC voltage may be applied on respective terminals **V+** and **V-** of system power device **107** to maintain a symmetric string voltage across system power device **107.**

Power supplies **PSC1/PSC2** may provide sources of DC power to be converted by respective converters **110.** The source of DC power may be provided from a power source **101** connected to power device **103/103a**, from a power device **103/103a**, from the string of series connected power devices **103/103a** and/or from an auxiliary source of DC power which may be separate from the DC power of power system **180b** (e.g. from a storage device such as a battery). The source of DC power may be provided from a conversion of AC power provided from the output of system power device **107**, an AC grid supply which may or may not be connected to system power device **107**, and/or from an auxiliary source of AC power which may be separate from the AC power of power system **180b.** According to some features, power supplies **PSC1/PSC2** may be AC power sources (e.g., a flywheel storage device or a wind turbine) and converters **110** may be AC-to-DC converters.

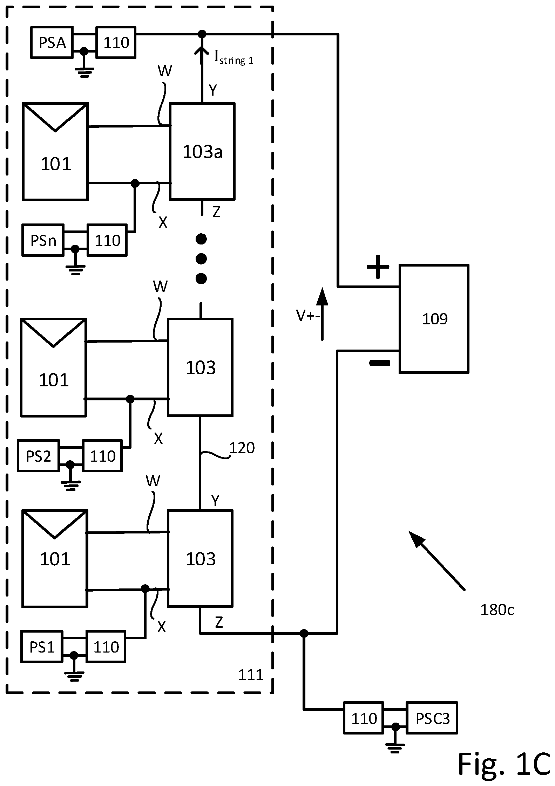

Reference is now made to **Fig. 1C**, which illustrates a power system **180c**, according to illustrative aspects of the disclosure. Power system **180c** may be a DC-only system where the DC output of wiring configuration **111**, described above with respect to **Fig. 1A**, is connected to a DC load **109.** Even though one wiring configuration **111** is shown in **Fig. 1C**, it should be understood that multiple wiring configurations **111** may be connected together in various series/parallel and/or parallel interconnections that may be applied to DC load **109.** Alternatively, or in addition, power supply **PSC3** may be connected to the negative (-) terminal of DC load **109** and/or the positive (+) terminal of DC load **109.** One or more power supplies **PSn** located/ connected in wiring configuration **111** (e.g. at inputs to power devices **103** and/or at intermediate points within wiring configuration **111**) may enable voltage **V+-** applied to DC load **109** to be symmetrical at terminals + and - of DC load **109.** In other words, an equal amount of positive DC voltage and negative DC voltage may be applied on respective terminals + and - of DC load **109** to maintain a symmetric string voltage across load **109.** Load **109** may be a DC load such as a DC motor, a battery and/or be the input of a DC to DC converter or the input of a DC to AC inverter. According to some features, one or more power supplies **PSn** located/ connected in the middle of wiring configuration **111** (e.g. at inputs to power devices **103** and/or at intermediate points within wiring configuration **111**) may maintain all voltages in wiring configuration **111** at a non-negative or non-positive voltage with respect to ground, which may alleviate potential induced degradation.

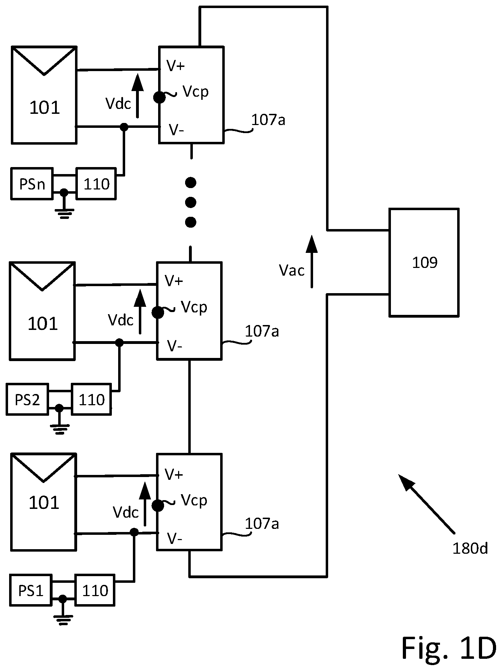

Reference is now made to **Fig. 1D**, which illustrates a power system **180d**, according to illustrative aspects of the disclosure. Power system **180d** includes a series string of micro inverter **107a** AC outputs connected to an AC load **109.** The outputs of micro inverter **107a** may be single phase or three phase. The DC inputs to each of the micro inverters **107a** may be supplied by a power source **101.** Multiple power supplies **PS1**, **PS2-PSn** may connect to terminals **V-** of respective micro inverters **107a** via the outputs of converters **110.** The inputs of converters **110** may connect to respective power supplies **PS1**, **PS2-PSn.** The outputs of a converter **110** may connect to either terminal **V+** or **V-** of a microinverter **107a.**

As a numerical example, the **Vac** voltage across a string of serially connected inverters may be **110**Vrms. Power source **PS1** may be connected to a converter **110** configured to output **150**VDC to an input (as illustrated) or output of inverter **107a**, ensuring that the voltage at any point in power system **180d** does not fall below 0V with respect to ground.

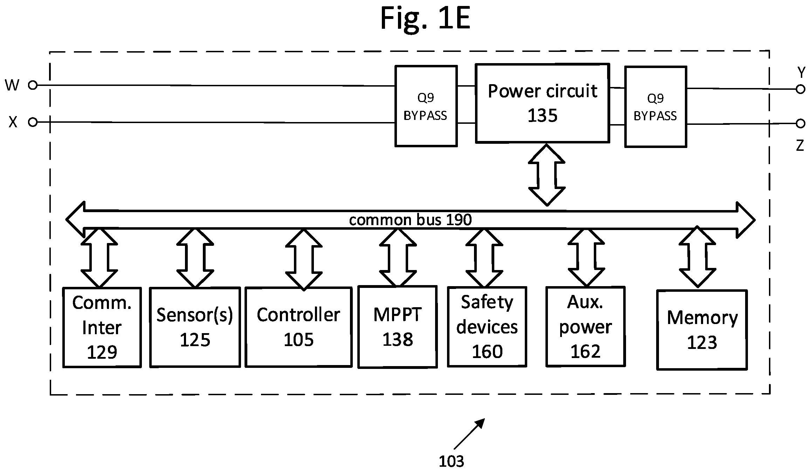

Reference is now made to **Fig. 1E**, which illustrates circuitry that may be found in a power device **103**, according to illustrative aspects of the disclosure. Power device **103** may be similar to or the same as power devices **103/103a** shown in **Fig. 1A** which may provide respective input and output terminals **W**, **X** and **Y**, **Z**. Input and output terminals **W**, **X** and **Y**, **Z** may provide connection to power lines **120** (not shown). According to some features, power device **103/103a** may include power circuit **135.** Power circuit **135** may include a direct current-direct current (DC/DC) converter such as a Buck, Boost, Buck/Boost, Buck+Boost, Cuk, Flyback and/or forward converter, or a charge pump. In some features, power circuit **135** may include a direct current to alternating current (DC/AC) converter (also known as an inverter), such as a micro-inverter. Power circuit **135** may have two input terminals and two output terminals, which may be the same as the input terminals and output terminals of power device **103/103a.** In some features, Power device **103/103a** may include Maximum Power Point Tracking (MPPT) circuit **138**, configured to extract increased power from a power source.

According to some features, power circuit **135** may include MPPT functionality. In some features, MPPT circuit **138** may implement impedance matching algorithms to extract increased power from a power source the power device may be connected to. Power device **103/103a** may further include controller **105** such as a microprocessor, Digital Signal Processor (DSP), Application-Specific Integrated Circuit (ASIC) and/or a Field Programmable Gate Array (FPGA).

Still referring to **Fig. 1E**, controller **105** may control and/or communicate with other elements of power device **103/103a** over common bus **190.** According to some features, power device **103/103a** may include circuitry and/or sensors/sensor interfaces **125** configured to measure operating power parameters directly or receive measured operating power parameters from connected sensors and/or sensor interfaces **125** configured to measure operating power parameters on or near the power source, such as the voltage and/or current output by the power source and/or the power output by the power source. According to some features, the power source may be a photovoltaic (PV) generator comprising PV cells, and a sensor or sensor interface may directly measure or receive measurements of the irradiance received by the PV cells, and/or the temperature on or near the PV generator.

Still referring to **Fig. 1E**, according to some features, power device **103/103a** may include communication interface **129**, configured to transmit and/or receive data and/or commands from other devices. Communication interface **129** may communicate using Power Line Communication (PLC) technology, acoustic communications technology, or additional technologies such as ZIGBEE^{™}, Wi-Fi, BLUETOOTH^{™}, cellular communication or other wireless methods. Power Line Communication (PLC) may be performed over power lines **120** between power devices **103/103a** and system power device (e.g. inverter) **107** which may include a similar communication interface as communication interface **129.**

According to some features, power device **103/103a** may include memory **123**, for logging measurements taken by sensor(s)/sensor interfaces **125** to store code, operational protocols or other operating information. Memory **123** may be flash, Electrically Erasable Programmable Read-Only Memory (EEPROM), Random Access Memory (RAM), Solid State Devices (SSD) or other types of appropriate memory devices.

Still referring to **Fig. 1E**, according to some features, power device **103/103a** may include safety devices **160** (e.g. fuses, circuit breakers and Residual Current Detectors). Safety devices **160** may be passive or active. For example, safety devices **160** may include one or more passive fuses disposed within power device **103/103a** where the element of the fuse may be designed to melt and disintegrate when excess current above the rating of the fuse flows through it, to thereby disconnect part of power device **103/103a** so as to avoid damage. According to some features, safety devices **160** may include active disconnect switches, configured to receive commands from a controller (e.g. controller **105**, or an external controller) to short-circuit and/or disconnect portions of power device **103/103a,** or configured to short-circuit and/or disconnect portions of power device **103/103a** in response to a measurement measured by a sensor (e. g. a measurement measured or obtained by sensors/sensor interfaces **125**). According to some features, power device **103/103a** may include auxiliary power circuit **162**, configured to receive power from a power source connected to power device **103/103a,** and output power suitable for operating other circuitry components (e.g. controller **105**, communication interface **129**, etc.). Communication, electrical connecting and/or data-sharing between the various components of power device **103/103a** may be carried out over common bus **190.** According to some features, auxiliary power circuit **162** may be connected to an output of a power device **103/103a** and designed to receive power from power sources connected to other power devices.

Power device **103/103a** may include or be operatively attached to a maximum power point tracking (MPPT) circuit. The MPPT circuit may also be operatively connected to controller **105** or another controller **105** included in power device **103/103a** which may be designated as a primary controller. Power device **103a** in **Fig. 1A** may be an example of a power device having primary controller, and in this example power devices **103** are secondary devices having secondary controllers. A primary controller in power device **103a** may communicatively control one or more other power devices **103** which may include controllers known as secondary controllers. Once a primary/secondary relationship may be established, a direction of control may be from the primary controller to the secondary controllers. The MPPT circuit under control of a primary and/or secondary controller **105** may be utilized to increase power extraction from power sources **101** and/or to control voltage and/or current supplied to system power device (e.g. an inverter or a load) **107.** According to some aspects of the disclosure, a primary power device **103a** might not be featured, and wiring configuration **111** may feature power devices **103**, without any of power devices **103** featuring a primary controller.

Referring still to **Fig. 1E**, in some features, power device **103/103a** may include bypass unit **Q9** coupled between the inputs of power circuit **135** and/or between the outputs of power circuit **135.** Bypass unit **Q9** and/or power circuit **135** may be a junction box to terminate power lines **120** or to provide a safety feature such as fuses or residual current devices. Bypass unit **Q9** may also be an isolation switch for example. Bypass unit **Q9** may be a passive device, for example, a diode. Bypass units **Q9** may be controlled by controller **105.** If an unsafe condition is detected, controller **105** may set bypass unit **Q9** to ON, short-circuiting the input and/or output of power circuit **135.** In a case in which the pair of power sources **101** are photovoltaic (PV) generators, each PV generator provides an open-circuit voltage at its output terminals. When bypass unit **Q9** is ON, a PV generator may be shortcircuited, to provide a voltage of about zero to power circuit **135.** In both scenarios, a safe voltage may be maintained, and the two scenarios may be staggered to alternate between open-circuiting and short-circuiting PV generators. This mode of operation may allow continuous power supply to system control devices, as well as provide backup mechanisms for maintaining a safe voltage (i.e., operation of bypass unit **Q9** may allow continued safe operating conditions).

In some features, a power device **103/103a** may comprise a partial group of the elements illustrated in **Fig. 1E****.** For example, a power device **103/103a** might not include power circuit **135** (i.e. power circuit **135** may be replaced by a short circuit, and a single bypass unit **Q9** may be featured. In a scenario where power circuit **135** is not present, power device **103/103a** may be still used to provide safety, monitoring and/or bypass features.

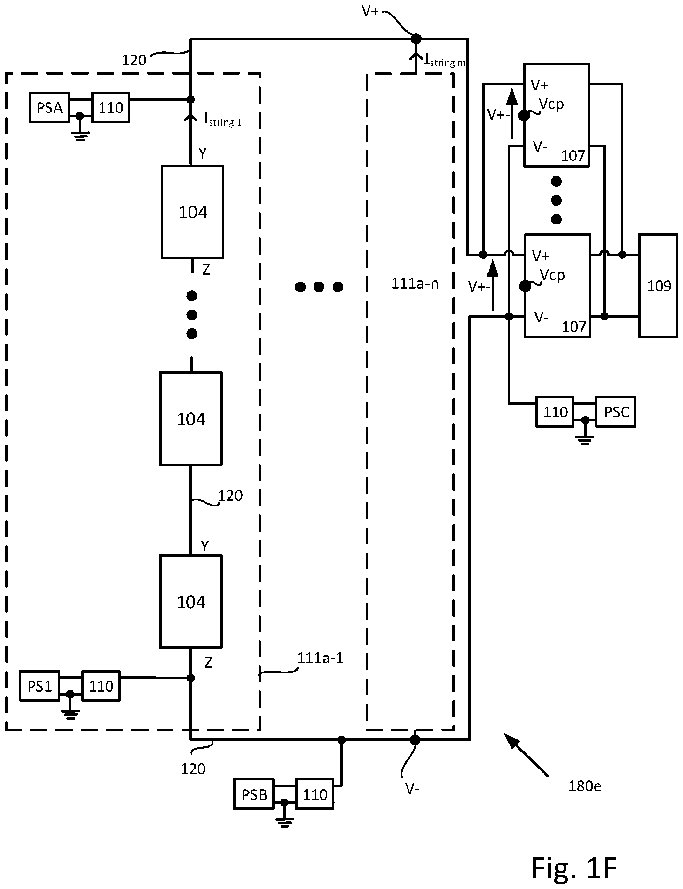

Reference is now made to **Fig. 1F**, which illustrates a power system **180e** and details of wiring configurations **111a-1** - **111a-n** connected to system power devices **107**, according to illustrative aspects of the disclosure. Wiring configuration **111a-1** may be the same as wiring configuration **111a-n** or may be different. For the sake of ease of discussion that follows, wiring configurations are considered the same and referred to as wiring configuration(s) **111a-n.** Power system **180e** is similar to power system **180a** of **Fig. 1A** in that multiple wiring configurations **111a-n** are connected in parallel and provide voltage **V+-** to system power devices **107** just like multiple wiring configurations **111** are connected in parallel to provide voltage **V+** to system power devices **107** at terminals **V+** and **V-** in **Fig. 1A****.** Wiring configuration **111a-n** may include a series connection of power sources **104** and/or a single power source **104**, where the series connection is connected across terminals **V+** and **V-** of system power devices **107.** Alternatively, wiring configuration **111a-n** may include various series/ parallel connections of power sources **104.** Power sources **104** may be similar and/or dissimilar, for example, power sources **104** may similarly be batteries but dissimilar in terms of the battery type (for example Nickelcadmium (NiCad), Lithium, lead acid), the voltages provided by each battery as well as ratings of each battery in terms of ampere hour (Ah) for example. As such, power sources **104** may be a variety of power sources such as batteries, photovoltaic panels, DC generators and/or a combination of power source **101** and respective power device **103/103a** as shown with respect to power system **180a.** According to features of the disclosure herein, and as shown in **Fig. 1F**, power devices **103/103a** might not be featured at all, rather, a series string of power sources may be formed by directly serially connecting output terminals of each power source **104.**

Connections of power supplies **PS1**, **PSA** and **PSC** to terminals **Y/ V+** and/or **Z/ V-**via converters **110**, according to descriptions which follow, may provide the option of the voltage applied to terminals **V-** and **V+** to be no longer floating. Instead the voltages on terminals **V-** and **V+** may be established above the potential of the ground by virtue of ground connections which may be provided by converters **110.** As such by way of non-limiting example, if power sources **104** are photovoltaic panels, during daytime operation terminals **V-** and **V+** may be kept above ground potential and at night below ground potential or vice versa. Such an arrangement for nighttime and/or daytime operation may mitigate voltage induced power degeneration of the photovoltaic panels during daytime operation as well as to affect a repair to the photovoltaic panels at nighttime. Alternatively, or in addition, to mitigate voltage induced power degeneration of the photovoltaic panels for daytime operation, for one day during daytime operation terminals **V-** and **V+** may be kept above ground potential and the next day below ground potential and so on, in an alternating fashion.

According to features of the disclosure herein, a converter **110** may be configured to output a first voltage during the daytime and a second voltage at night. As a non-limiting example, a converter **110** may be integrated into a system power device **107** and may be configured to output a voltage to set the voltage operating point at terminal **V-.** When substantial input power (e.g., a power level above a first threshold) is measured at the system power device **107** (indicating a daytime condition of substantial production of photovoltaic power), converter **110** may output, for example, **10**V, to ensure that all photovoltaic generators connected to the system power device input are referenced to a positive voltage. When an insubstantial input power (e.g., a power level under the first threshold or under a second threshold) is measured at the system power device **107** (indicating a nighttime condition of lack of substantial production of photovoltaic power), converter **110** may output, for example, **100**V, to increase the positive voltage bias of terminal **V-.** Increasing the positive voltage bias of connected PV generators (e.g., by increasing the positive voltage bias of terminal **V-**) may reverse potential-induced degradation effects that may develop on PV generators during the daytime.

A single power supply connected via a converter **110** to a reference point (e.g. any of terminals **X** indicated in **Fig. 1A**, or terminal **V-**, or terminal **V+**) in wiring configuration **111** may be sufficient to reference the voltage of wiring configuration **111** to a desirable voltage point and/or ground potential. Multiple power sources **PS1**...**PSn** illustrated show various possibilities for implementation and not to indicate that all of the power sources and corresponding converters **110** are required. In descriptions above and those that follow for power systems, power sources (power sources **PS1...PSn** for example) may be referenced to a desirable voltage point with respect to ground and/or ground potential.

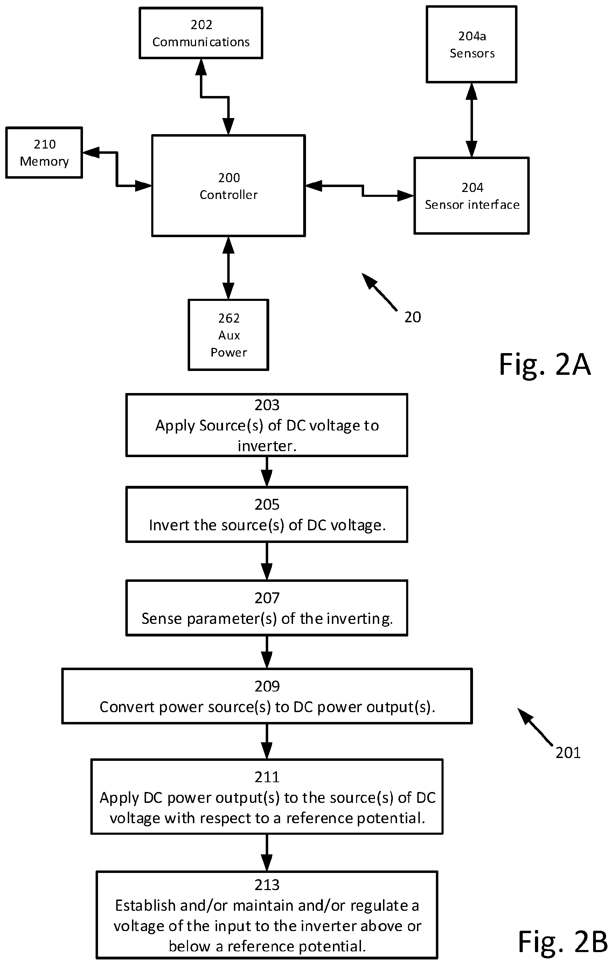

Reference is now made to **Fig. 2A** which shows a block diagram of further details of control unit **20** which includes a controller **200**, according to illustrative aspects of the disclosure. Controller **200** may include a microprocessor, microcontroller and/or digital signal processor (DSP) which may connect to a memory **210.** With respect to **Fig. 1A**, controller **200** in one converter **110** may serve as a primary controller to the other controllers **200** of the other converters **110.** As such, communications interface **202** connected to controller **200** may provide communications between controllers **200** and other controllers **200**/ **105** included in power system **180a** for example. Alternatively, a converter **110** if located in proximity to power devices **103/103a** and/or system power devices **107** may be controlled by a controller of power devices **103/103a** and/or system power devices **107** but may still retain the other features included in controller **200.**

The communications to and from communications interfaces **202** of converters **110** may be by power line communication (PLC) over power lines **120.** Communications in communications interface **202** may also include measured or sensed communication parameters via sensors **204a**/ sensor interface **204.** Communications interfaces **202** may communicate with a local area network or cellular network in order to establish an internet connection which for example may provide a feature of remote control, remote monitoring and/or reconfiguration of power devices **103/103a** and/or system power device **107** for example. Controller **200** may further include auxiliary power circuit **262**, configured to receive power from a power source connected to power device **103/103a**, system power device **107** and output power suitable for operating other circuitry components (e.g. controller **200**, communication interface **202**, etc.). According to some features, auxiliary power circuit **262** may be connected to an output of a power device **103**/**103a**, system power device **107**, power supplies **PS1-PSn**, **PSA**, **Ps4** and designed to receive power from power sources connected to other power devices and/or sources of power independent from power produced by power system **180a.**

In the descriptions that follow, example method of design and operation for converter **110** are shown where power supplied to the input of converter **110** is an AC power and/or a DC power which may be supplied for example from a power source **101** connected to power device **103**/**103a**, from a power device **103/103a,** from the string of series connected power devices **103/103a** and/or from an auxiliary source of DC power which may be separate from the DC power of a power system **180a.**

Reference is now made to **Fig. 2B** which shows a flowchart of a method **201** according to illustrative aspects of the disclosure. Method **201** may be applied to power system **180a** of **Fig. 1A** in the description that follows. Steps of method **201** may be implemented by one of the controllers of system power devices **107**, power devices **103/103a** and/or converters **110** acting as a primary controller. At step **203**, DC power from wiring configurations **111** may be provided and applied to the input of system power devices **107** (e.g., inverters) across terminals **V+** and **V-.** Within a wiring configuration **111**, DC power may be provided via a string of serially connected power device **103/103a** outputs where the inputs to each of the power devices **103/103a** is connected to a power source **101.** Alternatively, in a wiring configuration **111**, a string of interconnected (e.g., connected in series or in parallel) power sources **101** may be applied to the inputs of system power devices **107.**

At step **205**, DC power (power = voltage × current) from the parallel connected wiring configurations **111** may be inverted by system power devices **107** to an AC power (power = voltage × current) output that may be applied to load **109.**

At step **207,** electrical parameters (e.g. voltage, current, power, resistance) may be sensed on terminals **V-**, **V_{CP}** and/or **V+** by a sensor of system power device **107.** At about the same time, sensors/sensor interfaces **125** of power device **103/103a** and/or the sensor interface **204**/sensors **204a** of converters **110** may sense electrical parameters on terminals **W**, **X**, **Y**, **Z**, **V**- and **V+.**

By way of non-limiting example, operation of power supply **PS1** is referred to where power system **180a** has one wiring configuration **111**, where the input of converter **110** is connected to power supply **PS1**, and where all other power supplies and converters are not referred to or used for ease of discussion. At about the same time of step **207**, in step **209**, the source of DC voltage from power supply **PS1** may be converted by converter **110** to provide a greater voltage at the output of converter **110** responsive to the electrical parameters sensed on **W**, **X**, **Y**, **Z**, **V**- and **V+** in step **207.** In other words, converter **110** is functioning as a boost converter. The level of the greater voltage produced at the output of converter **110** may be responsive to the electrical parameter sensed in step **207** or may be produced independently of the electrical parameters sensed in step **207.** As such, responsive to the electrical parameter sensed, for example voltage of terminals **Z** and/or **V-**(but may include also terminals **V+** and **V_{CP}**), the application of the output of converter **110** to terminal **X** and/or **Z** at step **211** may add the boosted output voltage of converter **110** to terminal **V-** of system power device **107.** As such, in step **213**, the voltage applied to terminal **V-** is no longer floating but is established above the potential of the ground connection provided by converter **110.**

Included in step **213** by operation of the other steps of method **201** is maintenance of the voltage applied to terminal **V-** above the potential of the ground connection provided by converter **110.** Moreover, if power supply **PSA** is used instead of power supply **PS1**, and if the polarity of power supply **PSA** is reversed, the output of converter **110** connected to **PSA** may be applied to terminals **W**, **Y/V+** such that the steps of method **201** may establish and maintain the voltage applied to terminal **V+** to be below the potential of the ground connection provided by converter **110.** This may be desirable, for example, when power sources **101** are photovoltaic panels having properties where potential induced degradation (PID) may be reduced by maintaining all of the photovoltaic panels at a voltage below zero with respect to ground. Further, when applying the steps of method **201** in wiring configuration **111,** it may be possible to make use of a power supplies **PSn** located/ connected in the middle of wiring configuration to enable voltage **V+-** applied to system power devices to be symmetrical at terminals **V+** and **V-.** In other words, an equal amount of positive DC voltage and negative DC voltage may be applied on respective terminals **V+** and **V-** of system power device **107** to maintain a symmetric string voltage.

By way of another non-limiting example, operation of power supply **PSB** is referred to where power system **180a** has multiple wiring configuration **111**, where the input of converter **110** is connected to power supply **PSB** and, for ease of discussion, all other power supplies and converters are not referred to or used. At about the same time of step **207**, at step **209**, the source of DC voltage from power supply **PSB** may be converted by converter **110** to provide an output voltage that is greater than the voltage at the input of converter **110** responsive to the electrical parameters sensed in step **207.** In other words, converter **110** is functioning as a boost converter for all of the wiring configurations **111.** The level of the voltage produced at the output of converter **110** may be responsive to the electrical parameter sensed in step **207** or may be produced independently of the electrical parameters sensed in step **207.** As such, responsive to the electrical parameter sensed, for example voltage of terminals **Z** and/or **V-** but may include also terminals **V+** and **V_{CP}**, the application of the output of converter **110** to terminal **Z** and/or **V-** at step **211** may add the boosted output voltage of converter **110** to terminal **V-** of system power device **107.**

By way of non-limiting numerical example, assume that a desirable voltage on terminal **V+** is **510** volts (v) and the voltage on terminal **V-** is substantially above ground potential (zero volts), +**10**v for example. A controller of power device **107** and/or power modules **103/103a** may be utilized to maintain a string voltage for each wiring configuration **111** of **500v** (**510**v-**10**v). The string voltage of **500v** may be a floating voltage but any one of power sources **PS1-PSn**, **PSA**, **PSB** or **PSC** and respective converter **110** may be used (switches **S1-Sn**, **SA**, **SB**, **SC** used to select which power supply converter **110** for example) to set the voltage on terminal **V-** to be **+10** volts and **510**v on terminal **V+.** As such sensors sensors/sensor interfaces **125/204/204a** may be used to sense the voltage at terminals **Y/ V+** and **Z/V-** (step **207**). Converter **110** may be used to apply a positive voltage (with respect to ground to terminal) to terminal **Z/ V-** (step **211**) via conversion of power from power supply **PSB** (step **209**) so that terminals **Y/ V+** and **Z/V-** are above earth potential. As such, if the voltage sensed on terminal **Y/ V+** is **+250**v and the voltage sensed on terminal **Z/V**- is **-250**, so that the differential voltage is **500v**, the output of the boost converter may add **260v** to terminal **Z/V-** so that by Kirchhoff voltage law the voltage on terminal **Z/V**- is **260**v-**250**v = **10**v and the voltage on terminal **Y/V+** is **510**v = **260**v + **250v**.

As such, in step **213**, the voltage applied to terminal **V-** is no longer floating but is established above the potential of the ground connection provided by converter **110** for all wiring configurations **111.** Included in step **213** by operation of the other steps of method **201** is maintenance of the voltage applied to terminal **V-** above the potential of the ground connection provided by converter **110.** Moreover, if power supply **PSB** is used at the top of the wiring configurations **111** and converter **110** connects to terminals **Y** and/or **W**, if the polarity of power supply **PSB** is reversed, the output of converter **110** connected to power supply **PSB** may be applied to terminals **W**, **Y/V+** such that the steps of method **201** may establish and maintain the voltage applied to terminal **V+** to be below the potential of the ground connection provided by converter **110.**

Further considerations may also be considered in an application to power system **180a** by use of power supply **PSC** instead of or in addition to power supply **PSB.** The overall application may use power supply **PSC** in steps similar to those described with respect to use of power supply **PSB** to again establish and maintain the voltage applied to terminal **V+** to be below the potential of the ground connection provided by converter **110** or to establish and maintain the voltage applied to terminal **V+** to be above the potential of the ground connection provided by converter **110.** In a similar way, use of power supply **PSC** may establish and maintain the voltage applied to terminal **V-** to be below the potential of the ground connection provided by converter **110** or to establish and maintain the voltage applied to terminal **V-** to be above the potential of the ground connection provided by converter **110.** The source of DC power converted by converter **110** may be provided from a conversion of AC power provided from the output of system power devices **107**, an AC grid supply which may or may not be connected to system power devices **107**, and/or from an auxiliary source of AC power which may be separate from the AC power of power system **180a.**

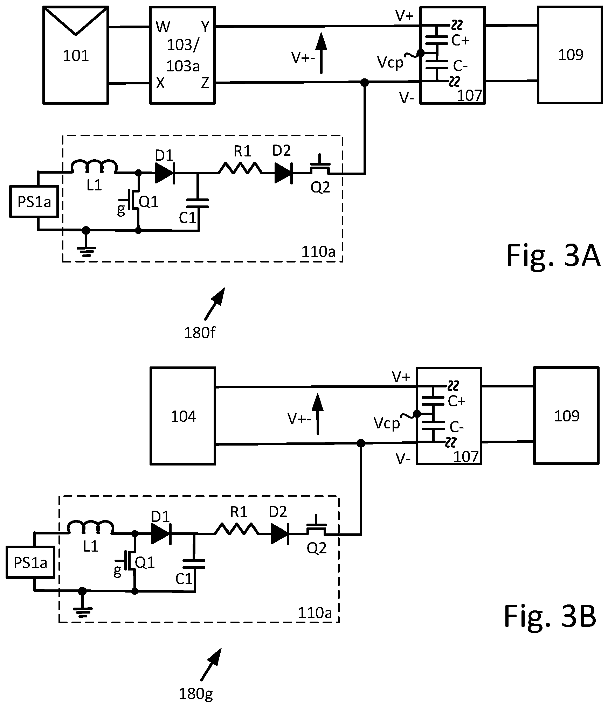

Reference is now made to **Fig. 3A** which shows a power system **180f**, according to illustrative aspects of the disclosure. Power system **180f** may be considered to be a simplified version of power system **180a** described above and may be referenced as such, for the ease of discussion in the description which follows. A power source **101** may be connected to the input of power device **103/103a** at terminals **W** and **X.** Power source **101** may be a photovoltaic panel, DC generator and/or battery/ storage device. For example, power source **101** may be a string of serially connected PV power sources, or a plurality or parallel-connected strings of PV power sources. As such, since power source **101** is shown as not being grounded, the voltage input to power device **103/103a** at terminals **Y** and **Z** may be considered a floating voltage. The output voltage (**V+-**) of power device **103/103a** at terminals **W and X** may also be considered to be a floating output voltage that may be applied to a system power device **107** at terminals **V+** and **V-.**

A partial view of the components of the input of system power device **107** is shown. System power device **107** may provide a further input terminal **V_{CP}** which may be the midpoint connection in the series connection of two input capacitors **C+**, **C-.** The series connection of two input capacitors **C+**, **C-** may be, for example, an input of a multi-level inverter topology implementation of system power device **107.** However, input terminal **V_{CP}** might not necessarily be externally provided, since according to some implementations of system power device **107**, a single capacitor connected across terminals **V+** and **V-** along with a switched bridge topology (not shown) included, may provide the inverter topology for system power device **107.** According to some features, more than two capacitors may be disposed between terminals **V+** and **V-.** For example, **6** capacitors may be disposed between terminals **V+** and **V-**, creating **5** midpoint voltage levels. Load **109** may be connected to the output of system power device **107.** Load **109** may be an AC motor, a transformer, a localized grid and/or a utility grid for example.

The output of converter **110a** may be connected to terminal **V-**, the output of converter **110a** may be the same as or similar to as discussed previously above with respect to converter **110** and may be similarly connected to terminals **V_{CP}**, **V+**, **W** and/or **X.** Converter **110a** is shown in **Fig. 3A** as a boost converter such that the input DC voltage from power supply **PSIa** is converted to an increased value of output voltage at the output of converter **110a.** Power supply **PSIa** connects across the input terminals of converter **110a.** Power supply **PSIa** is a source of DC voltage that may be provided from a power source **101** connected to power device **103/103a**, from a power device **103/103a**, from a string of series connected power devices **103/103a** and/or from an auxiliary source of DC power (from auxiliary power circuit **162/262** for example) which may be separate from the DC power of power system **180a.** Power supply **PSIa** may be same as any one of the power supplies **PS1** to **PSn.** The converter **110a** may be same as any one of the converters **110** connected to **PS1-PSn.**

A first input terminal of converter **110a** connects to a ground and/ or earth. A second input terminal of converter **110a** connects to a first end of inductor **L1.** A second end of inductor **L1** connects to the anode of diode **D1** and a first end of switch **Q1.** The cathode of **D1** connects to a first end of capacitor **C1.** A second end of switch **Q1** and a second end of capacitor **C1** connect to the ground and/ or earth. The cathode of **D1** also connects to a first end of resistor **R1**. A second end of resistor **R1** connects to the anode of diode **D2.** The cathode of diode **D2** connects to a first end of switch **Q2.** A second end of switch **Q2** connects to terminals **Z** and **V-** but may also alternatively be connected to **V_{CP}**, **V+**, **W** and/or **X.** Switch **Q2** may be an example of switches **S1-Sn**, **SA**, **SB** and **SC** described above. An appropriate pulse width modulation signal or other control signal may be applied to the gate (**g**) of switch **Q1** to provide the boost function of converter **110a** such that the input DC voltage from power supply **PSIa** is converted to an increased value of output voltage at the output of converter **110a.**

Reference is now made again to method **201** of **Fig. 2B** as applied to power system 1**80f** of **Fig. 3A**, according to illustrative aspects of the disclosure. Steps of method **201** may be implemented by one of the controllers of system power device **107**, power device **103/103a** and/or converter **110a.** Power system **180f** uses one converter and one power supply, and one converter and one power supply may be used with respect to power systems **180a-180e** described above and other powers systems described below. At step **203**, DC power from power source **101** may be provided and applied to the input of system power device **107** via power device **103/103a** or power source **101** may be provided and applied to the input of system power device **107** directly (e.g., where power device **103/103a** is not featured). At step **205**, DC power (power = voltage × current) from power source **101** directly and/or from power device **103/103a** connected to power source **101** may be inverted by system power device **107** to an AC power (power = voltage × current) output that may be applied to load **109.** At step **207,** an electrical parameter (e.g., voltage, current, power, resistance) may be sensed on terminal **V-** by a sensor of system device **107**, sensors/sensor interfaces **125** of power device **103/103a** on terminal **Z** and/or sensor interface **204**/sensors **204a.**

At about the same time of step **207,** in step **209**, the source of DC voltage from power supply **PS1a** may be converted by converter **110a** to provide a greater voltage at the output of converter **110a** which is responsive to the electrical parameter sensed in step **207**. As such, responsive to the electrical parameter sensed, control of the switching of switch **Q1** may be application of an appropriate pulse width modulation signal to the gate (**g**) of switch **Q1.** At step **211**, the operation of switch **Q2** to be 'ON' may add the boosted output voltage of converter **110a** to terminal **V-** of system power device **107.** As such, in step **213**, the voltage applied to terminal **V-** is no longer floating but is established above the potential of the ground connection provided by converter **110a.** Included in step **213** by operation of the other steps of method **201** is continuous maintenance of the voltage applied to terminal **V-** above the potential of the ground connection provided by converter **110a.**

Where multiple system power devices are connected in parallel as shown with respect to power system **180a**, diode **D2** and resistor **R1** may be utilized as a current limiting device and/or other current limiting circuit to limit circulating currents between converters **110a.** Moreover, if the polarity of power supply **PSIa** is reversed, the output of converter **110a** may be applied to terminal **V+** such that the steps of method **201** may establish and maintain the voltage applied to terminal **V+** to be below the potential of the ground connection provided by converter **110a.** Where multiple system power devices are connected in parallel as shown with respect to power system **180a,** a single converter **110a** may provide the reference voltage to a single system power device, and by virtue of the parallel connection of system power devices **107**, each of the parallel-connected power devices **107** may be referenced to the voltage output by converter **110a.**

According to features of the disclosure, a power converter **110a** may be integrated into a system power device **107.** Where a power converter **110a** is integrated into each of multiple parallel-connected system power devices **107**, each power converter **110a** may be synchronized to output a common reference voltage (e.g., by a single system power device being designated as a primary system device and the primary system power device outputting a reference voltage to be used by the other system power devices), or only a single integrated power converter **110a** may be configured to output a reference voltage, and the other integrated power converters **110a** may be disabled and/or might not output a reference voltage.

Reference is now made to **Fig. 3B** which shows a power system **180g**, according to illustrative aspects of the disclosure. Power system **180g** is similar to power system **180f** except that power source **101** and power device **103/103a** in power system **180f** may be included in power source **104** of power system **180g.** Power source **104** may be as described previously with respect to **Fig. 1F** so that power source **104** may be a variety of power sources such as a battery or batteries, photovoltaic panel(s), DC generator(s) and/or a combination of power source **101** and respective power device **103/103a** as shown with respect to power system **180a.**

In the description above with respect to step **207** electrical parameters (e.g. voltage, current, power, resistance) may be sensed on terminals **V-**, **V_{CP}** and/or **V+** by a sensor of system power device **107**, by sensors/sensor interfaces **125** of power device **103/103a** and/or the sensor interface **204**/sensors **204a** of converters **110** on terminals **W**, **X**, **Y**, **Z**, **V**- and **V+.** Alternatively, or in addition, electrical parameters (e.g. voltage, current, power, resistance) may be sensed on the AC side of system power device(s) **107** on at least one of the phases of the output of system power device(s) **107** and/or the neutral of system power device(s) **107.** As such, where the output of system power device(s) **107** is **3** phase, the average voltage of the three phases may be measured (e.g. by direct measurement, or by calculation) and used in step **213**, to ensure that the voltage applied to terminal **V-** is no longer floating but is established above the potential of the ground connection provided by converters **110/110a.** Included in step **213** by operation of the other steps of method **201** may be continuous maintenance of the voltage applied to terminal **V-** referenced to a desirable voltage point with respect to ground and/or above the potential of the ground connection provided by converters **111/110a.**

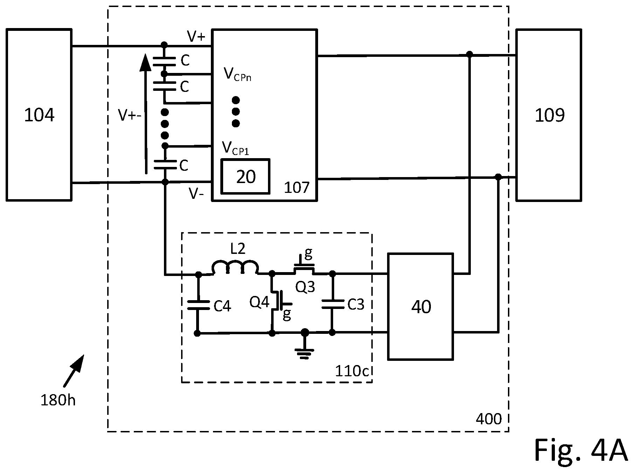

Reference is now made to **Fig. 4A** which shows a power system **180h**, according to illustrative aspects of the disclosure. Power source **104** connects to the input of inverter **400.** As discussed previously above, power source **104** may be one or more of a variety of power sources such as batteries, photovoltaic panels, DC generators and/or a combination of power source **101** and respective power device **103/103a** as shown with respect to power system **180a.** The DC voltage of power source **104** connects to terminals **V+** and **V-** of system power device **107** which may include control unit **20**, described above where sensors **204a**/sensor interface **204** may be utilized to sense the electrical parameter on terminals **V+**, **V-** and on '**n**' connection terminals **V_{CP1}-V_{CPn}**. The electrical parameter may include voltage (V), current (I) and power (V×I). The '**n**' connection terminals may be the midpoint connection in the series connection of input capacitors **C.** The series connection of multiple input capacitors **C** may be an input of a multi-level inverter topology implementation of inverter **400** for example. However, input terminals to inverter **400** on system power device **107** may provide a single capacitor **C** connected across terminals **V+** and **V-** along with a switched bridge topology (not shown) included, which may also provide the inverter topology for inverter **400.** According to some features, more than two capacitors **C** may be disposed between terminals **V+** and **V-.** For example, six capacitors may be disposed between terminals **V+** and **V-**, creating five midpoint voltage levels in addition to the end voltage levels of **V+** and **V-**. One or more of the five midpoint voltage levels and the two-end voltage levels may be measured to provide a reference measurement for regulation and control of a voltage level at one of the midpoint voltage and/or one of the end voltage levels.

Load **109** may be connected to the output of system power device **107.** Load **109** may be an AC motor, a transformer, a localized grid and/or a utility grid for example. The output of inverter **400** is shown as a single-phase output but may also be a multiple phase output such as a three-phase output for example. The output of inverter **400** is connected to the input of rectifier unit **40.** Rectifier unit **40** may be AC to DC converters such as uncontrolled diode rectifier circuits, phase-controlled rectifiers and/or switched mode power supplies (SMPS). Rectifier **40** may also include a transformer which may be used to galvanically isolate between the AC output of inverter **400**/ load **109** and the DC input of converter **110b.** The transformer may also either increase and/or decrease the AC input to rectifier unit **40.**

The DC output of rectifier unit **40** connects across the input of converter **110b.** Converter **110b** is shown as a buck converter circuit topology. As such since one function of a buck converter may be to reduce the voltage at its input to a lower voltage at its output, a transformer may not be required in rectifier unit **40.** Capacitor **C3** connects across the input of converter **110b.** One input terminals of converter **110b** connects to ground and/ earth. The other input terminal of converter **110b** connects to one end of switch **Q3**, the other end of switch **Q3** connects to inductor **L2** and one end of switch **Q4.** The other end of inductor **L2** provides the output of converter **110b** and also connects to one end of capacitor **C4.** The remaining ends of capacitor **C4** and switch **Q4** connect to ground and/ earth. The output of converter **110b** is shown connected to terminal **V-** but may also connect to terminal **V+** and/or connection terminals **V_{CP1}-V_{CPn}**. The utilization of method **201** for inverter **400** may be to establish and maintain the voltage applied to terminal **V-** to be above the potential of the ground connection provided by converter **110b** or establish and maintain the voltage applied to terminal **V-** to be below the potential of the ground connection provided by converter **110b** if the polarity of the input to converter **110b** is reversed for example. In a similar way, inverter **400** may be configured and controlled to establish and maintain the voltage applied to terminal **V+** to be above the potential of the ground connection provided by converter **110b** or to establish and maintain the voltage applied to terminal **V+** to be below the potential of the ground connection provided by converter **110b**, if the polarity of the input to converter **110b** is reversed for example.

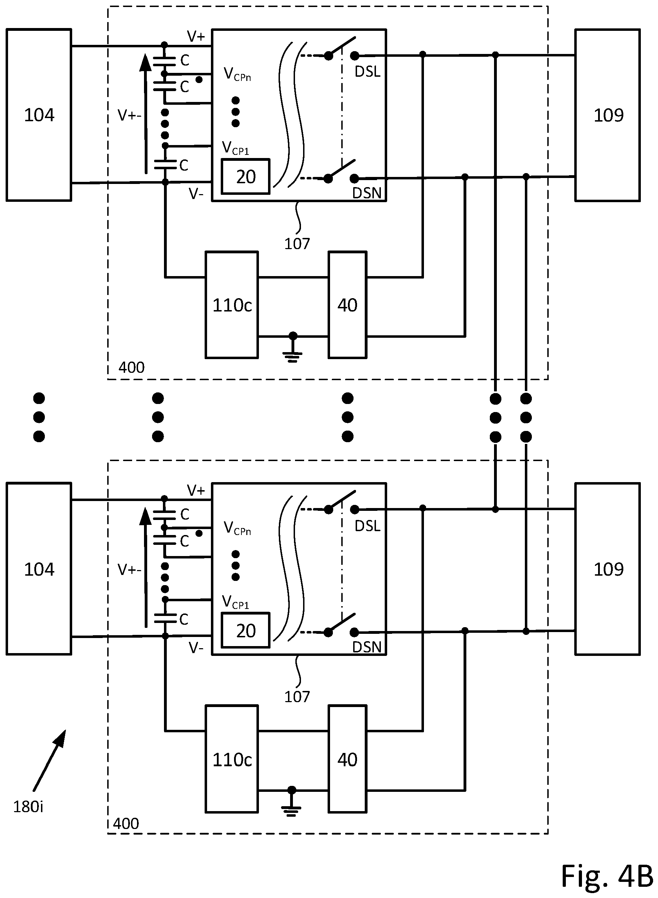

Reference is now made to **Fig. 4B**, which shows a power system **180i**, according to illustrative aspects of the disclosure. Power system **180i** is similar to power system **180h** but may include multiple inverters **400,** each having one or more with multiple inputs from one or more power sources **104** and the output of each inverter **400** connected across a load **109.** Further detail of system power device **107** may include control unit **20** and may also include switches **DSL** and **DSN** that may disconnect or reconnect respectively the live and neutral outputs of system power device **107** from a load **109.** The output of system power device **107** is shown as a single-phase output but may also be a three-phase output. The three-phase output may include at least three switches that may disconnect or reconnect respectively the three live and/or neutral outputs of system power device **107** from load **109.** If power sources **104** are photovoltaic generators, switches **DSL** and **DSN** may disconnect the live and neutral outputs of system power device **107** from load **109** during nighttime operation of power system **180i.** Switches **DSL** and **DSN** may reconnect the live and neutral outputs of system power device **107** to load **109** during daytime operation of power system **180i.**

Reference is now made again method **201** and to power system **180i** when power sources **104** are photovoltaic generators and load **109** is a utility grid. Control units **20** of each inverter **400** may communicate with each other where one control unit **20** may be a primary control unit and other control units **20** are secondary control units. Sensors **204a**/ sensor interface **204** may be utilized to sense electrical parameters on the live and neutral outputs of system power device **107**, terminals **V-**, **V_{CP1}-V_{CPn}** and **V+.**

During daytime operation **s**witches **DSL** and **DSN** may connect the live and neutral outputs of system power device **107** to load **109.** At step **203**, DC powers from power sources **104** may be provided and applied to the inputs of system power devices **107.**

At step **205**, DC power (power = voltage × current) from power sources **104** may be inverted by respective system power devices **107** to an AC power (power = voltage × current) output that may be applied to load **109.**

At step **207,** electrical parameters (e.g., voltage, current, power, resistance) may be sensed for each inverter **400** on the respective terminals of each system device **107** by each of the sensor interfaces **204**/sensors **204a** provided by each control unit **20.**

At about the same time of step **207**, in step **209**, during daytime operation, the source of DC voltage from each rectifier unit **40** may be converted by converter **110b** to provide voltages at the outputs of each converter **110b** that is responsive to the electrical parameters sensed in step **207** for each inverter **400.** By way of non-limiting example, one of terminals **V_{CP1}-V_{CPn}** may be chosen as the terminal at which the voltage may be sensed for each inverter. As such, if the input to each system power device **107** has a six-capacitor input, terminal **V_{CP3}** (the midpoint of the input to each system power device **107**) of each inverter **400** may be sensed at step **207** and an appropriate control signal sent to each converter **110b** and/or also to power device **103/103a** that may be included in power source **104** from the primary control unit **20** so that each terminal **V_{CP3}** is controlled and maintained (step **213**) to have the same desired voltage and terminal **V-** is no longer floating but is established above the potential of the ground connection provided by each converter **110b.** Included in step **213** by operation of the other steps of method **201** may be continuous maintenance of the voltage applied to terminal **V-** above the potential of the ground connection provided by converter **110b.**

By way of non-limiting numerical example, assume that a desirable voltage on terminals **V+** is **510** volts (v) and the voltage on terminal **V-** is substantially above ground (or a "virtual ground") potential (zero volts), +**10**v for example. Control unit **20** may be utilized to maintain voltage **V+-**for each power source **104** of **500**v (**510**v-**10**v) at step **205** for each inverter **400.** Voltage **V+-** of **500v** is a floating voltage (e.g., voltage **V+** might not be directly referenced to ground, rather voltage **V+** may be referenced to a "virtual ground", with the "virtual ground" controlled to be at the same voltage as earth but galvanically isolated from earth) but any one of rectifier units **40** and respective converter **110b** may be used to set the voltage on terminal **V-** to be **+10** volts and **510**v on terminal **V+** by sensing the inverting of each system power device **107** (step **207**). Converter **110b** for each inverter **400** may be used (step **209**) to apply a respective positive voltage (with respect to ground to terminal) to each terminal **V-** (step **211**) via conversion of power from each rectifier unit **40** (step **209**) so that each of terminals **V_{CP3}** may be established and maintained (step **213**) at **260** volts. As such, during operation each of the inverters **400**, each inverter **400** may have different sensed parameter values needing adjustment from a respective converter **110b** to establish and maintain that terminal **V_{CP3}** of each inverter **400** may be established and maintained (step **213**) at the same value (**260** volts). For example, for one converter **400**, if the voltage on terminal **V+** is +**250**v and the voltage on terminal **V-** is -**250**v, so that the differential voltage between terminals **V-** and **V+** is **500**v, the output of converter **110b** may add **260**v to terminal **V-** so that by Kirchhoff voltage law the voltage on terminal **V-**is **260**v-**250**v = **10**v and the voltage on terminal **V+** is **510**v = **250**v + **260**v.

According to features of the disclosure, each system power device **107** may be controlled to maintain an internal voltage level at a substantially common level. For example, system power devices **107** as shown in **Fig. 4B** may feature a plurality of input capacitors **C**, creating a plurality of intermediate voltage levels. One of the intermediate voltage levels may be regulated (e.g. measured at step **207** of method **201** when applied to system power devices **107**) to be at a certain voltage level, with the certain voltage level regulated at each system power device **107** substantially the same for all system-connected power devices. This regulation may be useful, for example, to prevent circular current flows between system power devices **107** connected in parallel at input terminal and/or at output terminals. The intermediate voltage point regulated may be an intermediate input voltage (e.g., the voltage **Vcp** of **Fig. 3A**) or an intermediate output voltage (e.g., a "virtual neutral" voltage internally created but not output by system power device **107** of **Fig. 4B**, or, where system power device **107** is designed to output a neutral voltage line, the neutral voltage line may be regulated for each system power device **107** to be at a substantially common voltage level).

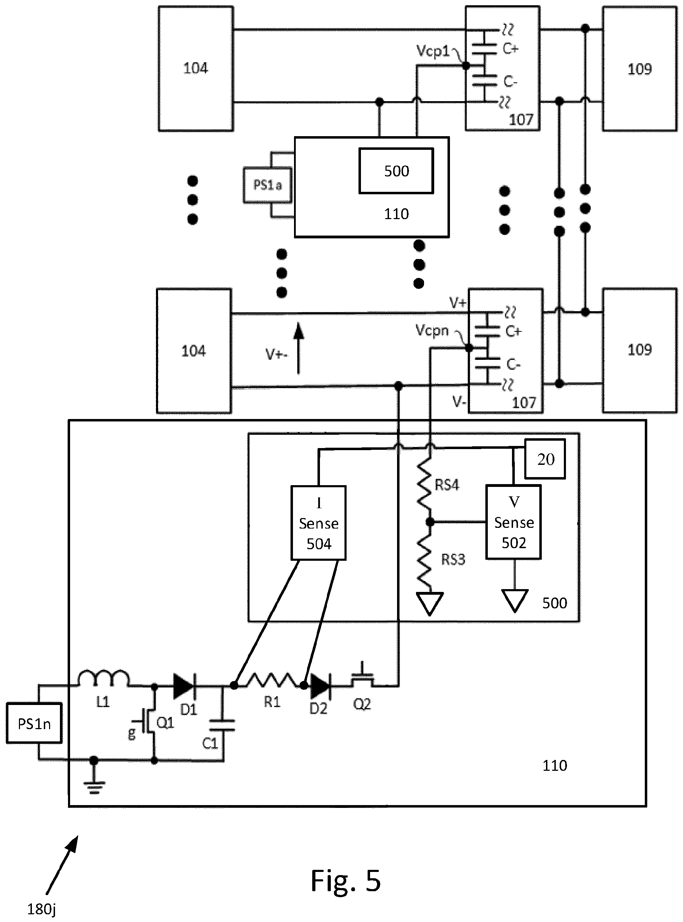

Reference is now made to **Fig. 5**, which shows a power system **180j,** according to illustrative aspects of the disclosure. Converter **110** includes circuitry **500** configured to regulate the output of converter **110.** Circuitry **500** may include one or more sensors, for example, current and/or voltage sensors. According to the illustrative circuitry shown in **Fig. 5**, circuitry **500** includes two resistors **RS3**, **RS4** connected in series between terminal **Vcpn** and ground and/or earth. A first end of resistor **RS4** is connected to terminal **Vcpn** and a second end of resistor **RS4** is connected to a first end of resistor **RS3.** The second end of resistor **RS3** is connected to the ground and/or earth potential. Circuitry **500** also includes a voltage sensor **502.** A first end of voltage sensor **502** is connected to the first end of resistor **RS3** and a second end of voltage sensor **502** is connected to the ground and/or earth potential. Voltage sensor **502** may also be operatively connected to control unit **20** and/or controller **200.** In some examples, voltage sensor **502** may be part of control unit **20.** In some examples, control unit **20** may be located in system power device **107** and/or converter **110.** As another example, control unit **20** may be a separate unit. Circuitry **500** also includes a current sensor **504** connected in parallel to resistor **R1** of converter **101.** Current sensor **504** is also operatively connected to control unit **20** and/or controller **200.** In some examples, current sensor **504** may derive the current flowing through resistor **R1** based on the voltage across resistor **R1** and the resistance of resistor **R1** (current = voltage ÷ resistance). In some examples, current sensor **504** may be connected in series with resistor **R1** and measure the current flowing through resistor **R1** directly.

Circuitry **500** is configured to control the output of converter **110.** As mentioned above, in some examples, switch **Q1** and/or switch **Q2** may be controlled by control unit **20.** The control of these switches **Q1**, **Q2** may be based on one or more parameter sensed by the circuitry **500.** As an example, the one or more parameter may include: voltage, current, etc. By adjusting control of switches **Q1** and/or **Q2**, control unit **20** may adjust the output of converter **110.** For example, increasing a duty cycle of switch **Q1** may increase the voltage output by converter **110.**

In cases where power system **180j** includes a plurality of system power devices **107**, it may occur that a voltage at terminal **Vcpn** for one or more of the system power devices **107** may be greater (e.g., substantially greater) than a target voltage that corresponds to a voltage or a target voltage at terminal **Vcpn** at one or more other system power devices **107.** For example, substantially greater in this context may be within a certain range, e.g., +/- five volts, +/- tens of millivolts, +/- hundreds of millivolts, etc. If the voltage **Vcpn** is higher at a first system power device than at a second system power device, then the second system power device may be adversely affected, for example, shut down. In such cases, in the absence of circuitry that senses current and regulates the voltage accordingly, then other power devices **107** (e.g., the second system power device which may be operating at or below the desired voltage) may be inadvertently bypassed or deactivated, and only the one or more system power device **107** operating at a voltage greater than the desired voltage may continue to supply power to the load **109.** In order to help allay such a scenario, the circuitry **500**, in addition to sensing voltage, may also sense current, e.g., the current flowing through the converter **110** at resistor **R1.** If one or more sensed parameter is indicative of a voltage that is higher than a desired voltage or higher than a voltage operating point of other system power devices **107**, then controller **200** may operate in order to decrease the voltage output by the converter **110**, which decreases the voltage at terminal **Vcpn** for that system power device **107.**

It will be appreciated that in some examples, a converter **110,** which is connected to ground potential, and circuitry **500** may be used to regulate a similar voltage value at a plurality of terminals **Vcpn** for a plurality of system power devices **107** by regulating and/or directly controlling the voltage at terminal **V-**, **V+**, etc. In some cases, for example where terminal **Vcpn** is a common neutral (or "virtual neutral", i.e., a terminal corresponding to terminals at other system power devices **107** having a similar or identical voltage without directly connecting the **Vcpn** terminals of the various system power devices **107**) for the plurality of system power devices **107,** then a single circuit (e.g. circuitry **500**) may be used to control the voltage at terminal **Vcpn** for the plurality of system power devices **107.** In some examples, for example, where the power system has a plurality of power supplies **PSn** and a plurality of system power devices **107** share a common neutral or a common "virtual neutral", in some cases where one or more of the power supplies **PSn** cease to operate, then the power system may continue to function with one or more of the remaining power supplies **PSn** providing the required voltage to terminal **V-**, **V+**, etc.

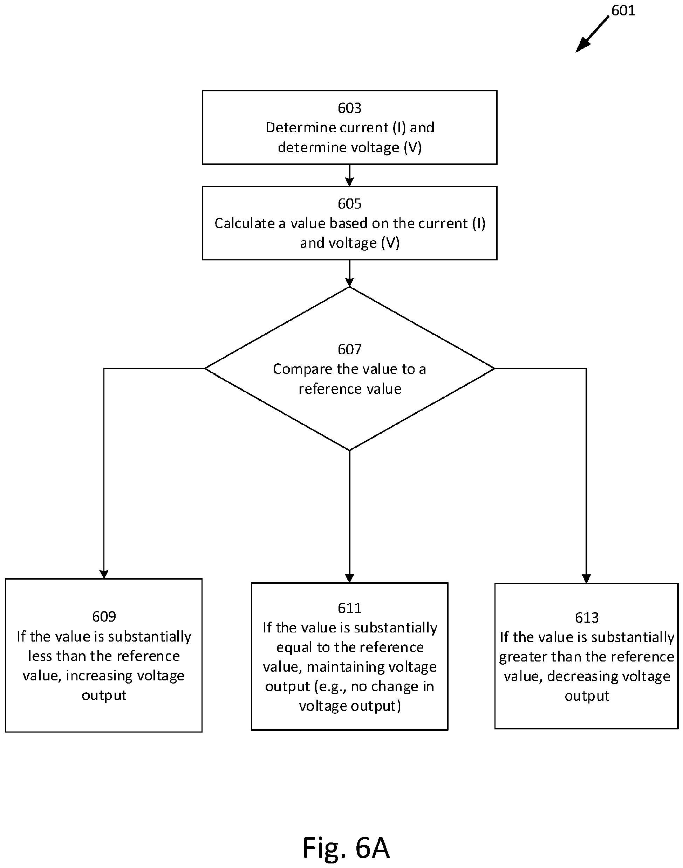

Reference is now made to **Fig. 6A** which shows a flowchart of a method **601** according to illustrative aspects of the disclosure. For example, method **601** may be applied to power system **180j** of **Fig. 5** in the description that follows. As an example, steps of method **601** may be implemented by controllers of system power devices **107**, controllers of power devices **103/103a,** and/or converters **110** acting as a primary controller.

At step **603**, a current is determined and a voltage is determined.

For example, at step **603,** a current related to the voltage at terminal **Vcpn** of system power device **107** may be determined, e.g., measured by current sensor **504.** As an example, the current flowing through resistor **R1** may be measured. In other examples, a different current may be measured or determined, for example, the current through diode **D1**, the current through diode **D2**, the current through switch **Q2**, etc. In some examples, the current may be estimated (e.g., by measuring current through inductor **L1** and estimating the current through resistor **R1** based on the measured current through inductor **L1** and the duty cycle of switch **Q1**).

For example, at step **603,** a voltage related to the voltage at terminal **Vcpn** of system power device **107** may be determined, e.g., measured by voltage sensor **502.** As an example, the voltage of resistor **RS3** may be measured. The voltage of resistor **RS3** is related to the voltage at terminal **Vcpn.** In some cases the voltage of resistor **RS3** that is measured may be used to derive the voltage at terminal **Vcpn.** In other examples, a different voltage may be sensed, for example, the voltage at terminal **V+**, the voltage at terminal **V-**, etc.

At step **605**, a value is calculated based on the determined current and the determined voltage. For example the value may be calculated using a function that depends both on the current and the voltage, e.g., a linear function, a polynomial function, etc.

At step **607** the calculated value is compared to a reference value. For example, if the value calculated at step **605** is a voltage value then the reference value may be a reference voltage value. As an example, the reference value may be a desired voltage value, desired current value, etc.

If at step **607** it is determined that the calculated value is substantially less than the reference value, then at step **609** the voltage output may be increased. For example, the control unit **20**, e.g., controller **200**, may control the converter **110**, e.g., switch **Q1** and/or switch **Q2**, to increase the output voltage of the converter **110** that is output to terminal **V-.** This may control an increase in voltage at terminal **Vcpn.**

If at step **607** it is determined that the calculated value is substantially equal to the reference value, or within a permissible range of variation from the reference value, then at step **611** the voltage output may be substantially maintained. For example, the control unit **20**, e.g., controller **200**, may control the converter **110**, e.g., switch **Q1** and/or switch **Q2**, to substantially maintain (e.g., allowing a permissible variation, but without a substantial change in average voltage) the output voltage of the converter **110** that is output to terminal **V-.** This may maintain the voltage at terminal **Vcpn.**

If at step **607** it is determined that the calculated value is substantially greater than the reference value, then at step **613** the voltage output may be decreased. For example, the control unit **20**, e.g., controller **200**, may control the converter **110**, e.g., switch **Q1** and/or switch **Q2**, to decrease the voltage of the converter **110** that is output to terminal **V-.** This may control a decrease in voltage at terminal **Vcpn.**

According to features of the disclosure herein, the value calculated at step **605** may be inversely proportional or directly proportional to the desirable change in output voltage. In the example shown in **Fig. 6A**, the value being substantially less than the reference value causes an adjustment to increase voltage output. In another example, the value may be calculated such that the value being substantially less than a reference value causes an adjustment to decrease voltage output.

By way of non-limiting example, assuming that the value calculated at step **605** may be calculated using a linear function that depends both on the current and the voltage, e.g., using the equation: **α** = **β** * **I** + **γ * V;** where **α** is the calculated value, **β** and **γ** are coefficients (e.g., coefficients that are related to one or more parameter corresponding to elements of the power system, such as, resistance of one or more of the resistors in the power system), **I** is the determined current, and **V** is the determined voltage. In cases where the determined current **I** is relatively high and/or the determined voltage **V** is relatively high, then as a result the value of **α** may be relatively high. If **α** is relatively high then the calculated value **α** may be considered substantially greater than the reference value, and there may be a decrease in the voltage output. In cases where the determined current **I** is relatively low and/or the determined voltage **V** is relatively low, then as a result the value of **α** may be relatively low. If **α** is relatively low then the calculated value **α** may be considered substantially less than the reference value, and there may be an increase in the voltage output.

By way of non-limiting numerical example, if the reference value is, for example, about **1 v**, and the determined current **I** is relatively high, e.g., about **10 mA**, then the calculated value **α** may be about **1.5 v**, which is substantially greater than the reference value. As a result, there may be a decrease in the voltage output, and as a result a decrease in the determined current in the power system. If the determined current **I** is relatively low, e.g., about **5 mA**, then the calculated value **α** may be about **0.5 v**, which is substantially less than the reference value. As a result, there may be an increase in the voltage output, and as a result an increase in the determined current in the power system. In this example, if the determined current **I** is about **7.5 mA**, then the calculated value **α** may be about **1 v**, which is substantially equal (e.g., within a predetermined amount, within a measurable tolerance, etc.) to the reference value. As a result, the voltage output may be substantially maintained.

By way of another non-limiting numerical example, if the reference value is, for example, about **0.75 v**, and the determined current **V** is relatively high, e.g., about **1 v**, then the calculated value **α** may be about **1.25 v**, which is substantially greater (e.g., more than a predetermined amount, more than a measurable tolerance, etc.) than the reference value. As a result, there may be a decrease in the voltage output, and as a result a decrease in the determined voltage in the power system. If the determined voltage **V** is relatively low, e.g., about **0.25 mA**, then the calculated value **α** may be about **0.5 v**, which is substantially less (e.g., less than by a predetermined amount, less than by a measurable tolerance, etc.) than the reference value. As a result, there may be an increase in the voltage output, and as a result an increase in the determined voltage in the power system. In this example, if the determined voltage **V** is about **0.5 v**, then the calculated value **α** may be about **0.75 v**, which is substantially equal to the reference value. As a result, the voltage output may be substantially maintained.

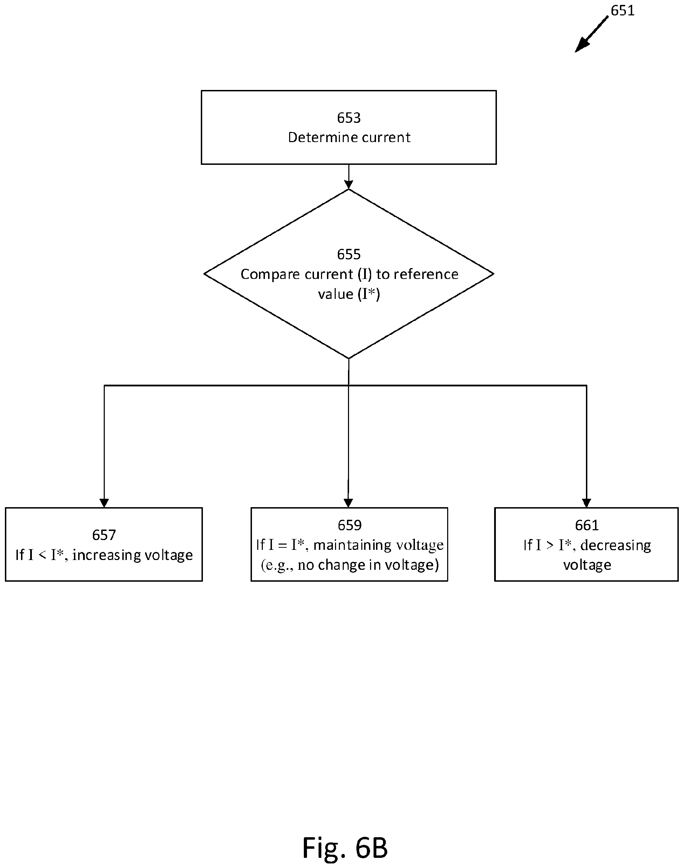

Reference is now made to **Fig. 6B** which shows a flowchart of a method **651** according to illustrative aspects of the disclosure. For example, method **651** may be applied to power system **180j** of **Fig. 5** in the description that follows. As an example, steps of method **651** may be implemented by controllers of system power devices **107**, controllers of power devices **103/103a,** and/or converters **110** acting as a primary controller.

At step **653**, a current is determined (e.g., sensed).

For example, a current related to the voltage at terminal **Vcpn** of system power device **107** may be measured, e.g., by current sensor **504.** As an example, the current flowing through resistor **R1** may be measured. In other examples, a different current may be measured or determined, for example, the current through diode **D1**, the current through diode **D2**, the current through switch **Q2**, etc. In some examples, the current may be estimated (e.g., by measuring current through inductor **L1** and estimating the current through resistor **R1** based on the measured current through inductor **L1** and the duty cycle of switch **Q1**).

At step **655**, the current is compared to a reference current value.

If at step **655** it is determined that the current is substantially less than the reference current, then at step **657** the voltage output may be increased. For example, the control unit **20**, e.g., controller **200**, may control the converter **110**, e.g., switch **Q1** and/or switch **Q2**, to increase the output voltage of the converter **110** that is output to terminal **V-.** This may control an increase in voltage at terminal **Vcpn.**

If at step **655** it is determined that the current is substantially equal to the reference current, then at step **659** the voltage output may be maintained. For example, the control unit **20**, e.g., controller **200**, may control the converter **110**, e.g., switch **Q1** and/or switch **Q2**, to substantially maintain the output voltage of the converter **110** that is output to terminal **V-.** This may maintain the voltage at terminal **Vcpn.**

If at step **655** it is determined that the calculated value is substantially greater than the reference current, then at step **661** the voltage output may be decreased. For example, the control unit **20**, e.g., controller **200**, may control the converter **110**, e.g., switch **Q1** and/or switch **Q2**, to decrease the voltage of the converter **110** that is output to terminal **V-.** This may control a decrease in voltage at terminal **Vcpn.**

According to the present disclosure, a comparison of a calculated and/or sensed value to a desired and/or reference value may be done in order to determine how to regulate a voltage in the power system, e.g., whether or not the output voltage of a converter should be increased, maintained, or decreased.

As another example, it may be determined whether one or more sensed and/or calculated parameter is in a range of desired values in order to determine how the output voltage should be regulated. For example, this range of desired values may be related to a range of voltage values and/or current values that are desired for operation of one or more system power devices **107.**

As an example, this range of values may be represented as a look-up table, e.g., stored in control unit **20**, that may be used to help determine a target output voltage for the converter, for example, based on a determined current.

As another example, two separate control methods may be used. A first control method may adjust output voltage based on a determined voltage (e.g., measured at terminal **Vcp**), and a second control method may adjust output voltage based on a determined current (e.g., measured on resistor **R1**). A controller may alternate between the two control methods, or may run both methods concurrently, for example, the first method may be run at a first frequency, and the second method may be run at a different (higher or lower) frequency, for example, as to not interfere with the first method.

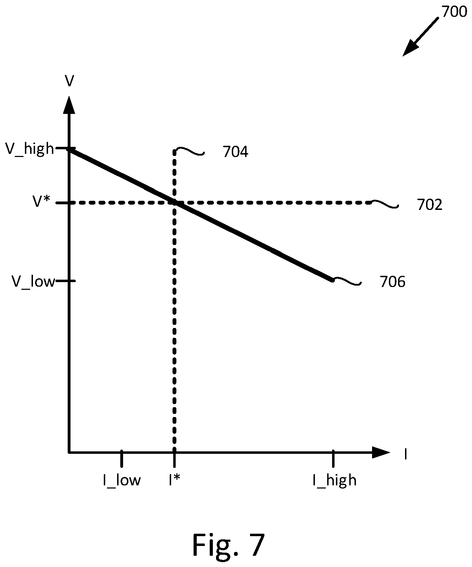

Reference is now made to **Fig. 7**, which shows a voltage-current graph according to illustrative aspects of the disclosure. Graph **700** illustrates a desired voltage value **702** and a desired current value **704.** For example, desired voltage value **702** may be a desired voltage at terminal **Vcpn, V+**, **V-**, etc. For example, desired current value **704** may be a desired current through resistor **R1,** or a different current. Graph **700** also illustrates a voltage-current curve **706** indicative of a relationship between current values and voltage values. Voltage-current curve **706**, or a section of voltage-current curve **706** may be representative of a range of desired values. As an example, the range of desired values may be determined by a range of desired voltage values, e.g., between a first low voltage, **V_low,** and a second high voltage, **V_high**, and/or a range of desired current values, e.g., between a first low current, **I_low**, and a second high current, **I_high.** As mentioned above, relationships between current values and voltage values may be included in a look-up table, for example, stored in the control unit **20**, e.g., memory **210**, and used by the control unit **20**, e.g., controller **200**, to control the output of the converter **110.** For example, the voltage-current curve **706** may be used to help maintain a voltage substantially equal to, or within a certain range of, the desired voltage value **702** at similar terminals, e.g., terminals **Vcpn**, of a plurality of system power devices **107.** For example, based on a current sensed in the converter **110**, e.g., a current flowing through resistor **R1**, the look-up table may be referenced, e.g., by control unit **20** and/or controller **200**, and a target output voltage may be determined for regulating the voltage at terminal **Vcpn** based on the sensed current. This may help ensure that the voltage at one or more of the system power devices **107** does not increase to a point where it would cause one or more other system power devices **107** to be bypassed or deactivated.

By way of non-limiting numerical example, assuming that a desired voltage on terminal **Vcpn** is **495** volts (v). Circuitry **500** may be utilized to maintain voltage on terminal **Vcpn** for each system power device **107** of substantially **495**v. If the voltage representative of voltage on terminal **Vcpn** indicates that the voltage on terminal **Vcpn** is greater than a desired voltage value and/or range of voltage values, then the voltage that is output by controller **110** may be decreased to a reduced voltage which will decrease the voltage on terminal **Vcpn.**

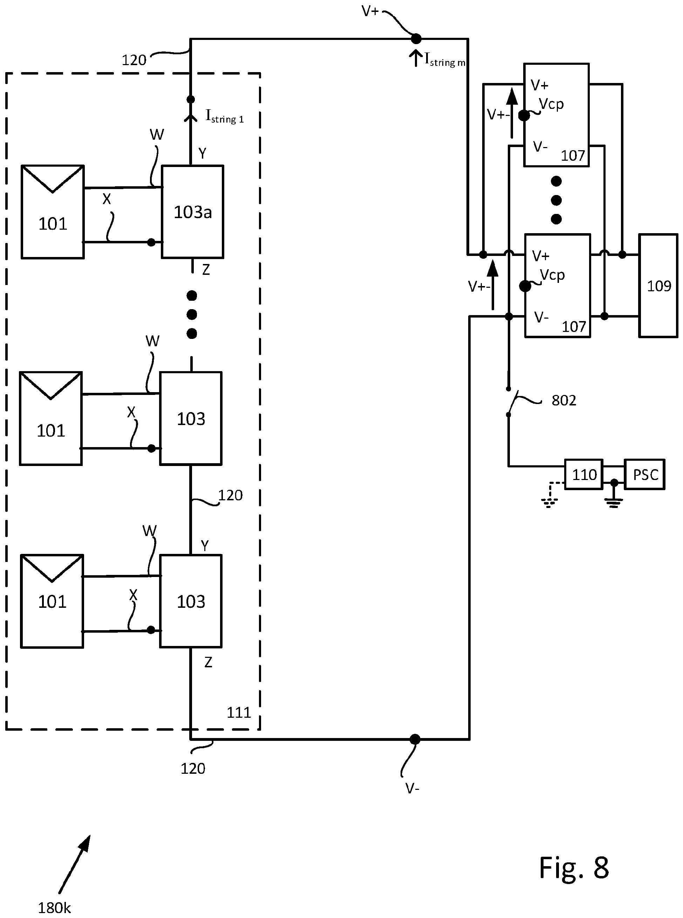

Reference is now made to **Fig. 8**, which shows a power system **180k**, according to illustrative aspects of the disclosure. Power system **180k** includes switch **802** which is operable to switch the power system **180k** between a daytime mode of operation and a nighttime mode of operation. Switch **802** is connected between converter **110** and terminal **V-**, with one end of switch **802** connected to an output of converter **110** and a second end of switch **802** connected to terminal **V-.** In some examples, switch **802** may be switch **SC** and/or switch **Q2** described above. Although illustrated separately, it will be appreciated that switch **802** may be included as part of converter **110** and/or system power device **107.** In daytime mode, switch **802** is switched to the OFF position and converter **110** does not provide any output voltage to terminal **V-.** In nighttime mode, switch **802** is switched to the ON position and a voltage is applied to terminal **V-** above the potential of the ground connection provided by converter **110.** One or more sensors may be used to help determine one or more parameter indicative of whether the switch should be switched to daytime mode or nighttime mode. The one or more sensors may include, for example: a clock, an irradiance sensor, a temperature sensor, a current sensor, a voltage sensor, a power sensor, etc. When one or more parameters from the one or more sensors indicate that the nighttime mode is appropriate, then switch **802** may be activated, e.g., by control unit **20** and/or controller **200.** When one or more parameters from the one or more sensors indicate that the daytime mode is appropriate, then switch **802** may be de-activated, e.g., by control unit **20** and/or controller **200.** As an example, the one or more parameters can be at least one of: a time value, an irradiance value, a temperature value, a current value, a voltage value, and a power value. Converter **110** may be configured to output a higher voltage when in nighttime mode as compared to daytime mode. For example, converter **110** may be configured to connect to terminal **V-** of a system power device **107** and to output about **5v - 10v** if operating in daytime operation mode, and to output tens or hundreds of volts if operating in nighttime operation mode, to increase expedite PID reversion (e.g., to expedite discharge of charge stored on solar panels during the daytime).

According to some features, a topology of converter **110** may be selected according to preferred time of operation. For example, a converter **110** designed to operate primarily in daytime mode may be optimized to output a low voltage (e.g., up to tens of volts), and a converter **110** designed to operate primarily in nighttime mode may be optimized to output a higher voltage (e.g., hundreds of volts). Optimization to output a higher voltage may include use of components rated for higher voltages, and/or use of magnetic elements (e.g. a transformer, for example, where converter **110** is a flyback, dual-active bridge, or different type of isolating converter) to increase output voltage. As an example, the voltage applied in a nighttime mode of operation can be in a range of about **100** volts to about **1000** volts, and the voltage applied in a daytime mode of operation can be in a range of about **10** volts to about **150** volts.

In some cases, it might not be possible for power systems to have voltage applied to terminals, e.g., **V+**, **V-**, etc., by converter **110** during the day. For example, in some power systems, terminal **Vcp** might be grounded during the daytime, e.g. while system power device **107** is connected to load **109.** In such cases, after the load **109** is disconnected from the system power device **107** at nighttime, then the switch **802** may be activated in order to apply a voltage at terminal **V-** above the potential of the ground connection provided by converter **110.** In such cases, the effects of PID might not be prevented during the daytime, but the effects of PID on the system may be alleviated during the nighttime.

It will be appreciated that, in some cases, a relatively low output voltage may be applied at terminal **V-** in order to raise the potential at **V-** to above ground potential, e.g. an output voltage of about **5v - 10v.** In comparison, in some cases, a relatively high output voltage may be applied at terminal **V+** in order to raise the potential at **V-** to above ground potential, e.g. an output voltage of hundreds of volts. Accordingly, an advantage of applying the output voltage at terminal **V-**, as opposed to terminal **V+**, may be that a substantially lower, relatively low voltage may be applied by converter **110.**

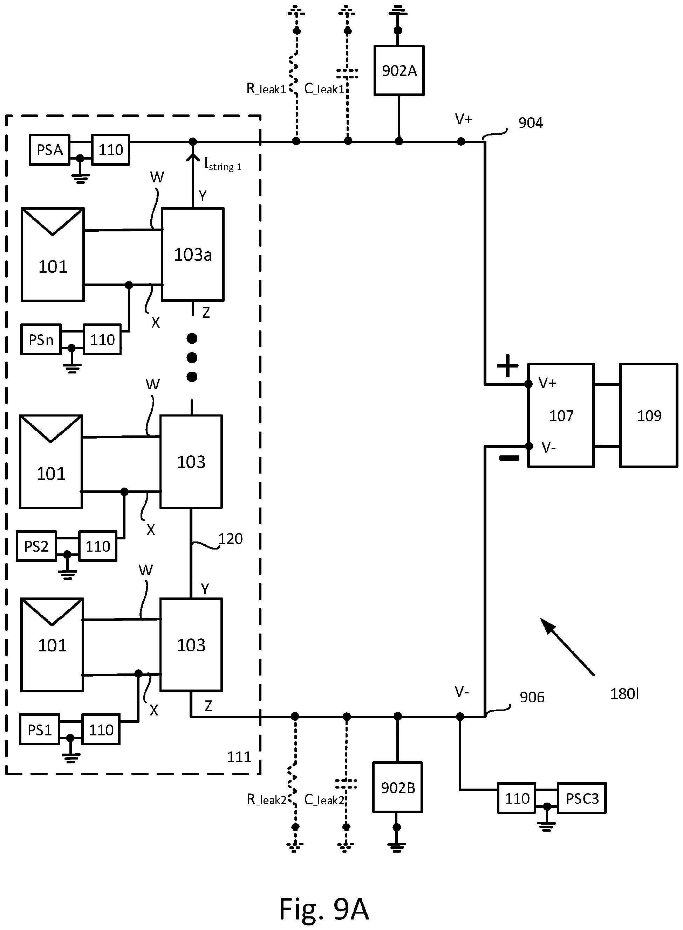

Reference is now made to **Fig. 9A**, which shows a power system **180l**, according to illustrative aspects of the disclosure. Power system **1801** may include one or more discharge circuits **902A, 902B** for discharging a voltage due to a parasitic capacitance of one or more of power sources **101** and/or other elements of power system **180l** (e.g., one or more power devices **103**).

Power sources **101** and/or other elements of power system **1801** may have a parasitic capacitance with respect to ground, due to one or more factors, for example: a liquid, e.g. water, being on a surface of the power source **101** and/or other elements of power system **180l**, the material from which the power sources **101** and/or other elements of power system **1801** are made, the proximity of the power sources **101** and/or other elements of power system **1801** to the ground, etc. This parasitic capacitance may be charged by a capacitive leakage current due to voltage present across power sources **101** (e.g., voltage imposed across power sources **101** by system power device **107**, or by converter 110, or voltage created by irradiance of solar panels used as power sources **101**). When converter **110** is applying a voltage on a terminal (e.g. terminal **V+**, terminal **V-**, etc.), either during the day or at night, then a capacitive leakage current may create a voltage potential due to the parasitic capacitance, illustrated here as one or more parasitic capacitor(s) **C_leak1**, **C_leak2**. The parasitic capacitors **C_leak1**, **C_leak2** may represent total capacitance of parasitic capacitors of one or more power modules **101** and/or other elements of power system **1801** reflected to capacitance at the input terminals of system power device **107.** This charging of parasitic capacitor(s) **C_leak1**, **C_leak2** may be undesirable since it not only redirects a portion of current flowing through series string 111, but also generates a voltage potential across the parasitic capacitors, that may be harmful to someone who comes in contact with the power system **1801.**

For example, without this voltage potential being discharged by discharge circuitry **902A, 902B**, if a person were to come in contact with this voltage potential then it could cause a current to flow through that person, potentially harming that person. The higher the voltage being applied by converter **110** to the terminal/power system, the greater the capacitive leakage current. The greater the capacitive leakage current, the greater the voltage potential due to the parasitic capacitance. The greater the voltage potential due to the parasitic capacitance, the greater the potential danger to a person who comes in contact with that voltage potential. Therefore, discharge circuitry **902A, 902B** may be configured to discharge the voltage potential due to the parasitic capacitance, in order to prevent harm that may be caused by that voltage potential. Additionally, discharge circuitry **902A, 902B** may be configured to discharge the voltage potential due to the parasitic capacitance relatively quickly, as detailed below.

In some cases, the voltage potential due to the parasitic capacitance may be about the same voltage value as the voltage applied on the DC bus terminal (e.g., terminal V+ on DC+ bus **904**, terminal V- on DC- bus **906**) by converter **110** (for example, about hundreds of volts, e.g., about 700 - 900 volts).

The discharge circuitry **902A, 902B** may be configured to operate based on and/or in response to one or more indications that a discharge is required. Examples of these indications will be described below. Based on and/or in response to the one or more indication(s), the discharge circuitry **902A, 902B** may switch/actuate/activate switching circuitry, e.g., including at least one discharge switch, thereby dissipating/discharging the "parasitic capacitor(s)" voltage to the ground/earth potential. Examples of discharge circuitry **902A, 902B** including at least one discharge switch are described in detail below.

Although illustrated externally from system power device **107** and/or converter **110**, in some cases discharge circuitry **902A, 902B,** or at least some particular elements of discharge circuitry **902A, 902B,** may be physically and/or functionally part of system power device **107** and/or converter **110.**

In some cases, the applying of voltage on the DC bus terminal by converter **110** or by system power device **107** may be stopped based on and/or in response to the one or more indications that discharge should be performed, and vice versa.

In cases where the power system has both a day mode of operation and a night mode of operation, then discharge may be performed in either mode of operation.

In some cases, discharge may be performed automatically based on certain indications. For example, discharge may be performed automatically when the power system switches between different modes of operation (e.g. between day mode to night mode and vice versa). As another example, discharge may be performed automatically periodically after a particular time interval.

In some cases, after an indication related to discharge is received then discharge might not be performed automatically, rather discharge may only be performed after a determination related to discharge is made. In some cases, the determination may be based on one or more subsequent indications. For example, if one or more first indication(s) for discharge is obtained (e.g., an indication that the power system is changing modes of operation and/or an indication that a particular time interval has passed), then power system may obtain one or more second indication(s) (e.g., one or more electrical parameter(s), such as, voltage, differential voltage, current, power, etc.), and a determination related to discharge may be made based on the one or more second indication(s). As an example, if one or more first parameter(s) indicates that the power system is changing between a day mode of operation and a night mode of operation, and one or more second parameter(s) indicates that a voltage is above a particular threshold, then a positive determination related to discharge may be made, and discharge may be performed.

In addition to the parasitic capacitance there may also be parasitic resistance between power sources **101** and/or other elements of power system **180l** and ground, illustrated here as one or more parasitic resistor(s) reflected to input terminals of system power device **107**, **R_leak1, R_leak2.** The parasitic resistors **R_leak1, R_leak2** may contribute to leakage current of the power system. The parasitic resistors **R_leak1, R_leak2** may discharge at least some of the voltage potential of the power system. Similar to the parasitic capacitance, the parasitic resistance may be undesirable since it may redirect a portion of current flowing through the power system.

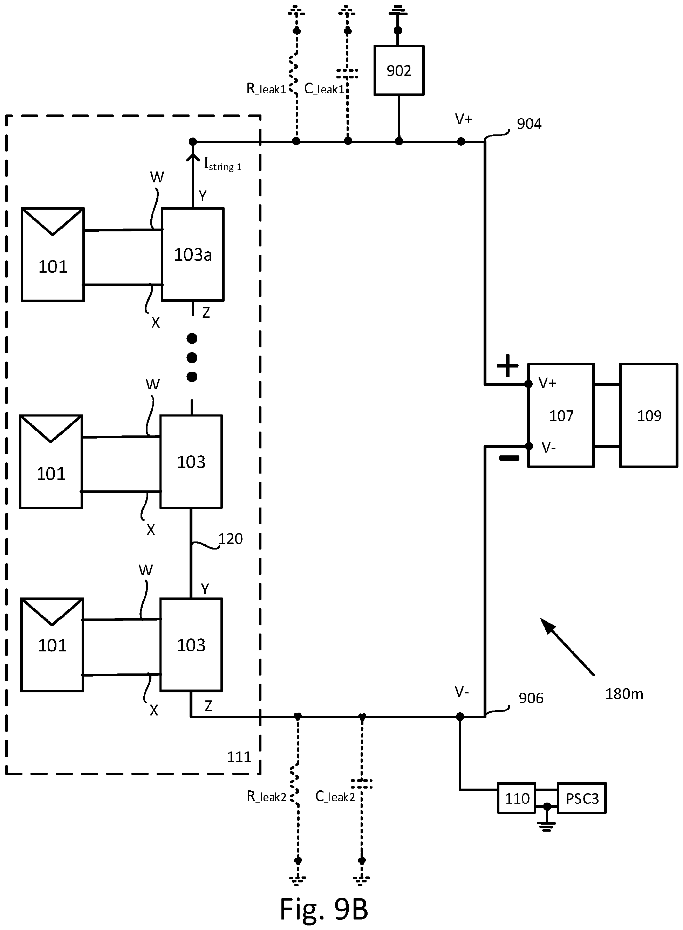

Reference is now made to **Fig. 9B**, which shows a power system **180m,** according to illustrative aspects of the disclosure. Power system **180m** is similar to power system **180l**, except that the wiring configuration **111** of power system **180m** does not include a plurality of power supplies **PS** and converters **110.** Rather, in this case, there is a single converter **110** and power supply **PSC3** for applying voltage on a terminal of the power system **180m,** e.g. terminal **V-** on the DC- bus **906.**

As further detailed below, the plurality of converter(s) **110**, and optionally the power suppl(ies) **PS**, of power system **180l** may be considered voltage-applying circuitry. In the case of power system **180m** the voltage-applying circuitry may be considered to include the single converter **110**, and, optionally, the power supply **PSC3.**

Also, in this case, there is a single discharge circuit **902** configured to discharge a voltage potential due to parasitic capacitance. Discharge circuit **902** may be connected to a terminal. In some cases, the discharge circuitry **902** may be connected to the DC+ bus and/or the DC- bus. If connected to the DC+ bus **904** then the discharge circuitry **902** may be configured to discharge the voltage potential of the power system due to parasitic capacitance on the DC+ bus and the DC- bus (e.g., due to parasitic capacitors **C_leak1, C_leak2).** In the example illustrated in **Fig. 9B**, discharge circuitry **902** may be connected to terminal **V+** on the DC+ bus **904** between the PV modules and the inverter on the DC+ side.

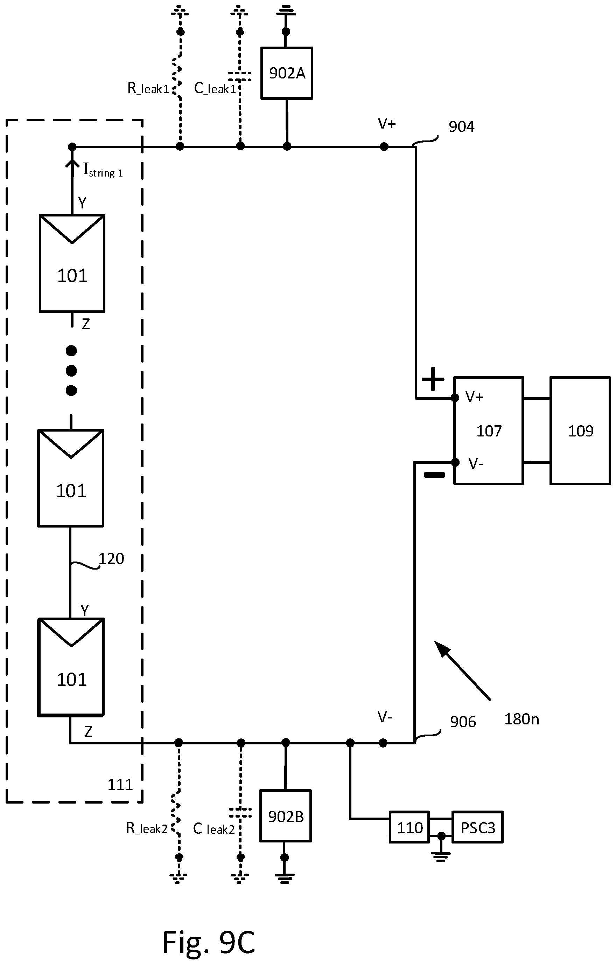

Reference is now made to **Fig. 9C**, which shows a power system **180n,** according to illustrative aspects of the disclosure. Power system **180n** is similar to power systems **1801, 180m,** except that the wiring configuration **111** of power system **180n** includes a string of power sources **101** that is directly connected to a system power device **107** without each power source **101** also being connected to a respective power device **103.** The power sources **101** of the string may be a plurality of PV modules connected to each other in a series connection. In some cases the power system may alternatively or additionally have a plurality of PV modules connected to each other in a parallel connection. In some cases the power system may have a plurality of series strings of power sources **101.**

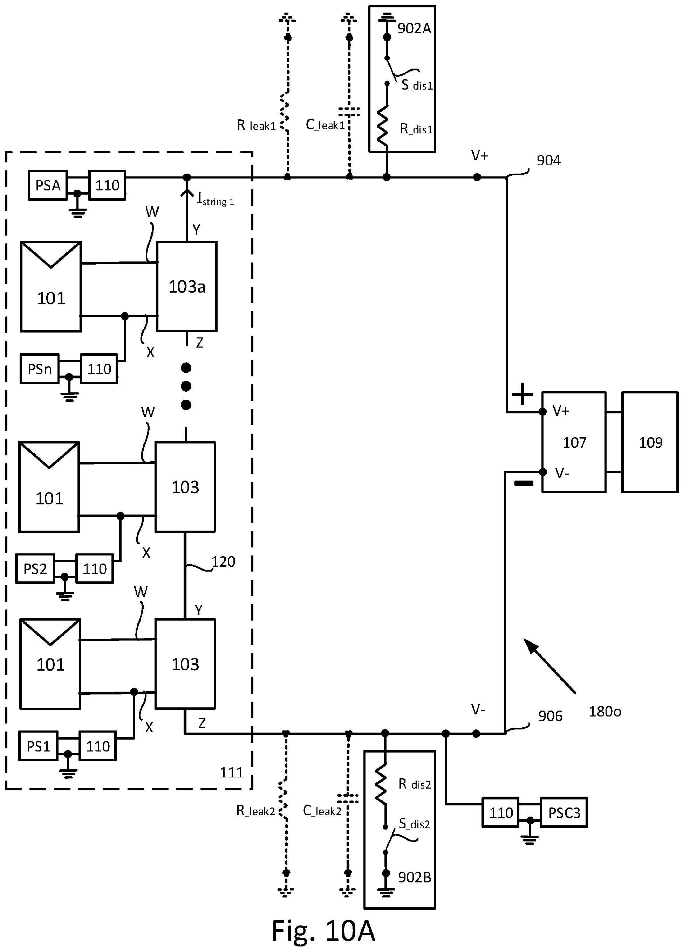

Reference is now made to **Fig. 10A****,** which shows a power system **180o,** according to illustrative aspects of the disclosure. Power system **180o** is similar to power system **1801,** with each discharge circuit **902A, 902B** of power system **180o** illustrated as including at least one discharge switch **S_dis1, S_dis2** and at least one discharge resistor **R_dis1, R_dis2,** configured to discharge the voltage due to parasitic capacitance. According to additional features of the disclosure herein, additional or alternative elements may be used to implement discharge circuits **902A, 902B.**

As an example, the at least one discharge switch (e.g., discharge switch **S_dis1, S_dis2)** may be one or more: FET, MOSFET, reed relay, etc.

In this case, in response to the one or more indication(s) that a discharge is required, one or more of the discharge circuits may switch/actuate/activate (e.g., using a controller, not explicitly depicted, configured to control the discharge circuits) the at least one discharge switch **S_dis1, S_dis2** and connect the at least one discharge resistor **R_dis1, R_dis2** between the DC+ bus **904** and/or the DC- bus **906** and the ground/earth potential, thereby dissipating/discharging the "parasitic capacitor(s)" voltage by causing current to flow through the at least one discharge resistor **R_dis1, R_dis2** to the ground/earth potential.

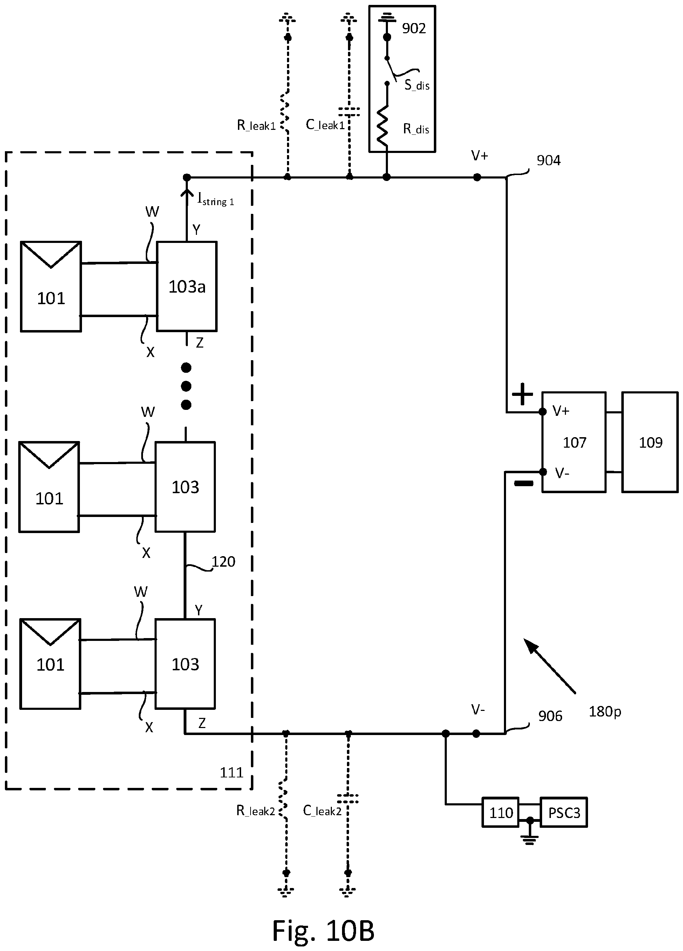

Reference is now made to **Fig. 10B**, which shows a power system **180p,** according to illustrative aspects of the disclosure. Power system **180p** is similar to power system **180o,** except that the wiring configuration **111** of power system **180p** does not include a plurality of power supplies **PS** and converters **110.** Rather, in the example system shown in **Fig. 10B**, the voltage-applying circuitry may include a single converter **110** and power supply **PSC3** for applying voltage on a terminal of the power system **180p,** e.g. terminal **V-** on the DC- bus. Also, in this case, there is a single discharge circuitry **902** connected to a terminal of the power system **180p,** e.g. terminal **V+.**

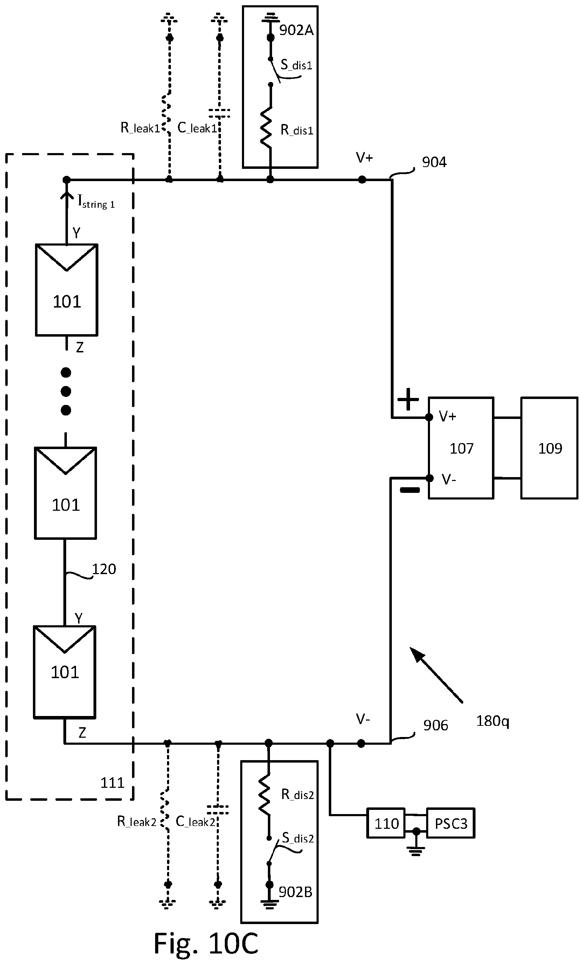

Reference is now made to **Fig. 10C**, which shows a power system **180q**, according to illustrative aspects of the disclosure. Power system **180q** is similar to power systems **180o**, **180p,** except that the wiring configuration **111** of power system **180q** includes a string of power sources **101** that is directly connected to a system power device **107** without also being connected to power devices **103.** The power sources **101** of the string may be a plurality of PV modules connected to each other in a series connection. In some cases, the power system may alternatively or additionally have a plurality of PV modules connected to each other in a parallel connection. In some cases the power system may have a plurality of series strings of power sources **101.**

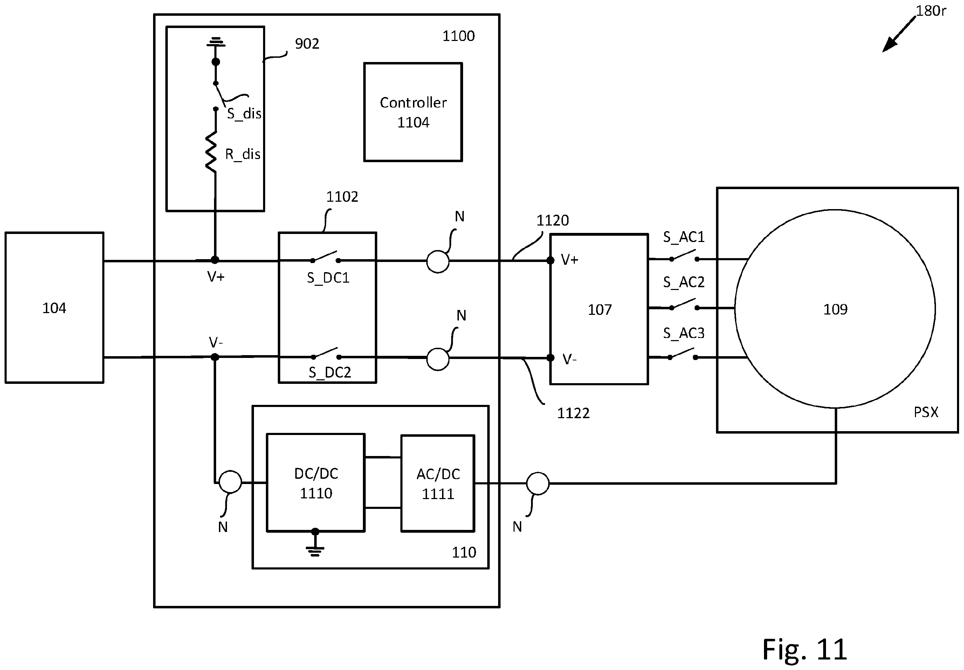

Reference is now made to **Fig. 11**, which shows a power system **180r,** according to illustrative aspects of the disclosure. Power system **180r** may include circuitry **1100** connected between one or more power sources **104** and one or more system power devices **107.** Power source **104** may be similar to power source **101,** and/or may be a power source **101** together with a system power device **103.**

Although illustrated externally from the one or more system power devices **107,** in some cases circuitry **1100** or at least some particular elements of circuitry **1100** may be physically and/or functionally part of the one or more system power devices **107.**

Circuitry **1100** may include switching circuitry **1102** connected between one or more power sources **104** and one or more system power devices **107.** Circuitry **1100** may also include a converter **110** and discharge circuitry **902.** System power devices **107** may include a DC/AC converter, and be connected to an electrical grid **109** by one or more switches (e.g., relays) **S_AC1, S_AC2, S_AC3.** In the example shown in **Fig. 11**, system power device **107** may include a three-phase DC/AC converter configured to receive a DC voltage input at input terminals, and output a three-phase AC voltage output on three output terminals, that are connected to electrical grid 109 via switches **S_AC1, S_AC2, S_AC3.**

Switching circuitry **1102** may be configured to disconnect the one or more system power devices **107** from the one or more power sources **104.** Switching circuitry **1102** may include one or more switches (e.g., relays) **S_DC1, S_DC2.** For example, switching circuitry **1102** may include a first switch **S_DC1** connected on a positive part of the DC bus between one or more power sources **104** and one or more system power devices **107** (e.g., the DC+ bus **1120),** and a second switch **S_DC2** connected on a negative part of the DC bus between the one or more power sources **104** and the one or more system power devices **107** (e.g., the DC- bus **1122**).

Converter **110** is configured to convert an input voltage from a power supply **PSX** to another output voltage. Converter **110** is configured to apply the converted output voltage to a terminal, in this case terminal **V-** on the DC- bus. In this case the power supply **PSX** may be an external AC power supply, such as grid **109.** In other cases the power supply **PSX** may be a separate power source **101/104,** and/or a storage device, such as a battery.

Converter **110** may include an AC to DC converter **1111** and a DC to DC converter **1110.**

AC to DC converter **1111** may be configured to convert an AC voltage (e.g., received from grid 109) to a DC voltage. AC to DC converter **1111** may be connected between the power supply **PSX**/grid **109** and the DC to DC converter **1110.** AC to DC converter **1111** may be configured to convert an input AC voltage from the power supply **PSX**/grid **109** to an output DC voltage, and to provide that converted output DC voltage as an input DC voltage to the DC to DC converter **1110.**

DC to DC converter **1110** may be configured to convert a first DC voltage to a second DC voltage, and to apply the second DC voltage to a terminal. In some cases, DC to DC converter **1110** may be a boost converter configured to convert a first lower DC voltage to a second higher DC voltage. DC to DC converter **1110** may be connected between the AC to DC converter **1111** and the terminal **V-.** DC to DC converter **1110** may be configured to convert a first, lower input DC voltage from the AC to DC converter **1111** to a second, higher output DC voltage, and to provide that converted higher output DC voltage to terminal **V-**, e.g. to help reverse/counteract/alleviate/prevent the effects of potential induced degradation (PID) on the power system **180r**, either during the day or at night.

In some cases, converter **110** may be configured to apply a relatively lower output voltage to **V-** during the day, and to apply a relatively higher output voltage to **V-** during the night.

As a non-limiting numerical example, AC to DC converter **1111** may be configured to convert an AC voltage to a lower DC voltage value of about tens of volts (e.g. about 10-12 volts), and DC to DC **1110** converter may be configured to convert the lower DC voltage value to a higher DC voltage value of about hundreds of volts (e.g. about 800-900 volts).

As another non-limiting numerical example, AC to DC converter **1111** may be configured to convert an AC voltage to a lower DC voltage value of about tens of volts (e.g. about 1-10 volts), and DC to DC converter **1110** may be configured to convert the lower DC voltage value to a higher DC voltage value of about tens of volts to about hundreds volts (e.g. about 10-150 volts).

According to the above examples, the output DC voltage applied by converter **110** to terminal **V-** may be higher at night (e.g. about 800-900 volts) than during the day (e.g. about 10-150 volts, which may be to ensure that the voltage in the power system does not fall below about 0 volts with respect to ground).

Power system **180r** may include one or more sensors **N.** Sensors **N** may be used to help determine one or more parameter indicative of whether discharge should be performed. Sensors **N** may include, for example: a clock, a timer, a motion sensor, a magnetic sensor, a proximity sensor, a motion sensor, an irradiance sensor, a temperature sensor, a current sensor, a voltage sensor, a power sensor, etc.

In some examples, power system **180r** may include one or more controller(s) **1104.** In some cases one or more controller(s) **1104** may be part of the discharge circuitry **902.** In some cases one or more controller(s) **1104** may be internal to one or more elements of power system **180r**, for example: circuitry **1100**, system power device(s) **107**, discharge circuitry **902** etc. In some cases, one or more controller(s) **1104** may be separate elements, external to other elements of power system **180r.** For the sake of simplicity, the connections between the one or more controller(s) **1104** and other elements of power system **180r** (e.g. discharge circuitry **902**, system power device(s) **107**, sensors **N**, etc.) are not illustrated in **Fig. 11****.** It will be appreciated that in some examples the other elements and/or one or more different controller(s) **1104** of power system **180r** may be communicatively and/or operably connected to one or more other controller(s) **1104.** As an example, sensors **N** may provide data (including one or more parameter) to one or more controller(s) **1104.**

The one or more controller(s) **1104** may be configured to receive and/or transmit instructions as signals/commands to and/or from one or more other elements of the power system. The one or more controller(s) **1104** may include one or more processors/processing circuits and memory configured to access data and make determinations/calculations/computations.

Sensors **N** may be connected to the one or more controller(s) **1104.** The one or more controller(s) **1104** may be configured to use one or more indication(s)/parameter(s), e.g., obtained from the one or more switches and/or the one or more sensor(s), to make a determination regarding discharge. The one or more controller(s) **1104** may also be communicatively and/or operatively connected to the discharge circuitry **902.** The one or more controller(s) **1104** may be configured to generate one or more commands relating to discharge.

Discharge circuitry **902** may be configured to discharge an electrical potential that built up due to parasitic capacitance. Discharge circuitry **902** may be connected to a terminal. As mentioned above, in some cases, the discharge circuitry **902** may be connected to the DC+ bus and/or the DC- bus. In the example illustrated in **Fig. 11**, discharge circuitry **902** is connected to terminal **V+** on the DC+ bus **1120.**

Discharge circuitry **902** may include at least one discharge switch **S_dis** and at least one discharge resistor **R_dis.** In this case, at least one discharge resistor **R_dis** may be connected between terminal **V+** and at least one discharge switch **S_dis.** At least one discharge switch **S_dis** is also connected to a ground/earth potential. In other cases, at least one discharge switch **S_dis** may be connected between terminal **V+** and at least one discharge resistor **R_dis**, and at least one discharge resistor **R_dis** may also be connected to a ground/earth potential.

As mentioned above, discharge circuitry **902** may be configured to perform discharge based on and/or in response to one or more indications that discharge should be performed.

For example, the one or more controller(s) **1104** may be configured to generate one or more commands relating to actuating at least one discharge switch **S_dis** and discharging a voltage potential via the at least one discharge resistor **R_dis.** The command may be generated based on and/or in response to one or more indications/parameters, and the voltage potential may be a voltage potential due to parasitic capacitance.

In some cases, the one or more indications that discharge should be performed may be determined by the one or more controller(s) **1104** based on and/or in response to one or more parameter(s)/data obtained by one or more sensors.

The one or more indications that discharge should be performed may include, for example: an indication that at least one switch has been turned off, an indication that at least one system power device **107** has been turned off, an indication that voltage-applying circuitry has been turned off, an indication that the voltage applied by voltage-applying circuitry has been increased/decreased, an indication that a cover of a housing has been unlocked/removed, etc.

The housing may be a box, case, casing, etc., configured to house circuitry. The housing may be configured to protect the housed circuit from external elements, and to protect a person from coming in contact with the circuitry. The housing may include a lockable and removable cover that allows at least partial access to the circuitry. The cover of the housing may be unlocked/removed by a person, e.g. by a maintenance worker, who is trying to access the circuitry.

The housing may contain at least one of, for example: circuitry **1100**, voltage-applying circuitry, converter **110**, switching circuitry **1102**, discharge circuitry **902,** system power device(s) **107**, etc.

Voltage-applying circuitry may include converter **110.** Voltage-applying circuitry may also include a power supply for converter **110.** In some cases the power supply may be a power source **101/104**, and/or a storage device, such as a battery.

An indication that at least one switch has been turned off may be an indication that at least one DC switch has been turned off, and/or an indication that at least one AC switch has been turned off. A DC switch may be a switch connected to a line that is connected to a DC source. In some examples, a DC switch may be a switch configured to connect circuitry (e.g., circuitry **1100**) to a DC power source or a DC load. An AC switch may be a switch connected to a line that is connected to an AC source or to an AC load (e.g., an electrical grid).

In some cases one or more switch (or an element for actuating the one or more switch) may be located on an exterior of the housing. In other cases the one or more switch (or an element for actuating the one or more switch) may be located in an interior of the housing.

The indication that a DC switch has been turned off may be related to the actuation of the switches **S_DC1, S_DC2** that connect the circuitry **1100** to the system power device(s) **107**, e.g., an indication that switches **S_DC1, S_DC2** have been turned off, disconnecting the inverter(s) **107** from the power source(s) **104** and converter **110.** In such a case, converter **110** may continue to operate. Therefore, in this case, even though the inverter(s) **107** have been disconnected from the power source(s) **104**, converter **110** may still be connected to power source(s) **104.** Accordingly, a voltage potential in power system **180r,** may be relatively high (e.g., about hundreds of volts), and a discharge of the voltage potential using discharge circuitry **902** may be desired/required. In some examples, when the DC switch (e.g., switch **S_DC1** or **S_DC2)** is turned off, the sensor **N** (e.g., a current sensor) connecting the DC switch to the corresponding terminal (V+ or V-) of the inventor **107** may detect that no current flows between the DC switch and the corresponding terminal (V+ or V-) of the inventor **107.** Accordingly, the sensor **N** may provide an indication that the DC switch has been turned off. In other cases sensor **N** may be one or more other sensor(s), e.g., voltage sensor, power sensor, proximity sensor, etc., that is configured to detect when the DC switch is turned off (e.g., senses no/less voltage, senses no/less power, senses a part of the switch has been physically moved, etc.) and to provide an indication that the DC switch has been turned off.

The indication that an AC switch has been turned off may be related to the actuation of the switches **S_AC1, S_AC2, S_AC3** that connect the system power device(s) **107** to the grid **109**, e.g., an indication that switches **S_AC1, S_AC2, S_AC3** have been turned off, disconnecting the one or more inverter(s) that may be included in system power device **107** from the grid **109.** In such a case, converter **110** may continue to operate. In this case, even though one or more inverter(s) of system power device(s) **107** have been disconnected from the grid **109**, inverter(s) of system power device(s) **107** and converter **110** may still be connected to power source(s) **104.** Accordingly, a voltage potential in power system **180r**, may be relatively high (e.g., about hundreds of volts), and a discharge of the voltage potential using discharge circuitry **902** may be desired/required. In some examples, one or more sensors **N** may be configured to detect when an AC switch has been turned off and to provide an indication that the AC switch has been turned off.

An indication that a system power device **107** has been turned off may be related to the shutting down of one or more inverter(s) that may be part of system power device **107.** For example, this may be related to the actuation of switches **S_DC1, S_DC2** and switches **S_AC1, S_AC2, S_AC3**, e.g., an indication that all of these switches have been turned off, disconnecting the inverter(s) of system power device(s) **107** from both the power source(s) **104** and the grid **109.** In some cases, the inverter(s) of system power device(s) **107** may be turned off manually (e.g. using a button, lever, rotary switch mechanism, or other appropriate mechanism on the body of the inverter). In some cases, the inverter(s) of system power device(s) **107** may be turned off remotely (e.g. using an application on a mobile device that enables communicative and operative connection between the mobile device and the inverter). In some examples, one or more sensors **N** may be configured to detect when a system power device **107** has been turned off and to provide an indication that the system power device **107** has been turned off.

An indication that the voltage-applying circuitry has been turned off may be related to an indication that converter **110** has been turned off/shut down. The indication that the voltage-applying circuitry has been turned off may be related to the connection of the voltage-applying circuitry/converter **110** to the power supply **PSX**/grid, e.g., an indication that the converter **110** has been disconnected from the power supply **PSX**/grid **109.** In this case, even though the converter **110** has been disconnected from the power supply **PSX**/grid **109**, a voltage potential in power system **180r,** may be relatively high (e.g., about hundreds of volts), and a discharge of the voltage potential using discharge circuitry **902** may be desired/required. This relatively high voltage potential may be due to parasitic capacitance. In some examples, one or more sensors **N** may be configured to detect when the voltage-applying circuitry has been turned off and to provide an indication that the voltage-applying circuitry has been turned off.

An indication that the voltage applied by voltage-applying circuitry has been increased/decreased may be related to an indication that the output voltage of converter **110** has been increased/decreased. The indication that the voltage-applying circuitry has been increased/decreased may be related to the changing of a mode of the voltage-applying circuitry (e.g. from night mode to day mode or vice versa). In this case, even though the voltage being applied by converter **110** has been decreased, a voltage potential in power system **180r,** may be relatively high (e.g., about hundreds of volts), and a discharge of the voltage potential using discharge circuitry **902** may be desired/required. This relatively high voltage potential may be due to parasitic capacitance. Aside from the possible danger of this voltage potential, this relatively high voltage potential may also affect the operation of the power system when it changes modes of operation, e.g. from night mode to day mode, as detailed below. In some examples, one or more sensors **N** may be configured to detect when the voltage applied by voltage-applying circuitry has been increased/decreased and to provide an indication that the voltage applied by voltage-applying circuitry has been increased/decreased.

In some cases, the discharge circuitry **902** may be tested before the power system changes between modes of operation (e.g. between night mode and day mode, and vice versa, or between production mode and non-production mode, and vice versa) to help ensure that the discharge circuitry **902** is capable of performing discharge properly.

An indication that the voltage-applying circuitry has been turned off/the applied voltage has been increased/decreased may be based on and/or in response to one or more parameter. The parameter may indicate that the PV module is producing power above a particular threshold, e.g., since the sun is up and out (i.e., the PV modules are exposed to sunlight). The parameter may indicate that the PV module is not producing power above a particular threshold, e.g., since the sun is down and away (i.e., the PV modules are no longer exposed to sunlight). The one or more parameter may be, for example, at least one of: an electrical parameter indicating that the power source **101/104** is producing power, an electrical parameter indicating that the power source **101/104** is not producing power, a time based parameter indicating a particular time of day (e.g. morning/daytime), etc.

The electrical parameter may be one or more of, for example: voltage, current, power, etc. In some examples, the electrical parameter may be sensed by a voltage sensor, a current sensor, or a power sensor that detects voltage, current, or power produced by the power source **101/104.**

The time based parameter may be one or more of, for example: a time of day, hours, minutes, seconds, etc. In some examples, the time based parameter may be sensed by a timer or a clock.

In some examples, an irradiance sensor may detect the amount of sunlight to which a PV module is exposed. Based on the detected amount of sunlight, the irradiance sensor may provide a parameter indicating whether the PV module is producing power above or below a particular threshold. In other examples, a determination related to the time of day (e.g., morning or night) may be made based on the amount of sunlight to which a PV module is exposed. In either case, the mode of operation of the power system may be maintained or changed based on the detected amount of sunlight (e.g., change from day mode to night mode, or vice versa).

The indication that a cover of a housing of the voltage-applying circuitry has been unlocked/removed may be related to the unlocking and/or removal of a cover that houses circuitry. The housing may include a locking mechanism that secures the cover to the housing. The locking mechanism that secures the cover to the housing may be mechanical and/or magnetic. The locking mechanism may include one or more securing element(s), such as, a latch, spring, magnet, etc., for securing the cover of the housing in a particular position and/or orientation when locked to the housing.

One or more sensors, e.g., of sensors **N**, may sense one or more parameter(s) and/or provide one or more indication(s) that the cover has been unlocked and/or removed from the housing. The sensors may include at least one of, for example: a magnetic sensor, a motion sensor, a proximity sensor, etc.

An indication that a cover of a housing of the voltage-applying circuitry has been unlocked/removed may be particularly useful for example in a case where power system **180r**/circuitry **1100** does not include one or more of the elements illustrated in the example of **Fig. 11****.** For example, in a case where power system **180r**/circuitry **1100** does not include DC switches, **S_SDC1, S_DC2**, then sensors and/or a mechanical lock mechanism may help indicate that the housing was unlocked/opened and that discharge should be performed.

The one or more indications related to discharge may indicate that a person (e.g., an installer, system owner or system maintainer) is intending to perform maintenance on the power system, and therefore may come into contact with an element of the power system that is connected to the voltage potential due to the parasitic capacitance. That person might assume that there is no danger to themselves since they performed a shutdown of one or more elements of the power system (e.g., they turned off a DC switch, and/or an AC switch of the inverter, thereby possibly disconnecting the system power device from the AC grid and/or a high DC voltage connected between input terminals on the system power device). That person might not realize there may be additional voltage between each input terminal and ground, due to the parasitic capacitance, that needs to be discharged. The present subject matter addresses this additional voltage due to the parasitic capacitance, and the danger that it presents, by discharging this additional voltage using the discharge circuitry.

The one or more indications related to discharge may indicate that the power system is going to change/is changing from one mode of operation to another mode of operation. When the power system is going to change/is changing from one mode of operation to another, it may be helpful to discharge the additional voltage due to the parasitic capacitance so that that additional voltage does not affect the performance of the power system in the subsequent mode of operation.

As an example, if a relatively high voltage (e.g. about hundreds of volts) is applied in a nighttime mode of operation to counter/reverse the effects of PID on the power system that occurred during the day, then this applied voltage may cause a relatively high voltage potential (e.g. also about hundreds of volts) between terminals of system power device 107 and ground, due to the parasitic capacitance. Besides posing a potential safety risk, this relatively high voltage potential due to the parasitic capacitance may affect the operation of the power system if the power system switches to a daytime mode of operation and the voltage potential due to the parasitic capacitance is not discharged.

For example, in the case above, if about 800-900 volts were applied during a nighttime mode of operation, then there may be a relatively high voltage potential of about 800-900 volts due to the parasitic capacitance. In the daytime mode of operation about 10-150 volts will be applied by the voltage-applying circuitry/converter. However, if the power system switches to the daytime mode of operation before discharge is performed, then there may be a total voltage of about 810-1050 volts (the about 10-150 volts applied by the voltage-applying circuitry/converter + the voltage potential of about 800-900 volts due to the parasitic capacitance = about 810-1050 volts). Not only does this additional voltage present a potential danger, but it may also adversely affect the operation of the power system in the daytime mode of operation (e.g., since the power system expects to see an increase of about 10-150 volts, and not an increase of about 810-1050 volts, which may adversely affect one or more control systems/controllers/control loops of the power system, and may lead to damage to components and/or a shut-down of the system).

The discharge circuitry may be configured to perform discharge of a relatively high voltage in a relatively short period of time. The discharge circuitry may be configured to perform discharge in about a particular range of time or less than about a particular threshold of time (for example, about tens of seconds, e.g., about 30 seconds).

The discharge being relatively rapid may reduce the danger to someone who may need to perform maintenance on the system, thereby increasing the safety of someone who may need to work on the system.

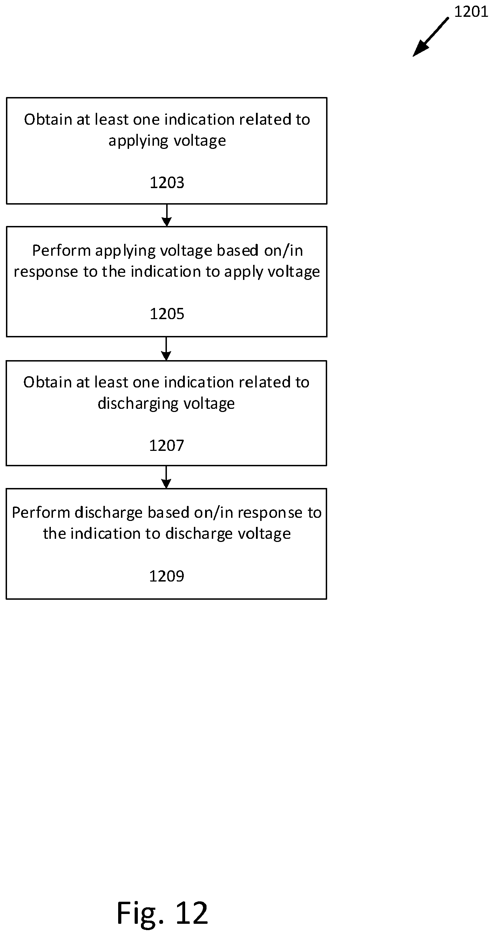

Reference is now made to **Fig. 12****,** which shows a flowchart of a method **1201** according to illustrative aspects of the disclosure. For example, method **1201** may be applied to one or more of power systems **180m, 180n, 180p 180q, 180r** of **Figs. 9A -11** in the description that follows. As an example, steps of method **1201** may be implemented by one or more controller(s) **1104** of system power devices **107** and/or converters **110.** For example, one or more of the controller(s) **1104** may be acting as a primary controller.

At step **1203,** at least one indication related to applying voltage may be obtained.

For example, at step **1203,** an indication may be obtained by one or more controller(s) **1104**/converter **110.** The indication may be related to a parameter related to the power system. The parameter may be, for example: an electrical parameter, an irradiance parameter, a time parameter, etc.

In some cases the indication may be related to starting to apply voltage using the voltage-applying circuitry/converter **110.** For example, the voltage-applying circuitry/converter **110** might not operate at all in the daytime (e.g. while the sun is out and/or the power source(s) are producing power greater than a particular threshold), and the indication may be indicative that it is nighttime (e.g. the sun is not out and/or the power source(s) are not producing power greater than a particular threshold), and the voltage-applying circuitry/converter **110** should begin operating to help alleviate/counteract/reverse the effects of PID that may have affected the one or more power source(s) **101/104** during the day.

In some cases the indication may be related to increasing the voltage applied by the voltage-applying circuitry/converter **110.** For example, the voltage-applying circuitry/converter **110** may operate in a daytime mode of operation where a relatively lower voltage (e.g. about 10-150 volts) is applied at a terminal of the power system during the daytime to help prevent/alleviate/counteract the effects of PID, and the indication may be indicative that it is nighttime and the voltage-applying circuitry/converter **110** should switch to a nighttime mode of operation where a relatively higher voltage (e.g. about 800-900 volts) is applied at a terminal of the power system during the nighttime to help alleviate/counteract/reverse the effects of PID.

At step **1205**, the voltage may be applied.

For example, at step **1205**, one or more controller(s) **1104** may generate and send an instruction/signal to voltage-applying circuitry/converter **110** based on and/or in response to the indication related to applying voltage. The instruction/signal may be related to applying voltage at a terminal of the power system, e.g. terminal **V-.** Based on and/or in response to the instruction/signal related to applying voltage, the voltage-applying circuitry/converter **110** may apply voltage accordingly.

For example, if the instruction/signal is to begin applying voltage, then the voltage-applying circuitry/converter **110** may start to apply voltage at the terminal accordingly.

As another example, if the instruction/signal is to apply a greater voltage (e.g. to operate in a nighttime mode of operation), then the voltage-applying circuitry/converter **110** may begin to apply a greater voltage at the terminal accordingly (e.g. greater than the voltage applied in a daytime mode of operation).

At step **1207**, at least one indication related to discharging voltage may be obtained.

For example, at step **1207**, an indication may be obtained by one or more controller(s) **1104**/converter **110.** The indication may be related to a parameter related to the power system. The parameter may be, for example: an electrical parameter, an irradiance parameter, a time parameter, etc.

As mentioned above, the one or more indications that discharge should be performed may include, for example: an indication that at least one switch has been turned off, an indication that at least one system power device **107** has been turned off, an indication that voltage-applying circuitry has been turned off, an indication that the voltage applied by voltage-applying circuitry has been increased/decreased, an indication that a cover of a housing has been unlocked/removed, etc. These indications were also described in greater detail above.

At step **1209**, the voltage may be discharged.

For example, at step **1209**, one or more controller(s) **1104** may generate and send an instruction/signal to discharge circuitry **902A, 902B, 902** based on and/or in response to the indication related to discharging voltage. The instruction/signal may be related to discharging voltage at at least one terminal of the power system, e.g. terminal **V+** and/or terminal **V-**. Based on and/or in response to the instruction/signal related to applying voltage the voltage-applying circuitry/converter **110** may apply discharge voltage accordingly.

For example, based on and/or in response to the instruction/signal to discharge voltage, then the discharge circuitry **902A, 902B, 902** may switch/actuate/activate switching circuitry, e.g. at least one discharge switch and at least one discharge resistor, thereby dissipating/discharging the "parasitic capacitors" voltage to the ground/earth potential, and reducing the potential danger to a person coming in contact with the power system.

As also mentioned above, performing discharge may also facilitate desired operation of the system after the switching of the power system between different modes of operation, e.g. from a nighttime mode of operation to a daytime mode of operation.

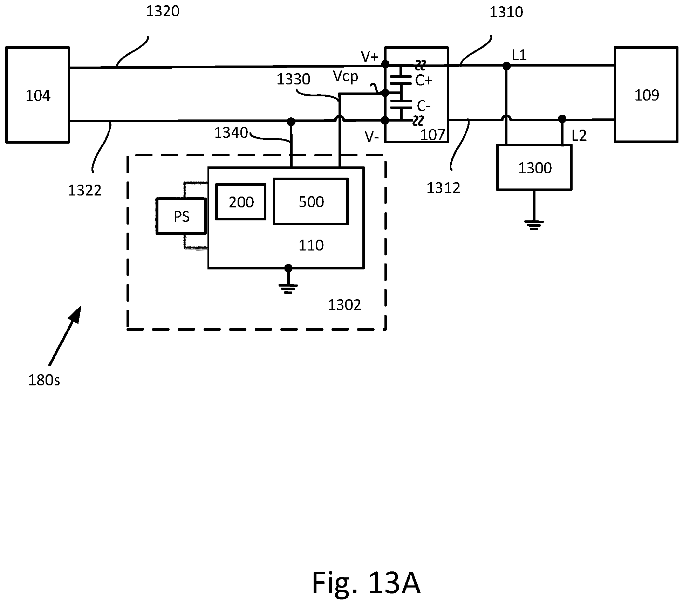

Reference is now made to **Fig. 13A**, which shows a power system **180s**, according to illustrative aspects of the disclosure. Power system **180s** may include at least one insulation monitoring device (IMD) or isometer **1300.** The IMD/isometer **1300** may be configured to measure the insulation/insulation resistance between one or more system power device(s) **107** and a ground/earth potential. IMD/isometer **1300** may be configured to generate an alert (including a visual and/or audio indication, e.g., light and/or sound) and/or to disconnect the system power device(s) **107** from the grid **109** when the insulation/insulation resistance between the system power device(s) **107** and the ground/earth potential is within about a particular range or less than about a particular threshold (for example, about tens of kilo-ohms or about hundreds of kilo-ohms, e.g. about 50 kΩ or about 100 kS2).

IMD/isometer **1300** may be connected in parallel between one or more system power device(s) **107** and the grid **109.** IMD/isometer **1300** may be connected to a first terminal, e.g., terminal **L1 on** a first bus/line **1310** between system power device(s) **107** and the grid **109**, and to a second terminal, e.g., terminal **L2** on a second bus/line **1312** between system power device(s) **107** and the grid **109.** IMD/isometer **1300** is also connected to a ground/earth potential. In some examples, there may be additional lines (not shown) between the one or more system power device(s) **107** and the grid **109.** Power system **180s** may include additional connections between IMD/isometer **1300** and the additional lines, and/or one or more additional IMD(s)/isometer(s) **1300**, for measuring insulation/insulation resistance of these lines (e.g. relative to ground/earth potential and/or relative to each other).

Power system **180s** also includes current injecting circuitry **1302.** Current injecting circuitry **1302** may include a power supply **PS** connected to a converter **110.** Power supply **PS** may be configured to provide power to converter **110.** Current injecting circuitry **1302** may include circuitry **500** configured to regulate the output of converter **110.** Circuitry **500** may include one or more sensors configured to sense/obtain one or more parameters. Converter **110** may be connected to a first terminal, e.g., a midpoint terminal **Vcp** in a system power device **107**, and to a second terminal, e.g., terminal **V-** on the DC- bus between power source(s) **104** and system power device(s) **107.**

Current injecting circuitry **1302**/converter **110** may be configured to convert an input current provided by power supply **PS** to an output current. Current injecting circuitry **1302**/converter **110** may also be configured to inject an output current/converted current at a terminal, e.g., terminal **V-.** Current injecting circuitry **1302**/converter **110** may also be configured to detect/determine a parameter related to the midpoint **Vcp** and to adjust/regulate/maintain the output current that is injected to terminal **V-** based on and/or in response to the parameter related to the midpoint **Vcp.** For example, if current injecting circuitry **1302** determines that a lower current is required/desired, then the output current may be decreased to a lower output current accordingly. Alternatively, if current injecting circuitry **1302** determines that a higher current is required/desired, then the output current may be increased to a greater output current accordingly.

Current injecting circuitry **1302** may be similar to the voltage-applying circuitry, described in detail above.

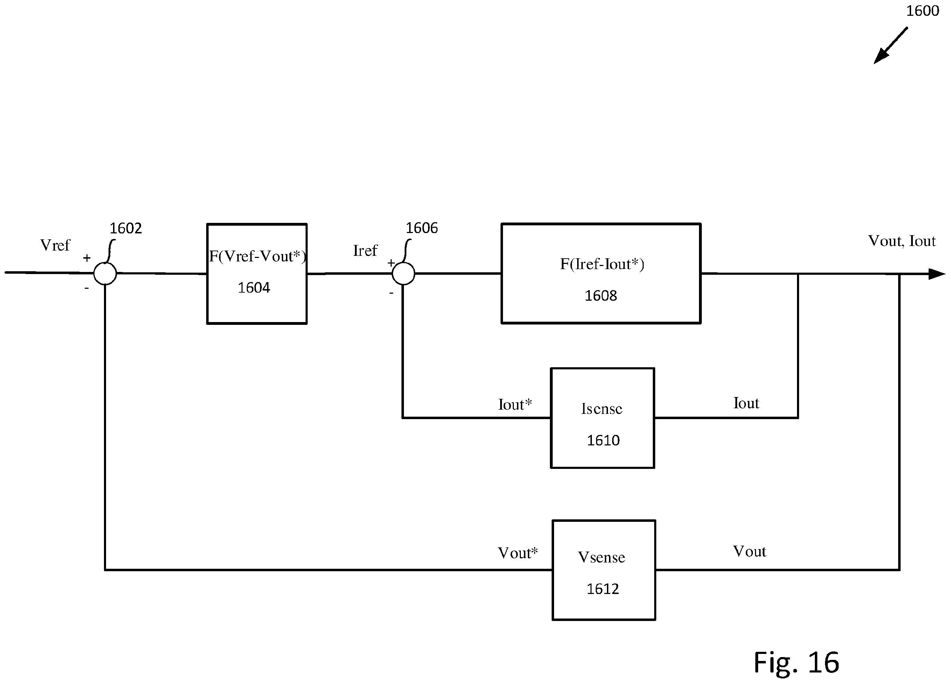

In some cases the voltage-applying circuitry/current injecting circuitry may be the same circuitry with different modes of operation. The voltage-applying circuitry/current injecting circuitry may have a voltage control mode and a current control mode. In some cases the voltage-applying circuitry/current injecting circuitry may have one or more modes of operation that are a combination of a plurality of different modes of operation (e.g., a mode with both a voltage control mode and a current control mode operating together). For example, voltage-applying circuitry/current injecting circuitry may have a cascade mode with both voltage control mode and current control mode included in a cascaded control loop structure with an inner loop and an outer loop, which will be described as follows with reference to **FIG. 16****.**

Referring to **FIG. 16**, an example control loop structure **1600** is shown, according to illustrative aspects of the disclosure. For example, control loop structure **1600** may be implemented by one or more elements of the power systems described herein (e.g., by one or more controllers, sensors, and/or voltage-applying circuitry/current injecting circuitry, etc.). In control loop structure **1600**, a summing point **1602** may subtract an obtained reference voltage Vref (and/or a value representing/related to Vref) from an obtained sensed output voltage Vout* (and/or a value representing/related to Vout*). Control operation **1604** may control the output voltage Vout and/or one or more operation related to Vout based on and/or in response to the result of Vout* subtracted from Vref (i.e., Vref-Vout*). Control operation **1604** may also output a reference current Iref (and/or a value representing/related to Iref). Summing point **1606** may subtract an obtained reference current Iref (and/or a value representing/related to Iref) from an obtained sensed output current Iout* (and/or a value representing/related to Iout*). Control operation **1608** may control the output current Iout and/or one or more operation related to Iout based on and/or in response to the result of Iout* subtracted from Iref (i.e., Iref-Iout*). The resulting output current Iout may be sensed by a current sensor **1610** and the sensed output current Iout* (and/or a value representing/related to Iout*) may be provided to summing point **1606.** The resulting output voltage Vout may be sensed by a voltage sensor **1612** and the sensed output voltage Vout* (and/or a value representing/related to Vout*) may be provided to summing point **1602.**

In control loop structure **1600** the inner loop is a current control loop and the outer loop is a voltage control loop. For example, the voltage control loop and the current control loop may operate at different frequencies/speed of change. For example, the current control loop may operate at a relatively high frequency of change relative to the frequency of the voltage control loop. If the current control loop is operating at a greater frequency than the frequency of the voltage control loop, then the control loop structure **1600** may enable the power system to relatively quickly respond to changes in current (relative to the response to changes in voltage). If the current control loop is operating at a greater frequency than the frequency of the voltage control loop, then the output current may be maintained as a relatively constant current (relative to the output voltage, which may have relatively greater changes due to the lesser speed/lower frequency of the voltage control loop relative to the current control loop).

When in a voltage control mode the voltage-applying circuitry/current injecting circuitry may behave similar to a voltage source. When in current control mode the voltage-applying circuitry/current injecting circuitry may behave similar to a current source.

In voltage control mode the voltage may be locked/controlled to be maintained about a particular value or within a range of about particular values, e.g. about 100 volts or in a range of about 50 - 150 volts.

In current control mode the current may be locked/controlled to be maintained about a particular value or within a range of about particular values, e.g. about 5 mA or in a range of about 0 - 10 mA.

In a combined mode (e.g., cascade mode with both current control and voltage control) the current may be locked/controlled to be maintained about a particular value or within a range of about particular values, e.g. about 5 mA or in a range of about 0 - 10 mA, and the voltage may be locked/controlled to be maintained about a particular value or within a range of about particular values, e.g. about 100 volts or in a range of about 50 - 150 volts. As described above, in cascade mode the current control mode/current control loop may be the dominant loop operating at a higher frequency/speed of change than the voltage control mode/voltage control loop. For example, the output current may be maintained as about a certain value, e.g. about 6 mA, without drifting too greatly from that value, whereas the output voltage may be maintained within a particular range of values, e.g., about 75 - 115 volts or about 50 -150 volts, while drifting between the particular range of values since deviations in the output voltage are dealt with less frequently/at a lesser speed (relative to deviations in the output current).

Referring back to **FIG. 13A**, the connection path (e.g., line **1330**) between the midpoint terminal **Vcp** and current injecting circuitry **1302** may be a relatively high impedance path. The connection path **1330** between the midpoint terminal **Vcp** and current injecting circuitry **1302** may be used to measure one or more parameter related to the midpoint terminal **Vcp.**

The connection path (e.g., line **1340**) between the current injecting circuitry **1302** and terminal **V-** may be used to inject current at terminal **V-.** The connection path (e.g., line **1340**) between the current injecting circuitry **1302** and terminal **V-** may be a relatively high impedance path. In some cases, the connection path **1340** between the current injecting circuitry **1302** and terminal **V-** may have a physically passive, relatively low (e.g., a resistor of relatively low resistance) impedance path (e.g., when current injecting circuitry **1302** is not operating in current control mode current may relatively easily flow along connection path **1340**). However, in operation (e.g. when current injecting circuitry **1302** is operating in current control mode), then the connection path **1340** between the current injecting circuitry **1302** and terminal **V-** may present a relatively high impedance, in order to not interfere with the operation of IMD/isometer **1300** which is measuring insulation/insulation resistance and to prevent reverse current flow into current injecting circuitry **1302.**

In some examples, power system **180s** may include one or more control unit(s)/controller(s) **200.** In some cases, the one or more control unit(s)/controller(s) **200** may be part of the current injecting circuitry **1302**/circuitry **500.** In some cases one or more control unit(s)/controller(s) **200** may be internal to one or more elements of power system **180s**, for example: circuitry **500**, system power device(s) **107**, etc. In some cases, one or more control unit(s)/controller(s) **200** may be separate elements, external to other elements of power system **180s.** For the sake of simplicity, the connections between the one or more control unit(s)/controller(s) **200** and other elements of power system **180s** (e.g. system power device(s) **107**, sensors, etc.) are not illustrated in **Fig. 13A****.** It will be appreciated that in some examples the other elements of power system **180s** and/or one or more different control unit(s)/controller(s) **200** of power system **180r** may be communicatively and/or operably connected to one or more control unit(s)/controller(s) **200.** As an example, sensors may provide data (including one or more parameter) to one or more control unit(s)/controller(s) **200.**

The one or more control unit(s)/controller(s) **200** may be configured to receive and/or transmit instructions as signals/commands to and/or from one or more other elements of the power system. The one or more control unit(s)/controller(s) **200** may include one or more processors/processing circuits and memory configured to access data and make determinations/calculations/computations.

Sensors (not illustrated in **Fig. 13A**) may be connected to the one or more control unit/controller(s) **200.** The one or more control unit(s)/controller(s) **200** may be configured to use one or more indication(s)/parameter(s), e.g., obtained from the one or more sensor(s), to make a determination regarding adjusting/maintaining the injected current. The one or more control unit(s)/controller(s) **200** may be configured to generate one or more commands relating to adjusting/maintaining the injected current.

In general, there may be an issue with having the IMD/isometer **1300** operating simultaneously while applying voltage to/injecting current at the DC bus (DC+ bus **1320** and/or DC- bus **1322**).

Since voltage-applying circuitry/current injecting circuitry may provide a resistance relative to the ground/earth potential, then while voltage-applying circuitry/current injecting circuitry is operating, IMD/isometer **1300** might not be able to properly/accurately measure the insulation/insulation resistance between the one or more system power device(s) **107** and the ground/earth potential. This may cause a situation where part of the power system is not properly protected by the IMD/isometer **1300.**

For example, power system **180s** may have an IT (isolé-terre) earthing system/grounding system with only relatively high impedance connection(s) (e.g. about tens to hundreds of kilo-ohms) to the ground/earth potential, in order to insulate power system **180s** from the ground/earth potential. Providing a relatively high impedance connection to the ground/earth potential may lower the potential currents that may flow through the connection to the ground/earth potential, relative to potentially higher currents that would flow through the connection if the impedance of the connection was relatively lower (Ohm's law dictates an inverse relationship between impedance and current). This arrangement causes the power system to "float" above ground/earth potential. Such an arrangement allows ground faults where the power system is leaking current to a ground/earth potential via a relatively lower impedance to be detected by the IMD/isometer **1300.**

However, if the voltage-applying circuitry/current injecting circuitry presents itself as a relatively low impedance connection to the ground/earth potential, then the IMD/isometer **1300** may incorrectly identify this connection as a ground fault and operate accordingly, e.g. providing an alert and/or disconnecting the power source(s) **104** from the system power device(s) **107**, potentially causing a loss in the power produced by the power source(s) **104** that is provided to/utilized by the grid **109.**

One solution would be to operate the voltage-applying circuitry/current injecting circuitry and the IMD/isometer **1300** by having them operate in separate turns. However, such a solution presents other issues, for example, the synchronization of the switching between operating the voltage-applying circuitry/current injecting circuitry and the IMD/isometer **1300.**

In the present subject matter, the voltage-applying circuitry/current injecting circuitry may be configured to operate simultaneously with the IMD/isometer **1300**, since the voltage-applying circuitry/current injecting circuitry is configured to operate in a current control mode as current injecting circuitry **1302** while the IMD/isometer **1300** is operating. In the current control mode, the desired/target output current or range of output currents of the current injecting circuitry **1302** may be "locked" so that the output current remains relatively consistent (e.g. about 5 mA). On the other hand, in current control mode, the output voltage or range of output voltages of the current injecting circuitry **1302** may be allowed to fluctuate (e.g., within a particular range - about 80 - 100 volts).

For example, while in current control mode, the current injecting circuitry **1302** may be configured so that any sensed deviations to the actual output current from a desired output current are adjusted relatively quickly to maintain an actual output current that is about the desired output current.

In this case, while in current control mode, the current injecting circuitry **1302** may be configured so that any sensed deviations to the actual output voltage from the desired output voltage are adjusted relatively slowly, allowing the actual output voltage to drift within a particular range.

When operating voltage-applying circuitry/current injecting circuitry in current control mode, similar to a current source, the current injecting circuitry **1302** may be configured to maintain a relatively high impedance (e.g. about tens to hundreds of kilo-ohms [for example, greater than the particular threshold of the IMD/isometer **1300,** e.g., greater than about 50 kΩ or greater than about 100 kS2]) between a terminal (e.g., terminal **V-**) of the DC bus **1322** and the ground. By configuring current injecting circuitry **1302** to have/maintain a relatively high impedance, then injecting circuitry **1302** may be able to operate and inject current at a terminal (e.g., terminal **V-**) of the DC bus **1322** to prevent/counteract the effects of PID while not interfering with the operation of the IMD/isometer **1300** which is configured to measure insulation/insulation resistance of the power system at substantially the same time as the injecting.

This relatively high impedance may prevent a testing/measuring current from IMD/isometer **1300** from flowing via voltage-applying circuitry/current injecting circuitry **1302** to the earth/ground potential. Accordingly, the relatively high impedance may prevent a false determination by IMD/isometer **1300** that there is a ground fault.

In this case, operating voltage-applying circuitry/current injecting circuitry **1302** in current control mode, similar to a current source, allows voltage-applying circuitry/current injecting circuitry **1302** to operate simultaneously with IMD/isometer **1300.** Meaning, in this case, the current injecting circuitry **1302** may operate to protect the power system from PID while at the same time the IMD/isometer **1300** may operate to protect the system from actual ground faults. Accordingly, in the present subject matter there may be no need to cease measuring in order to inject current and vice versa.

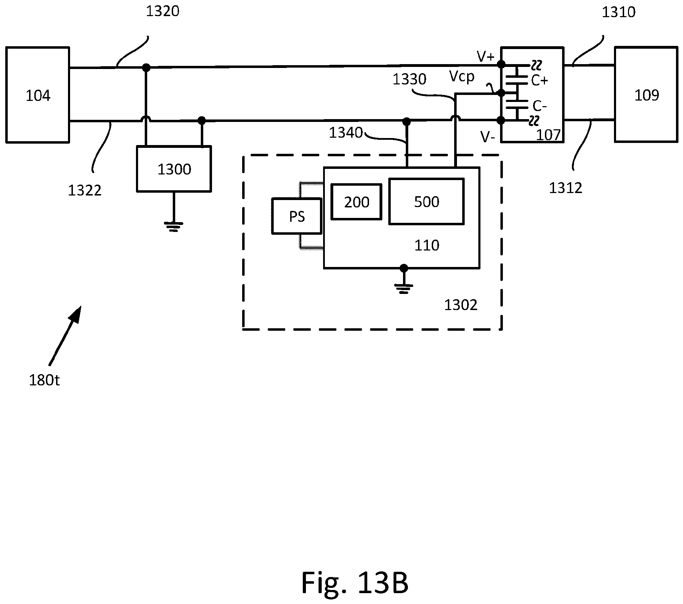

Reference is now made to Fig. **13B**, which shows a power system **180t**, according to illustrative aspects of the disclosure. Power system **180t** is similar to power system **180s**, except that power system **180t** includes at least one IMD/isometer **1300** connected in parallel between one or more power source(s) **104** and one or more system power device(s) **107.** IMD/isometer **1300** may be connected to a first terminal, e.g., terminal **V+** on the DC+ bus **1320** between power source(s) **104** and system power device(s) **107**, and to a second terminal, e.g., terminal **V-** on the DC- bus **1322** between power source(s) **104** and system power device(s) **107.** IMD/isometer **1300** is also connected to a ground/earth potential.

The IMD/isometer **1300** may be configured to measure the insulation/insulation resistance between one or more power source(s) **104** and a ground/earth potential. IMD/isometer **1300** may be configured to generate an alert (including a visual and/or audio indication, e.g., light and/or sound) and/or to disconnect the power source(s) **104** from the system power device(s) **107** when the insulation/insulation resistance between the power source(s) **104** and the ground/earth potential is within about a particular range or less than about a particular threshold (for example, about tens of kilo ohms or about hundreds of kilo-ohms, e.g. about 50 kΩ or about 100 kS2).

In the example of **Fig. 13B** in cases where the system power device(s) **107** are DC to AC inverter(s), then the IMD/isometer **1300** may be connected on the "DC side" of the inverter(s). In the example of **Fig. 13A****,** where the case is that the system power device(s) **107** are DC to AC inverter(s), then the IMD/isometer **1300** may be connected on the "AC side" of the inverter(s).

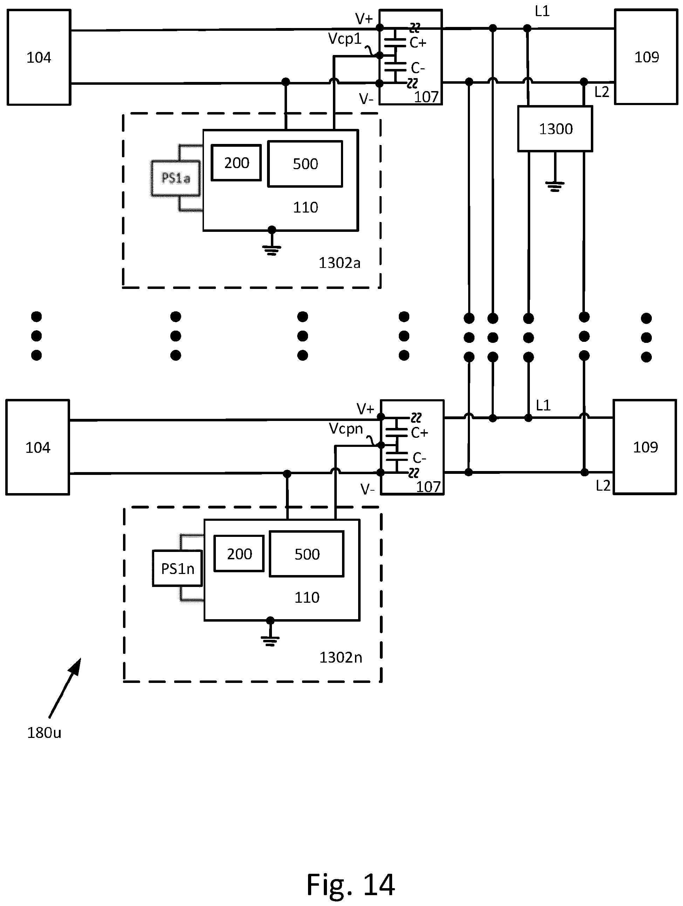

Reference is now made to **Fig. 14**, which shows a power system **180u**, according to illustrative aspects of the disclosure. Power system **180u** is similar to power system **180s**, except that power system **180u** illustrates multiple system power devices **107.** Each system power device **107** may be connected to at least one current injecting circuitry **1302**/converter **110** and at least one ISM/isometer **1300.** The multiple system power devices **107** may be connected to one another in parallel.

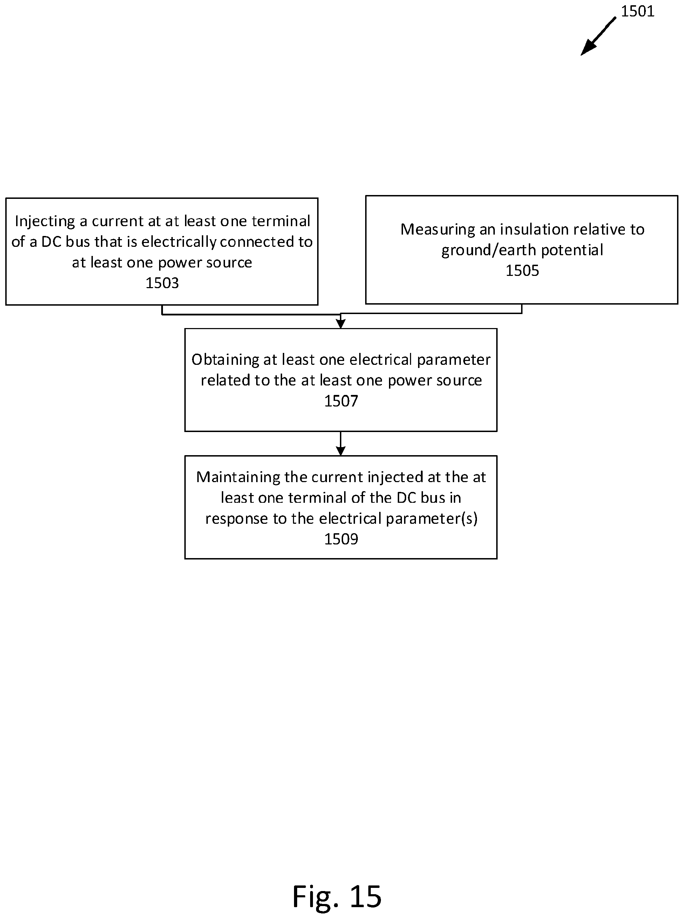

Reference is now made to **Fig. 15****,** which shows a flowchart of a method **1501** according to illustrative aspects of the disclosure. For example, method **1501** may be applied to one or more of power systems **180s, 180t, 180u** of **Figs. 13A - 14** in the description that follows. As an example, steps of method **1501** may be implemented by one or more control unit(s)/controller(s) **200** of system power devices **107** and/or converters **110.** For example, one or more of the control unit(s)/controller(s) **200** may be acting as a primary controller.

At step **1503**, a current may be injected at at least one terminal of a DC bus that is electrically connected to at least one power source.

For example, at step **1503**, a current may be injected by current injecting circuitry **1302**/converter **110** at terminal **V-** of the DC- bus that is electrically connected to at least one power source **104.** Current may be injected by current injecting circuitry **1302** while maintaining an impedance with a relatively high impedance value, e.g. the impedance of current injecting circuitry **1302** may be configured to be relatively high while current injecting circuitry **1302** is in a current control mode.

At step **1505**, an insulation/insulation resistance of the at least one power source and/or system power device relative to ground/earth potential may be measured. Step **1505** may occur simultaneously with step **1503.**

For example, at step **1505**, IMD/isometer **1300** may measure the insulation/insulation resistance of the at least one power source **104** relative to ground/earth potential and/or the insulation/insulation resistance of the at least one system power device(s) **107** relative to ground/earth potential. If the insulation/insulation resistance is below a particular threshold, then IMD/isometer **1300** may generate an alert or perform some other appropriate action (e.g., disconnecting the at least one power source **104** from the system power device(s) **107**). This measuring may occur simultaneously with current injecting circuitry **1302**/converter **110** injecting a current at terminal **V-** of the DC- bus. The relatively high impedance of current injecting circuitry **1302** while current injecting circuitry **1302** is in current control mode, may prevent IMD/isometer **1300** from measuring the impedance of current injecting circuitry **1302** and falsely identifying current injecting circuitry **1302** as a ground fault.

At step **1507**, at least one electrical parameter related to the at least one power source may be obtained.

For example, at step **1507**, at least one electrical parameter (e.g. current) related to the midpoint terminal **VCP** of at least one power device **107** electrically connected to the at least one power source **104** may be obtained.

As an example the at least one electrical parameter related to the at least one power source may be obtained by circuitry **500**/one or more control unit(s)/controller(s) **200**, e.g., with the help of one or more sensors.

At step **1509**, the current injected at the at least one terminal of the DC bus may be adjusted/maintained based on and/or in response to the electrical parameter.

For example, at step **1509**, circuitry **500**/one or more control unit(s)/controller(s) **200** may instruct/control current injecting circuitry **1302**/converter **110** to adjust (increase, decrease)/maintain the current that is injected at terminal **V-**, e.g. so that the current will remain within a particular threshold and operation of the current injecting circuitry **1302**/converter **110** will not interfere with the operation of IMD/isometer **1300.**

In some cases, a control parameter (for example, a control parameter related to a duty cycle of current injecting circuitry **1302**/converter **110)** may be controlled in order to adjust/maintain the current injected at the at least one terminal of the DC bus in response to the electrical parameter(s).

Current may be adjusted/maintained by current injecting circuitry **1302** while maintaining the impedance with a relatively high impedance value, e.g., the impedance of current injecting circuitry **1302** may be configured to be relatively high while current injecting circuitry **1302** is still in current control mode.

Accordingly, current injecting circuitry **1302**/converter **110** may be able to operate to prevent/alleviate/counteract the effects of PID simultaneously with the operation of IMD/isometer **1300** which is measuring/monitoring the insulation/insulation resistance between the one or more power source(s) **104** and a ground/earth potential and/or the insulation/insulation resistance between the one or more system power device(s) **107** and a ground/earth potential. Meaning, current injecting circuitry **1302**/converter **110** may operate to help mitigate the effects PID on the power system, without ceasing the operation of IMD/isometer **1300** which is measuring the insulation/insulation resistance of the at least one power source and/or system power device relative to ground/earth potential.

When compared to a system that operates voltage-applying circuitry/current injecting circuitry in turns with IMD/isometer **1300** (e.g. not at the same time), then the present subject matter may have the following advantages, for example:

A. The present subject matter does not require synchronization between voltage-applying circuitry/current injecting circuitry **1302** and IMD/isometer **1300**, in order to ensure that they are taking separate turns and that there is no interference in the operation of the IMD/isometer **1300** from the operation of the voltage-applying circuitry/current injecting circuitry **1302.**

B. The present subject matter allows for continuous monitoring of the system by IMD/isometer **1300**, and for continuous operation of voltage-applying circuitry/current injecting circuitry **1302** without having to take breaks in their operation in order to facilitate taking turns between the two.

C. The present subject matter may also enable the IMD/isometer **1300** to identify a loss of function or actual short to ground of the voltage-applying circuitry/current injecting circuitry **1302** as a ground fault, without the IMD/isometer **1300** identifying the voltage-applying circuitry/current injecting circuitry **1302** in normal operation as a ground fault falsely/incorrectly.

It should be understood that the steps in the flow charts of FIGS. 2B, 6A, 6B, 12, and 15 need not all be performed in the order specified and some steps may be omitted, changed in order, or performed simultaneously.

According to one aspect of the presently disclosed subject matter there is provided a method including:
determining a parameter related to a voltage value at a midpoint terminal of a system power device; and
adjusting a voltage applied to a second terminal of the system power device based on the parameter and a reference value, wherein the second terminal is different from the midpoint terminal.

In addition to the above features, the method according to this aspect of the presently disclosed subject matter can include one or more of features **(i)** to **(xxiii)** listed below, in any desired combination or permutation which is technically possible:
(i) wherein the midpoint terminal is one of a plurality of midpoint terminals of the system power device.
(ii) wherein the midpoint terminal is a terminal inside the system power device.
(iii) wherein the system power device is a direct current (DC) to alternating current (AC) converter comprising a plurality of capacitors connected in series between input terminals of the DC to AC converter; and
   the midpoint terminal is located between two of the plurality of capacitors.
(iv) wherein the second terminal is an input terminal of the system power device.
(v) wherein the input terminal is a negative voltage input terminal.
(vi) wherein the parameter is a voltage value.
(vii) wherein the parameter is a current value.
(viii) wherein the reference value is a voltage value.
(ix) determining a second parameter related to the voltage value at the midpoint terminal of the system power device; and
   adjusting the voltage applied to the second terminal of the system power device based on the second parameter.
(x) wherein the second parameter is a current value.
(xi) wherein the second parameter is a voltage value.
(xii) wherein the current value is related to a current in the converter.
(xiii) determining a third value based on the parameter and the second parameter, and comparing the third value to the reference value.
(xiv) decreasing the voltage applied to the second terminal of the system power device when the parameter is substantially greater than a value related to the reference value.
(xv) increasing the voltage applied to the second terminal of the system power device when the parameter is substantially less than a value related to the reference value.
(xvi) substantially maintaining the voltage applied to the second terminal of the system power device when the parameter is substantially equal to a value related to the reference value.
(xvii) determining a parameter related to a nighttime mode of operation; and
   applying the voltage to the second terminal of the system power device based on the parameter related to the nighttime mode of operation
(xviii) a sensor configured to determine a parameter related to a nighttime mode of operation; and
   the converter is configured to apply the voltage to the second terminal of the system power device based on the parameter related to the nighttime mode of operation.
(xix) wherein the voltage applied to the second terminal of the system power device in the nighttime mode of operation is greater than a voltage applied to the second terminal of the system power device in a daytime mode of operation.
(xx) switching between the nighttime mode of operation and the daytime mode of operation based on the parameter related to the nighttime mode of operation.
(xxi) wherein the parameter is at least one of: a time value, an irradiance value, a temperature value, a current value, a voltage value, and a power value.
(xxii) wherein the voltage applied in the nighttime mode is in a range of about **100** volts to about **1000** volts.
(xxiii) wherein the voltage applied in the daytime mode is in a range of about **10** volts to about **150** volts.

According to another aspect of the presently disclosed subject matter there is provided a device (e.g., an apparatus) including:
a sensor configured to determine a parameter related to a voltage value at a midpoint terminal of a system power device; and
a converter configured to adjust a voltage applied to a second terminal of the system power device based on the parameter and a reference value, wherein the second terminal is different from the midpoint terminal.

This aspect of the disclosed subject matter can optionally include one or more of features **(i)** to **(xxiii)** listed above, mutatis mutandis, in any desired combination or permutation which is technically possible

According to another aspect of the presently disclosed subject matter there is provided a system including:
a sensor configured to determine a parameter related to a voltage value at a midpoint terminal of a system power device; and
a converter configured to adjust a voltage applied to a second terminal of the system power device based on the parameter and a reference value, wherein the second terminal is different from the midpoint terminal.

This aspect of the disclosed subject matter can optionally include one or more of features **(i)** to **(xxiii)** listed above, mutatis mutandis, in any desired combination or permutation which is technically possible

According to another aspect of the presently disclosed subject matter there is provided a method including:
determining a parameter related to a nighttime mode of operation; and
applying a voltage to a terminal of a system power device based on the parameter related to the nighttime mode of operation.

According to another aspect of the presently disclosed subject matter there is provided a device including:
a converter configured to apply a voltage to a terminal of a system power device when the device is in a nighttime mode of operation;
a sensor configured to determine a parameter related to the nighttime mode of operation; and
a switch configured to switch between the nighttime mode of operation and a daytime mode of operation based on the parameter related to the nighttime mode of operation.

According to another aspect of the presently disclosed subject matter there is provided a system including:
a converter configured to apply a voltage to a terminal of a system power device when the system is in a nighttime mode of operation;
a sensor configured to determine a parameter related to the nighttime mode of operation; and
a switch configured to switch between the nighttime mode of operation and a daytime mode of operation based on the parameter related to the nighttime mode of operation.

According to another aspect of the presently disclosed subject matter there is provided a method including:
applying a first voltage on at least one first terminal of a first direct current (DC) bus electrically connected to at least one power source;
obtaining at least one indication that discharge of a second voltage related to the first voltage should be performed; and
discharging the second voltage by electrically connecting at least one second terminal of a second DC bus to a ground in response to the at least one indication.

In addition to the above features, the method according to this aspect of the presently disclosed subject matter can include one or more of features **(xxiv)** to **(xlvi)** listed below, in any desired combination or permutation which is technically possible:
(xxiv) wherein the second voltage is a voltage related to a parasitic capacitance.
(xxv) wherein the at least one power source is a photovoltaic (PV) module.
(xxvi) wherein the at least one power source is a plurality of PV modules.
(xxvii) wherein the plurality of PV modules are connected in series connection.
(xxviii)wherein the plurality of PV modules are connected in parallel connection.
(xxix) wherein the first voltage is a relatively high voltage applied in order to reverse effects of potential induced degradation (PID).
(xxx) wherein a value of the first voltage is about the same as a value of the second voltage.
(xxxi) stopping the applying of the first voltage based on the at least one indication that discharge of the second voltage should be performed.
(xxxii) wherein the at least one indication that discharge should be performed is an indication that a switch has been turned off.
(xxxiii)wherein the switch is a DC switch.
(xxxiv)wherein the switch is an alternating current (AC) switch.
(xxxv) wherein the at least one indication that discharge should be performed is an indication that a voltage applying circuitry applying the first voltage has been turned off.
(xxxvi)wherein the indication that the voltage applying circuitry has been turned off is based on one or more parameter, the one or more parameter being at least one of: a parameter indicating that the power source is producing power, and a parameter related to time.
(xxxvii) wherein the at least one indication that discharge should be performed is an indication that a cover of a housing of a voltage applying circuitry applying the first voltage has been removed.
(xxxviii) wherein the discharging is configured to happen in a relatively short time.
(xxxix)wherein the discharging includes electrically connecting a resistor between the second terminal and the ground.
(xl) wherein the discharging includes switching a switch.
(xli) wherein the second voltage is a voltage stored by a parasitic capacitance between the power source and the ground.
(xlii) wherein the first terminal is on a negative DC bus.
(xliii) wherein the second terminal is on a positive DC bus.
(xliv) wherein the second terminal is on a negative DC bus.
(xlv) wherein applying includes converting a third, relatively low, voltage from at least one external power source to the first voltage.
(xlvi) wherein the applying is begun based on one or more parameter, the one or more parameter being at least one of: a parameter indicating that the power source is not producing power and a parameter related to time.

According to another aspect of the presently disclosed subject matter there is provided a device (e.g., an apparatus) including:
a voltage applying circuitry configured to apply a first voltage on at least one first terminal of a first direct current (DC) bus electrically connected to at least one power source; and
at least one controller configured to obtain at least one indication that discharge of a second voltage related to the first voltage should be performed;
wherein the at least one controller is configured to generate at least one signal to discharge a second voltage by electrically connecting at least one second terminal of a second DC bus to a ground in response to the at least one indication.

This aspect of the disclosed subject matter can optionally include one or more of features **(xxiv)** to **(xlvi)** listed above, mutatis mutandis, as well as feature **(xlvii)** listed below, in any desired combination or permutation which is technically possible.
(xlvii) at least one sensor for sensing one or more parameter, the parameter being one or more of: an electrical parameter, a time parameter, and a motion parameter, wherein the at least one indication is generated based on one or more obtained parameter.

According to another aspect of the presently disclosed subject matter there is provided a method including:
injecting a current at at least one terminal of a direct current (DC) bus that is electrically connected to at least one power source;
simultaneous to injecting the current, measuring an insulation relative to ground; and
obtaining an electrical parameter related to the at least one power source; and
in response to the electrical parameter, maintaining the current injected at the at least one terminal of the DC bus without ceasing the measuring of the insulation relative to a ground.

In addition to the above features, the method according to this aspect of the presently disclosed subject matter can include one or more of features **(xlviii)** to **(lix)** listed below, in any desired combination or permutation which is technically possible:
(xlviii) wherein the at least one terminal is on a negative DC bus.
(xlix) wherein the electrical parameter related to the at least one power source is related to a current at a terminal of at least one power device electrically connected to the at least one power source.
(l) wherein the electrical parameter is related to the midpoint terminal of the at least one power device.
(li) wherein the at least one power device is a DC to alternating current (AC) inverter.
(lii) wherein the at least one power source is a photovoltaic (PV) module.
(liii) wherein the current is injected by at least one second power source.
(liv) wherein the at least one second power source is electrically connected to at least one second power device.
(lv) wherein the at least one second power device is a DC to DC converter.
(lvi) wherein the at least one second power source is different than the at least one first power source.
(lvii) wherein the injected current is to counter effects of potential induced degradation (PID) on the at least one first power source.
(lviii) wherein the injected current is within a range of currents.
(lix) maintaining a relatively high impedance between the at least one terminal of a DC bus and the ground.

According to another aspect of the presently disclosed subject matter there is provided a device including:
current injecting circuitry configured to inject a current at at least one terminal of a direct current (DC) bus that is electrically connected to at least one power source;
insulation measuring circuitry configured to measure an insulation relative to ground simultaneous to the current injecting circuitry injecting the current; and
wherein the current injecting circuitry is further configured to:
   obtain an electrical parameter related to the at least one power source; and
   in response to the electrical parameter, maintain the current injected at the at least one terminal of the DC bus without ceasing the measuring of the insulation relative to ground.

This aspect of the disclosed subject matter can optionally include one or more of features **(xlviii)** to **(lix)** listed above, mutatis mutandis, in any desired combination or permutation which is technically possible.

It may be noted that various connections are set forth between elements herein. These connections are described in general and, unless specified otherwise, may be direct or indirect; this specification may be not intended to be limiting in this respect. Further, elements of one feature may be combined with elements from other features in appropriate combinations or sub-combinations.

All optional and preferred features and modifications of the described features and dependent claims are usable in all aspects taught herein. Furthermore, the individual features of the dependent claims, as well as all optional and preferred features and modifications of the described features are combinable and interchangeable with one
another as limited by the scope of the appended claims.

## Claims

1. A method comprising:
applying, using voltage-applying circuitry (110, PSC3) electrically connected to a first terminal (V-) of a first direct current, DC, bus (906), a first voltage on the first terminal, the first voltage being relative to a reference potential, wherein the first DC bus is electrically connected to at least one power source (101), and wherein the voltage-applying circuitry includes a converter (110) and a power supply (PSC3);
**characterised by** obtaining at least one indication that discharge of an electrical potential of a second voltage related to the first voltage should be performed, the second voltage being relative to the reference potential; and
discharging the electrical potential of the second voltage, using discharge circuitry (902A) electrically connected to a second terminal (V+) of a second DC bus (904), by actuating a switch (S_dis1) of the discharge circuitry to electrically connect the second terminal to a ground potential in response to the at least one indication.

2. The method according to claim 1, wherein the second voltage is a voltage related to a parasitic capacitance (C_leak1).

3. The method according to claim 1 or claim 2, wherein the first voltage is a relatively high voltage applied in order to reverse effects of potential induced degradation, PID.

4. The method according to any one of the preceding claims, wherein a value of the first voltage is about the same as a value of the second voltage.

5. The method according to any one of the preceding claims, further comprising: stopping the applying of the first voltage based on the at least one indication that discharge of the second voltage should be performed.

6. The method according to any one of the preceding claims, wherein the at least one indication that discharge should be performed is: an indication that a different switch related to the at least one power source (101) has been turned off, an indication that the voltage-applying circuitry (110, PSC3) has been turned off, or an indication that a cover of a housing of the voltage-applying circuitry has been removed.

7. The method according to any one of the preceding claims, wherein the applying is begun based on one or more parameter, the one or more parameter being at least one of: a parameter indicating that the at least one power source (101) is not producing power and a parameter related to time.

8. The method according to any one of claim 1 to claim 7, wherein the discharge circuitry includes a resistor (R_dis1) arranged to be electrically connected between the second terminal and the ground potential when the switch of the discharge circuitry is actuated in response to the at least one signal to discharge.

9. A device comprising:
voltage-applying circuitry (110, PSC3) configured to apply a first voltage on a first terminal (V-) of a first direct current, DC, bus (906), the first voltage being relative to a reference potential, wherein the first DC bus is electrically connected to at least one power source (101), and wherein the voltage-applying circuitry includes a converter (110) and a power supply (PSC3);
**characterised by** discharge circuitry (902A) configured to be electrically connected to a second terminal (V+) of a second DC bus (904), wherein the discharge circuitry includes a switch (S_dis1) arranged between the second terminal and ground; and
at least one controller (1104) configured to obtain at least one indication that discharge of an electrical potential of a second voltage related to the first voltage should be performed, the second voltage being relative to the reference potential;
wherein the at least one controller is configured to actuate the switch (S_dis1) of the discharge circuitry to electrically connect the second terminal to a ground potential and discharge the electrical potential of the second voltage in response to the at least one indication.

10. The device according to claim 9, further comprising: at least one sensor (N) for sensing one or more parameters, the one or more parameters being one or more of: an electrical parameter, a time parameter, and a motion parameter, wherein the at least one indication is generated based on one or more obtained parameters.

11. The device according to claim 9 or claim 10, wherein the second voltage is a voltage related to a parasitic capacitance (C_leak1).

12. The device according to any one of claim 9 to claim 11, wherein the first voltage is a relatively high voltage applied in order to reverse effects of potential induced degradation, PID.

13. The device according to any one of claim 9 to claim 12, wherein the controller (1104) is configured to generate at least one signal to stop the applying of the first voltage based on the at least one indication that discharge of the second voltage should be performed.

14. The device according to any one of claim 9 to claim 13, wherein the at least one indication that discharge should be performed is one or more of: an indication that a different switch related to the at least one power source has been turned off, an indication that the voltage-applying circuitry (110, PSC3) has been turned off, and an indication that a cover of a housing of the voltage-applying circuitry has been removed.

15. The device according to any one of claim 9 to claim 14, wherein the discharge circuitry includes a resistor (R_dis1) arranged to be electrically connected between the second terminal and the ground potential when the switch of the discharge circuitry is actuated in response to the at least one indication to discharge.

## Patentansprüche

1. Verfahren, umfassend:
Anlegen, unter Verwendung einer spannungsanlegenden Schaltung (110, PSC3), die elektrisch mit einem ersten Anschluss (V-) eines ersten Gleichstrombusses (906) verbunden ist, einer ersten Spannung an den ersten Anschluss, wobei die erste Spannung relativ zu einem Referenzpotential ist, wobei der erste Gleichstrombus elektrisch mit mindestens einer Stromquelle (101) verbunden ist und wobei die spannungsanlegende Schaltung einen Wandler (110) und eine Stromversorgung (PSC3) einschließt;
**gekennzeichnet durch**
Erhalten mindestens einer Angabe, dass die Entladung eines elektrischen Potenzials einer zweiten Spannung, die mit der ersten Spannung in Beziehung steht, durchgeführt werden sollte, wobei die zweite Spannung relativ zu dem Referenzpotenzial ist; und
Entladen des elektrischen Potenzials der zweiten Spannung unter Verwendung einer Entladeschaltung (902A), die elektrisch mit einem zweiten Anschluss (V+) eines zweiten Gleichstrombusses (904) verbunden ist, und zwar durch Betätigen eines Schalters (S_dis1) der Entladeschaltung, um den zweiten Anschluss als Reaktion auf die mindestens eine Angabe elektrisch mit einem Massepotenzial zu verbinden.

2. Verfahren nach Anspruch 1, wobei die zweite Spannung eine Spannung ist, die mit einer parasitären Kapazität (C_leak1) in Zusammenhang steht.

3. Verfahren nach Anspruch 1 oder Anspruch 2, wobei die erste Spannung eine relativ hohe Spannung ist, die angelegt wird, um die Auswirkungen der potenzialinduzierten Degradation, PID, umzukehren.

4. Verfahren nach einem der vorstehenden Ansprüche, wobei ein Wert der ersten Spannung etwa gleich groß ist wie ein Wert der zweiten Spannung.

5. Verfahren nach einem der vorstehenden Ansprüche, ferner umfassend: Stoppen des Anlegens der ersten Spannung auf der Grundlage der mindestens einen Angabe, dass die Entladung der zweiten Spannung durchgeführt werden sollte.

6. Verfahren nach einem der vorstehenden Ansprüche, wobei die mindestens eine Angabe, dass eine Entladung durchgeführt werden sollte, Folgendes ist: eine Angabe, dass ein anderer Schalter, der mit der mindestens einen Stromquelle (101) in Zusammenhang steht, ausgeschaltet wurde, eine Angabe, dass die spannungsanlegende Schaltung (110, PSC3) ausgeschaltet wurde, oder eine Angabe, dass eine Abdeckung eines Gehäuses der spannungsanlegenden Schaltung entfernt wurde.

7. Verfahren nach einem der vorstehenden Ansprüche, wobei das Anwenden auf der Grundlage eines oder mehrerer Parameter begonnen wird, wobei der eine oder mehrere Parameter mindestens einer der Folgenden ist: ein Parameter, der angibt, dass die mindestens eine Stromquelle (101) keinen Strom erzeugt, und ein zeitbezogener Parameter.

8. Verfahren nach einem der Ansprüche 1 bis 7, wobei die Entladeschaltung einen Widerstand (R_dis1) einschließt, der angeordnet ist, um zwischen den zweiten Anschluss und das Massepotenzial elektrisch verbunden zu werden, wenn der Schalter der Entladeschaltung als Reaktion auf das mindestens eine Entladesignal betätigt wird.

9. Vorrichtung, umfassend:
eine spannungsanlegende Schaltung (110, PSC3), die konfiguriert ist, um eine erste Spannung an einen ersten Anschluss (V-) eines ersten Gleichstrombusses (906) anzulegen, wobei die erste Spannung relativ zu einem Referenzpotential ist, wobei der erste Gleichstrombus elektrisch mit mindestens einer Stromquelle (101) verbunden ist und wobei die spannungsanlegende Schaltung einen Wandler (110) und eine Stromversorgung (PSC3) einschließt;
**gekennzeichnet durch**
eine Entladeschaltung (902A), die konfiguriert ist, um mit einem zweiten Anschluss (V+) eines zweiten Gleichstrombusses (904) elektrisch verbunden zu werden, wobei die Entladeschaltung einen Schalter (S_dis1) einschließt, der zwischen dem zweiten Anschluss und Masse angeordnet ist; und
mindestens einen Controller (1104), der konfiguriert ist, um mindestens eine Angabe zu erhalten, dass die Entladung eines elektrischen Potenzials einer zweiten Spannung, die mit der ersten Spannung in Zusammenhang steht, durchgeführt werden soll, wobei die zweite Spannung relativ zum Referenzpotenzial ist;
wobei der mindestens eine Controller konfiguriert ist, den Schalter (S_dis1) der Entladeschaltung zu betätigen, um den zweiten Anschluss elektrisch mit einem Massepotenzial zu verbinden und das elektrische Potenzial der zweiten Spannung als Reaktion auf die mindestens eine Angabe zu entladen.

10. Vorrichtung nach Anspruch 9, ferner umfassend: mindestens einen Sensor (N) zum Erfassen eines oder mehrerer Parameter, wobei es sich bei dem einen oder den mehreren Parametern um einen oder mehrere der folgenden Parameter handelt: einen elektrischen Parameter, einen Zeitparameter und einen Bewegungsparameter, wobei die mindestens eine Angabe auf der Grundlage eines oder mehrerer erhaltener Parameter erzeugt wird.

11. Vorrichtung nach Anspruch 9 oder Anspruch 10, wobei die zweite Spannung eine Spannung ist, die mit einer parasitären Kapazität (C_leak1) in Zusammenhang steht.

12. Vorrichtung nach einem der Ansprüche 9 bis 11, wobei die erste Spannung eine relativ hohe Spannung ist, die angelegt wird, um die Auswirkungen der potenzialinduzierten Degradation, PID, umzukehren.

13. Vorrichtung nach einem der Ansprüche 9 bis 12, wobei der Controller (1104) konfiguriert ist, um mindestens ein Signal zu erzeugen, um das Anlegen der ersten Spannung auf der Grundlage der mindestens einen Angabe zu stoppen, dass die Entladung der zweiten Spannung durchgeführt werden sollte.

14. Vorrichtung nach einem der Ansprüche 9 bis 13, wobei die mindestens eine Angabe, dass eine Entladung durchgeführt werden sollte, eine oder mehrere der Folgenden ist: eine Angabe, dass ein anderer Schalter, der mit der mindestens einen Stromquelle in Zusammenhang steht, ausgeschaltet wurde, eine Angabe, dass die spannungsanlegende Schaltung (110, PSC3) ausgeschaltet wurde, und eine Angabe, dass eine Abdeckung eines Gehäuses der spannungsanlegenden Schaltung entfernt wurde.

15. Vorrichtung nach einem der Ansprüche 9 bis 14, wobei die Entladeschaltung einen Widerstand (R_dis1) einschließt, der angeordnet ist, um zwischen den zweiten Anschluss und das Massepotenzial elektrisch verbunden zu werden, wenn der Schalter der Entladeschaltung als Reaktion auf die mindestens eine Entladeangabe betätigt wird.

## Revendications

1. Procédé comprenant les étapes consistant à :
appliquer, à l'aide d'un circuit d'application de tension (110, PSC3) connecté électriquement à une première borne (V-) d'un premier bus à courant continu, CC (906), une première tension sur la première borne, la première tension étant relative à un potentiel de référence, le premier bus CC étant connecté électriquement à au moins une source d'alimentation (101), et le circuit d'application de tension comprenant un convertisseur (110) et une alimentation (PSC3) ;
**caractérisé par** l'obtention d'au moins une indication indiquant qu'une décharge d'un potentiel électrique d'une deuxième tension liée à la première tension doit être effectuée, la deuxième tension étant relative au potentiel de référence ; et l'étape consistant à :
décharger le potentiel électrique de la deuxième tension, à l'aide d'un circuit de décharge (902A) connecté électriquement à une deuxième borne (V+) d'un deuxième bus CC (904), en actionnant
un commutateur (S dis1) du circuit de décharge pour connecter électriquement le deuxième borne à un potentiel de terre en réponse à ladite au moins une indication.

2. Procédé selon la revendication 1, dans lequel la deuxième tension est une tension liée à une capacité parasite (C_leak1).

3. Procédé selon la revendication 1 ou la revendication 2, dans lequel la première tension est une tension relativement élevée appliquée afin d'inverser les effets de dégradation induite potentielle, PID.

4. Procédé selon l'une quelconque des revendications précédentes, dans lequel une valeur de la première tension est à peu près la même qu'une valeur de la deuxième tension.

5. Procédé selon l'une quelconque des revendications précédentes, comprenant en outre : l'arrêt de l'application de la première tension sur la base de l'au moins une indication selon laquelle la décharge de la deuxième tension doit être effectuée.

6. Procédé selon l'une quelconque des revendications précédentes, dans lequel l'au moins une indication selon laquelle la décharge doit être effectuée est : une indication selon laquelle un commutateur différent associé à l'au moins une source d'alimentation (101) a été désactivé, une indication que le circuit d'application de tension (110, PSC3) a été désactivé, ou une indication selon laquelle un couvercle d'un boîtier du circuit d'application de tension a été retiré.

7. Procédé selon l'une quelconque des revendications précédentes, dans lequel l'application est commencée sur la base d'un ou plusieurs paramètres, le ou les paramètres étant au moins l'un parmi : un paramètre indiquant que l'au moins une source d'alimentation (101) ne produit pas d'énergie et un paramètre lié au temps.

8. Procédé selon l'une quelconque des revendications 1 à 7, dans lequel le circuit de décharge comprend une résistance (R_dis1) agencée pour être connectée électriquement entre la deuxième borne et le potentiel de terre lorsque le commutateur du circuit de décharge est actionné en réponse à le au moins un signal à décharger.

9. Un dispositif comprenant :
un circuit d'application de tension (110, PSC3) configuré pour appliquer une première tension sur une première borne (V-) d'un premier bus à courant continu, CC (906), la première tension étant relative à un potentiel de référence, dans lequel le premier bus CC est connecté électriquement à au moins une source d'alimentation (101), et le circuit d'application de tension comprenant un convertisseur (110) et une alimentation (PSC3) ;
**caractérisé par**
un circuit de décharge (902A) configuré pour être connecté électriquement à une deuxième borne (V+) d'un deuxième bus CC (904), le circuit de décharge comprenant un commutateur (S_dis1) disposé entre la deuxième borne et la terre ; et
au moins un contrôleur (1104) configuré pour obtenir au moins une indication selon laquelle une décharge d'un potentiel électrique d'une deuxième tension liée à la première tension doit être effectuée, la deuxième tension étant relative au potentiel de référence ;
le ou les contrôleurs étant configurés pour actionner le commutateur (S_disl) du circuit de décharge afin de connecter électriquement la deuxième borne à un potentiel de terre et de décharger le potentiel électrique de la deuxième tension en réponse à la ou aux indications.

10. Dispositif selon la revendication 9, comprenant en outre : au moins un capteur (N) pour détecter un ou plusieurs paramètres, le ou les paramètres étant un ou plusieurs parmi : un paramètre électrique, un paramètre temporel et un paramètre de mouvement, la ou les indications étant générées sur la base d'un ou plusieurs paramètres obtenus.

11. Dispositif selon la revendication 9 ou la revendication 10, dans lequel la deuxième tension est une tension liée à une capacité parasite (C_leak1).

12. Dispositif selon l'une quelconque des revendications 9 à 11, dans lequel la première tension est une tension relativement élevée appliquée afin d'inverser les effets de dégradation induite potentielle, PID.

13. Dispositif selon l'une quelconque des revendications 9 à 12, dans lequel le contrôleur (1104) est configuré pour générer au moins un signal pour arrêter l'application de la première tension sur la base de l'au moins une indication de décharge de la deuxième tension doit être effectuée.

14. Dispositif selon l'une quelconque des revendications 9 à 13, dans lequel l'au moins une indication selon laquelle la décharge doit être effectuée est l'un ou plusieurs parmi : une indication selon laquelle un commutateur différent associé à l'au moins une source d'alimentation a été désactivé, une indication selon laquelle le circuit d'application de tension (110, PSC3) a été désactivé, et une indication selon laquelle un couvercle d'un boîtier du circuit d'application de tension a été retiré.

15. Dispositif selon l'une quelconque des revendications 9 à 14, dans lequel le circuit de décharge comprend une résistance (R _dis1) agencée pour être connectée électriquement entre la deuxième borne et le potentiel de terre lorsque le commutateur du circuit de décharge est actionné en réponse à l'au moins une indication de décharge.
